(19)

Europäisches
Patentamt
European
Patent Office
Office européen
des brevets

(11) **EP 2 930 873 B1**

(12) **EUROPEAN PATENT SPECIFICATION**

(45) Date of publication and mention
of the grant of the patent:
**24.04.2024  Bulletin 2024/17**

(21) Application number: **13869659.6**

(22) Date of filing: **08.03.2013**

(51) International Patent Classification (IPC):
*H04L 1/00* $^{(2006.01)}$   *H04L 25/02* $^{(2006.01)}$
*H04L 25/03* $^{(2006.01)}$   *H04B 7/0456* $^{(2017.01)}$
*H04B 7/06* $^{(2006.01)}$

(52) Cooperative Patent Classification (CPC):
**H04B 7/0626; H04B 7/0456; H04B 7/0617;
H04B 7/0619; H04B 7/0621; H04B 7/0639;
H04L 1/0026; H04L 25/0228; H04L 25/0246;
H04L 25/03343; H04L 25/03898;** H04L 25/0204

(86) International application number:
**PCT/CN2013/072369**

(87) International publication number:
**WO 2014/101350 (03.07.2014 Gazette 2014/27)**

(54) **METHOD FOR REPORTING CHANNEL STATE INFORMATION, USER EQUIPMENT AND BASE STATION**

VERFAHREN ZUR MELDUNG VON KANALSTATUSINFORMATIONEN, BENUTZERGERÄT UND BASISSTATION

PROCÉDÉ POUR RAPPORTER DES INFORMATIONS D'ÉTAT DE CANAL, ÉQUIPEMENT UTILISATEUR ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.12.2012  PCT/CN2012/088147**

(43) Date of publication of application:
**14.10.2015  Bulletin 2015/42**

(73) Proprietor: **Huawei Technologies Co., Ltd.
Longgang District
Shenzhen, Guangdong 518129 (CN)**

(72) Inventors:
• **Zhang, Leiming
Shenzhen
Guangdong 518129 (CN)**
• **Zhou, Yongxing
Shenzhen
Guangdong 518129 (CN)**
• **Liu, Jianghua
Shenzhen
Guangdong 518129 (CN)**
• **Wu, Qiang
Shenzhen
Guangdong 518129 (CN)**
• **Wang, Jianguo
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A2-2011/111975     CN-A- 102 045 762
CN-A- 102 291 212     CN-A- 102 804 662
US-A1- 2009 286 482     US-A1- 2012 314 590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present invention relates to the field of wireless communications, and in particular, to a channel state information CSI reporting method, a user equipment, and a base station.

**BACKGROUND**

By means of transmit precoding and combination of receive signals, a multiple input multiple output (Multiple Input Multiple Output, MIMO) system may achieve diversity and an array gain. A system using precoding may be expressed as:

$$\mathbf{y} = \mathbf{H}\,\hat{\mathbf{V}}\,\mathbf{s} + \mathbf{n}$$

where y is a received signal vector, H is a channel matrix, $\hat{V}$ is a precoding matrix, s is a transmitted symbol vector, and n is a measurement noise.

Optimal precoding usually requires that channel state information (Channel State Information, CSI) be fully known to a transmitter. A common method is that a user equipment (User Equipment, UE), mobile station (Mobile Station, MS), or relay (Relay), which are hereinafter referred to as a UE, quantizes and reports instantaneous CSI to a NodeB (NodeB), such as a base station (Base station, BS), an access point (Access Point), a transmission point (Transmission Point, TP), an evolved NodeB (Evolved NodeB, eNB) or a relay (Relay), which are hereinafter referred to as a base station. In the prior art, reported CSI information in a Long Term Evolution (Long Term Evolution, LTE) system includes a rank indicator (Rank Indicator, RI), a precoding matrix indicator (Precoding Matrix Indicator, PMI), a channel quality indicator (Channel Quality Indicator, CQI), and so on, where the RI indicates the number of transmission layers used and the PMI indicates a precoding matrix in use. Usually, a precoding matrix set in use is called a codebook, where each precoding matrix is a code word in the codebook. In the foregoing codebook used by an LTE system, the precoding matrix is $\mathbf{W} = v^{-\frac{1}{2}}\mathbf{V}$ , where v=RI and V has a constant modulus property which means that all elements have a same amplitude. The foregoing property enables every antenna port of a base station to transmit data after precoding, and transmit power of every antenna is constant.

Deploying low-power nodes (such as micro base stations or relay nodes) in a macrocell network is an effective approach to increase broad coverage and capacity gains by means of spatial reuse. At present, this type of heterogeneous network deployment has been widely discussed during the LTE standardization process. Compared with traditional macrocell homogeneous network deployments, in the foregoing heterogeneous network deployment, a macro base station may greatly interfere with a low-power node or a UE served by a micro base station. To reduce or avoid this type of interference, in the prior art, an almost blank subframe (Almost Blank Subframe, ABS) is used to reduce transmit power of an antenna of a macro base station, so as to reduce interference on low-power nodes or UEs in a coverage area of a micro base station. A low-power node or micro base station may enable UEs on cell edges to preferentially use an ABS subframe, in order to prevent the UEs from being interfered by a macro base station. Nevertheless, in the foregoing interference coordination solution, coordination between base stations and low-power nodes or micro base stations needs to be implemented according to interference conditions, and moreover, base stations are required to semi-persistently configure an ABS subframe by using high-layer signaling. This wastes time-frequency resources of base stations and further limits scheduling flexibility.

WO 2011/111975 A2 discloses a method and user equipment for transmitting precoding matrix information, and method and base station for configuring precoding matrix. A codebook used for selecting a precoding matrix is comprised of m subgroups each including n precoding matrices. A user equipment indicates a specific precoding matrix selected from the codebook by transmitting to a base station a first codebook index indicating one of the m subgroups and a second codebook index indicating one of n precoding matrices in a subgroup. The base station configures the specific precoding matrix from the codebook based on the first and second codebook indexes.

CN 102 804 662 A discloses that MS operations 600 may begin with the MS receiving pilot signals from each of the BS in the BS set serving the MS. The MS estimates the downlink channel between each of the BS in the BS set serving the MS and the MS using the received pilot. From the estimate of the downlink channel, the MS computes the single cell CSI feedback matrix $V_i$ for an i-th downlink channel between an i-th base station of the plurality of base stations and the mobile station and an approximate combining matrix W. In one embodiment, the MS determines the combining matrix W by computing $V(1:n)$, which is the first n significant singular vectors of the CoMP feedback matrix V (e.g.,

obtained after SVD of the CoMP channel). The MS further defines a block diagonal matrix

$$\begin{pmatrix} V_1(1:n_1) & & & \\ & V_2(1:n_2) & & \\ & & \ddots & \\ & & & V_K(1:n_K) \end{pmatrix}.$$

The combining matrix W is then defined as

$$W = \begin{pmatrix} W_1 \\ W_2 \\ \vdots \\ W_K \end{pmatrix} = \begin{pmatrix} V_1(1:n_1) & & & \\ & V_2(1:n_2) & & \\ & & \ddots & \\ & & & V_K(1:n_K) \end{pmatrix}^H V(1:n).$$

*K* is the number of base stations, and $V_i(1:n_i)$ denotes the first $n_i$ columns of $V_i$. Hence, *W* is a unitary matrix and can be represented by a codebook, as described below.

$$W_i = V_i^H(1:n_i)V(\sum_{k=1}^{i-1} N_{tk} : \sum_{k=1}^{i} N_{tk}, 1:n)$$

In this embodiment, each $W_i$ can be rewritten as

CN 102 291 212 A discloses a method for feeding back channel state information. In the method, a terminal device assumes that PDSCH, via CSI-RS ports, uses a precoding transmission mode based on a codebook, the terminal device, under such an assumption, determines channel state information to be fed back according to a measurement result of a downlink channel, and the terminal device sends the channel state information to the base station.

## SUMMARY

Embodiments of the present invention provide a channel state information CSI reporting method, a user equipment, and a base station to reduce the amount of scheduling resources wasted due to interference control by a base station. The invention is defined in the independent claims.

In the aspects of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

## BRIEF DESCRIPTION OF DRAWINGS

To describe the technical solutions in the aspects of the present invention more clearly, the following briefly introduces the accompanying drawings required for describing the aspects of the present invention. Apparently, the accompanying drawings in the following description show merely some aspects of the present invention, and a person of ordinary skill in the art may still derive other drawings from these accompanying drawings without creative efforts.

FIG. 1 illustrates a CSI reporting method according to an aspect of the present invention;
FIG. 2 illustrates a CSI reporting method according to another aspect of the present invention;
FIG. 3 illustrates a CSI reporting method according to another aspect of the present invention;
FIG. 4 illustrates a CSI reporting method according to another aspect of the present invention;
FIG. 5 is a block diagram of a user equipment according to an aspect of the present invention;
FIG. 6 is a block diagram of a base station according to an aspect of the present invention;
FIG. 7 is a block diagram of a user equipment according to another aspect of the present invention;
FIG. 8 is a block diagram of a base station according to another aspect of the present invention;
FIG. 9 is a block diagram of a user equipment according to another aspect of the present invention;
FIG. 10 is a block diagram of a base station according to another aspect of the present invention;
FIG. 11 is a block diagram of a user equipment according to another aspect of the present invention;

FIG. 12 is a block diagram of a base station according to another aspect of the present invention;
FIG. 13 illustrates a CSI reporting method according to an aspect of the present invention;
FIG. 14 illustrates a CSI reporting method according to an aspect of the present invention;
FIG. 15 is a block diagram of a user equipment according to an aspect of the present invention;
FIG. 16 is a block diagram of a base station according to an aspect of the present invention;
FIG. 17 is a block diagram of a user equipment according to another aspect of the present invention; and
FIG. 18 is a block diagram of a base station according to another aspect of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the present invention may be applied to various communications systems, such as: a Global System for Mobile Communications (GSM, Global System of Mobile Communications) system, a Code Division Multiple Access (CDMA, Code Division Multiple Access) system, a Wideband Code Division Multiple Access (WCDMA, Wideband Code Division Multiple Access) system, a general packet radio service (GPRS, General Packet Radio Service) system, a Long Term Evolution (LTE, Long Term Evolution) system, an Advanced Long Term Evolution (LTE-A, Advanced Long Term Evolution) system, and a Universal Mobile Telecommunications System (UMTS, Universal Mobile Telecommunications System).

It should also be understood that in the embodiments of the present invention, a user equipment (UE, User Equipment) includes but not limited to a mobile station (MS, Mobile Station), a mobile terminal (Mobile Terminal), a mobile telephone (Mobile Telephone), a handset (handset), a portable equipment (portable equipment), and the like. The user equipment may communicate with one or more core networks by using a radio access network (RAN, Radio Access Network). For example, the user equipment may be a mobile phone (or referred to as a "cellular" phone), or a computer having a wireless communication function; for example, the user equipment may also be a portable, pocket-sized, handheld, computer built-in, or vehicle-mounted mobile apparatus.

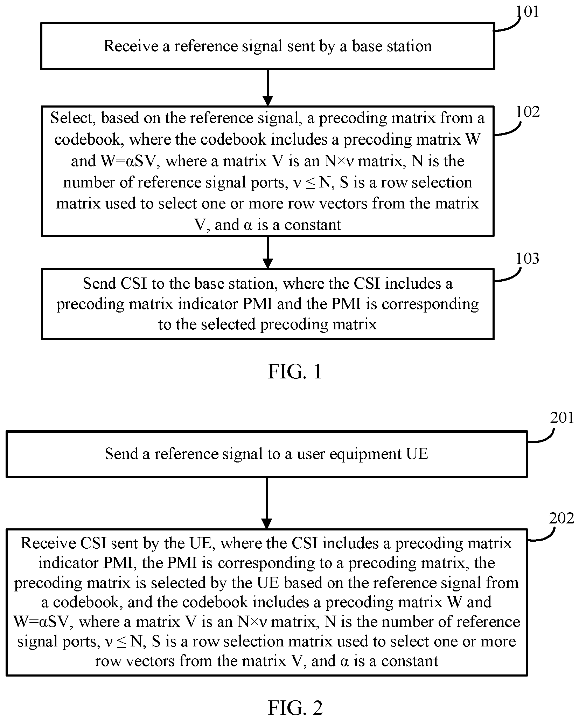

FIG. 1 is a CSI reporting method according to an embodiment of the present invention. The method is implemented by a UE, where the UE may be, for example, a user equipment (User Equipment, UE), mobile station (Mobile Station, MS), or relay (Relay), which are hereinafter referred to as UE).

101. Receive a reference signal sent by a base station.

102. Based on the reference signal, select a precoding matrix from a codebook, where the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

In this embodiment, the selected precoding matrix may be the precoding matrix W.

103. Send CSI to the base station, where the CSI includes a precoding matrix indicator PMI and the PMI is corresponding to the selected precoding matrix.

In this embodiment of the present invention, by means of codebook structure adjustment, a suitable precoding matrix may be selected according to an interference situation, so as to select an antenna for transmitting data and power of the antenna to reduce the amount of scheduling resources wasted due to interference control by a base station.

It should be noted that, this embodiment of the present invention does not limit the type of the reference signal in step 101. For example, it may be a channel state information reference signal, demodulation reference signal, or cell-specific reference signal. It should be further noted that, the UE may acquire, according to a notification (such as RRC signaling or downlink control information DCI) from the base station or based on a cell ID, a resource configuration of the reference signal and acquire the reference signal from the corresponding resource or subframe.

It should be understood that, an antenna port is corresponding to a reference signal port, and it may correspond to one physical antenna or antenna array element; it may also correspond to one virtual antenna, where the virtual antenna is a weighted combination of a physical antenna or an antenna array element.

Optionally, before step 102, the method may further include determining a rank indicator RI based on the reference signal, where the RI is corresponding to the number of useful transmission layers, and the method may also include:

acquiring, by the UE based on the reference signal, a channel estimation value;
based on the channel estimation value, acquiring, by the UE, a value of each allowed rank indicator RI, calculating a measurement value of each precoding matrix, such as a channel capacity or throughput; and selecting a rank indicator RI that yields an optimum of the measurement value as the determined rank indicator RI.

Optionally, before step 102, the method may further include, based on the reference signal, determining a rank indicator RI, where the rank indicator RI is corresponding to the number of useful transmission layers, and may include acquiring the RI, by the UE based on the number of reference signal ports and the only value of the allowed RI corresponding to a codebook subset restriction; the codebook subset restriction may be notified by the base station by using high-level signaling such as RRC signaling to the UE.

It should be noted that, this embodiment of the present invention does not limit the specific manner of performing step 102 in which a precoding matrix is selected from a codebook based on the reference signal. Optionally, according to the UE and a predefined criterion such as a criterion of channel capacity or throughput maximization or a criterion of chordal distance minimization, a precoding matrix is selected from the codebook.

Optionally, as another embodiment, selecting a precoding matrix from a codebook according to 102 may include: based on the reference signal, selecting a precoding matrix from a codebook subset, where the codebook subset may be a codebook subset that is predefined, or reported by the UE to the base station and then determined by the base station and notified to the UE, or determined and reported by the UE, for example, a codebook subset reported recently.

In step 102, the precoding matrix whose structure is W is a product of the matrix S and the matrix V, that is

$$\mathbf{W} = \alpha \cdot \mathbf{S}\mathbf{V} \qquad (1)$$

where $\alpha$ is a constant, $\mathbf{S}$ is a row selection matrix used to select one or more row vectors of the matrix V and has the element 1 or 0, $\mathbf{V}$ is an N×v matrix, and N is the number of reference signal ports. Further, the matrix $\mathbf{V}$ may satisfy

$$\mathbf{V}^{H}\mathbf{V} = v^{-1}\mathbf{I} \qquad (2)$$

specifically, a value of $\alpha$ may be

$$\alpha \in \left\{ \sqrt{\frac{N_T}{2}}, \sqrt{\frac{N_T}{3}}, ..., \sqrt{\frac{N_T}{N_T - 1}}, 1 \right\} \qquad (3)$$

According to the claimed invention, four antenna ports are used. When the rank indicator RI or the number of layers is 1, the precoding matrix whose structure is **W** may be

$$\mathbf{W} \in \left\{ \frac{1}{2}\begin{bmatrix} 1 \\ 0 \\ 0 \\ 0 \end{bmatrix}, \frac{1}{2}\begin{bmatrix} 0 \\ 1 \\ 0 \\ 0 \end{bmatrix}, \frac{1}{2}\begin{bmatrix} 0 \\ 0 \\ 1 \\ 0 \end{bmatrix}, \frac{1}{2}\begin{bmatrix} 0 \\ 0 \\ 0 \\ 1 \end{bmatrix} \right\} \qquad (4)$$

correspondingly:

$$\alpha = 1 \qquad (5)$$

$$\mathbf{V} = \frac{1}{2}\begin{bmatrix} 1 & 1 & 1 & 1 \end{bmatrix}^{T} \qquad (6)$$

$$\mathbf{S} \in \left\{ \begin{bmatrix} 1 & 0 & 0 & 0 \\ 0 & 0 & 0 & 0 \\ 0 & 0 & 0 & 0 \\ 0 & 0 & 0 & 0 \end{bmatrix}, \begin{bmatrix} 0 & 0 & 0 & 0 \\ 0 & 1 & 0 & 0 \\ 0 & 0 & 0 & 0 \\ 0 & 0 & 0 & 0 \end{bmatrix}, \begin{bmatrix} 0 & 0 & 0 & 0 \\ 0 & 0 & 0 & 0 \\ 0 & 0 & 1 & 0 \\ 0 & 0 & 0 & 0 \end{bmatrix}, \begin{bmatrix} 0 & 0 & 0 & 0 \\ 0 & 0 & 0 & 0 \\ 0 & 0 & 0 & 0 \\ 0 & 0 & 0 & 1 \end{bmatrix} \right\} \qquad (7)$$

where the matrix **S** in formula (7) is used to select the first, second, third, and fourth rows of the matrix **V**.

Four antenna ports are used. The precoding matrix whose structure is **W** may also be

$$\mathbf{W} \in \left\{ \frac{1}{2}\begin{bmatrix} 1 \\ 0 \\ e^{j\theta} \\ 0 \end{bmatrix}, \frac{1}{2}\begin{bmatrix} 0 \\ 1 \\ 0 \\ e^{j\theta} \end{bmatrix}, \frac{1}{2}\begin{bmatrix} 1 \\ 0 \\ -e^{j\theta} \\ 0 \end{bmatrix}, \frac{1}{2}\begin{bmatrix} 0 \\ 1 \\ 0 \\ -e^{j\theta} \end{bmatrix} \right\} \tag{8}$$

correspondingly:

$$\alpha = 1 \tag{9}$$

$$\mathbf{V} \in \left\{ \frac{1}{2}\begin{bmatrix} 1 & 1 & e^{j\theta} & e^{j\theta} \end{bmatrix}^T, \frac{1}{2}\begin{bmatrix} 1 & 1 & -e^{j\theta} & -e^{j\theta} \end{bmatrix}^T \right\} \tag{10}$$

$$\mathbf{S} \in \left\{ \begin{bmatrix} 1 & 0 & 0 & 0 \\ 0 & 0 & 0 & 0 \\ 0 & 0 & 1 & 0 \\ 0 & 0 & 0 & 0 \end{bmatrix}, \begin{bmatrix} 0 & 0 & 0 & 0 \\ 0 & 1 & 0 & 0 \\ 0 & 0 & 0 & 0 \\ 0 & 0 & 0 & 1 \end{bmatrix} \right\} \tag{11}$$

where the matrix **S** in formula (11) is used to select the first and third rows or second and fourth rows of the matrix **V**. A value of $\theta$ may be 0 to $2\pi$. Specifically, the value of $\theta$ may be, for example, 0, $\pm\frac{\pi}{2}, \pm\frac{\pi}{3}, \pm\frac{\pi}{6}, \pm\frac{\pi}{8}, \pm\frac{\pi}{16}, \pm\frac{\pi}{32}$.

Four antenna ports are used. When the rank indicator RI or the number of layers is 1, the precoding matrix whose structure is **W** may also be

$$\mathbf{W} \in \left\{ \frac{1}{2}\begin{bmatrix} 1 \\ 1 \\ 0 \\ 0 \end{bmatrix}, \frac{1}{2}\begin{bmatrix} 0 \\ 0 \\ 1 \\ 1 \end{bmatrix}, \frac{1}{2}\begin{bmatrix} 1 \\ -1 \\ 0 \\ 0 \end{bmatrix}, \frac{1}{2}\begin{bmatrix} 0 \\ 0 \\ 1 \\ -1 \end{bmatrix}, \frac{1}{2}\begin{bmatrix} 1 \\ j \\ 0 \\ 0 \end{bmatrix}, \frac{1}{2}\begin{bmatrix} 0 \\ 0 \\ 1 \\ j \end{bmatrix}, \frac{1}{2}\begin{bmatrix} 1 \\ -j \\ 0 \\ 0 \end{bmatrix}, \frac{1}{2}\begin{bmatrix} 0 \\ 0 \\ 1 \\ -j \end{bmatrix} \right\} \tag{12}$$

Four antenna ports are used. When the rank indicator RI or the number of layers is 2, the precoding matrix whose structure is **W** may be

$$\mathbf{W} \in \left\{ \frac{1}{\sqrt{8}}\begin{bmatrix} 1 & 1 \\ e^{j\theta} & -e^{j\theta} \\ 0 & 0 \\ 0 & 0 \end{bmatrix}, \frac{1}{\sqrt{8}}\begin{bmatrix} 0 & 0 \\ 0 & 0 \\ 1 & 1 \\ e^{j\theta} & -e^{j\theta} \end{bmatrix}, \frac{1}{\sqrt{8}}\begin{bmatrix} 1 & 1 \\ 0 & 0 \\ e^{j\theta} & -e^{j\theta} \\ 0 & 0 \end{bmatrix}, \frac{1}{\sqrt{8}}\begin{bmatrix} 1 & 1 \\ 0 & 0 \\ 0 & 0 \\ e^{j\theta} & -e^{j\theta} \end{bmatrix}, \frac{1}{\sqrt{8}}\begin{bmatrix} 0 & 0 \\ e^{j\theta} & -e^{j\theta} \\ 0 & 0 \end{bmatrix}, \frac{1}{\sqrt{8}}\begin{bmatrix} 0 & 0 \\ 1 & 1 \\ 0 & 0 \\ e^{j\theta} & -e^{j\theta} \end{bmatrix} \right\}$$

(13)

correspondingly,

$$\alpha = 1 \tag{14}$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\} \tag{15}$$

$$\mathbf{S} \in \left\{ \begin{bmatrix} 1 & 0 & 0 & 0 \\ 0 & 1 & 0 & 0 \\ 0 & 0 & 0 & 0 \\ 0 & 0 & 0 & 0 \end{bmatrix}, \begin{bmatrix} 0 & 0 & 0 & 0 \\ 0 & 1 & 0 & 0 \\ 0 & 0 & 1 & 0 \\ 0 & 0 & 0 & 0 \end{bmatrix}, \begin{bmatrix} 0 & 0 & 0 & 0 \\ 0 & 0 & 0 & 0 \\ 0 & 0 & 1 & 0 \\ 0 & 0 & 0 & 1 \end{bmatrix}, \begin{bmatrix} 1 & 0 & 0 & 0 \\ 0 & 0 & 0 & 0 \\ 0 & 0 & 0 & 0 \\ 0 & 0 & 0 & 1 \end{bmatrix} \right\} \tag{16}$$

where the matrix **S** in formula (15) is used to select the first and second rows, second and third rows, third and fourth rows, or first and fourth rows of the matrix **V**. The value of $\theta$ may be 0 to $2\pi$. Specifically, the value of $\theta$ may be, for example,

$$0, \pm\frac{\pi}{2}, \pm\frac{\pi}{3}, \pm\frac{\pi}{6}, \pm\frac{\pi}{8}, \pm\frac{\pi}{16}, \pm\frac{\pi}{32}.$$

Four antenna ports are used. When the rank indicator RI or the number of layers is 2, the precoding matrix whose structure is **W** may be

$$\mathbf{W} \in \left\{ \frac{1}{\sqrt{8}}\begin{bmatrix} 1 & 1 \\ 0 & 0 \\ 1 & -1 \\ 0 & 0 \end{bmatrix}, \frac{1}{\sqrt{8}}\begin{bmatrix} 1 & 1 \\ 0 & 0 \\ j & -j \\ 0 & 0 \end{bmatrix}, \frac{1}{\sqrt{8}}\begin{bmatrix} 0 & 0 \\ 1 & 1 \\ 0 & 0 \\ 1 & -1 \end{bmatrix}, \frac{1}{\sqrt{8}}\begin{bmatrix} 0 & 0 \\ 1 & 1 \\ 0 & 0 \\ j & -j \end{bmatrix}, \frac{1}{\sqrt{8}}\begin{bmatrix} 1 & 1 \\ 1 & -1 \\ 0 & 0 \\ 0 & 0 \end{bmatrix}, \frac{1}{\sqrt{8}}\begin{bmatrix} 1 & 1 \\ j & -j \\ 0 & 0 \\ 0 & 0 \end{bmatrix}, \frac{1}{\sqrt{8}}\begin{bmatrix} 0 & 0 \\ 0 & 0 \\ 1 & 1 \\ 1 & -1 \end{bmatrix}, \frac{1}{\sqrt{8}}\begin{bmatrix} 0 & 0 \\ 0 & 0 \\ 1 & 1 \\ j & -j \end{bmatrix} \right\} \tag{17}$$

Four antenna ports are used. When the rank indicator RI or the number of layers is 2, the precoding matrix whose structure is **W** may also be

$$\mathbf{W} \in \left\{ \frac{1}{2} \begin{bmatrix} 1 & 0 \\ e^{j\theta} & 0 \\ 0 & 1 \\ 0 & 0 \end{bmatrix}, \frac{1}{2} \begin{bmatrix} 1 & 0 \\ 0 & 0 \\ 0 & 1 \\ 0 & e^{j\theta} \end{bmatrix}, \frac{1}{2} \begin{bmatrix} 1 & 0 \\ 0 & 1 \\ e^{j\theta} & 0 \\ 0 & 0 \end{bmatrix}, \frac{1}{2} \begin{bmatrix} 1 & 0 \\ 0 & 1 \\ 0 & 0 \\ 0 & e^{j\theta} \end{bmatrix} \right\} \tag{18}$$

correspondingly:

$$\alpha = 1 \tag{19}$$

$$\mathbf{V} \in \left\{ \frac{1}{2} \begin{bmatrix} 1 & 0 \\ e^{j\theta} & 0 \\ 0 & 1 \\ 0 & e^{j\theta} \end{bmatrix}, \frac{1}{2} \begin{bmatrix} 1 & 0 \\ 0 & 1 \\ e^{j\theta} & 0 \\ 0 & e^{j\theta} \end{bmatrix} \right\} \tag{20}$$

$$\mathbf{S} \in \left\{ \begin{bmatrix} 1 & 0 & 0 & 0 \\ 0 & 1 & 0 & 0 \\ 0 & 0 & 1 & 0 \\ 0 & 0 & 0 & 0 \end{bmatrix}, \begin{bmatrix} 1 & 0 & 0 & 0 \\ 0 & 0 & 0 & 0 \\ 0 & 0 & 1 & 0 \\ 0 & 0 & 0 & 1 \end{bmatrix}, \begin{bmatrix} 1 & 0 & 0 & 0 \\ 0 & 1 & 0 & 0 \\ 0 & 0 & 0 & 0 \\ 0 & 0 & 0 & 1 \end{bmatrix} \right\} \tag{21}$$

where the matrix **S** in formula (19) is used to select the first and second rows, second and third rows, third and fourth rows, and first and fourth rows of matrix **V**. The value of $\theta$ may be 0 to $2\pi$. Specifically, the value of $\theta$ may be, for example,

$$0, \pm\frac{\pi}{2}, \pm\frac{\pi}{3}, \pm\frac{\pi}{6}, \pm\frac{\pi}{8}, \pm\frac{\pi}{16}, \pm\frac{\pi}{32}.$$

Four antenna ports are used. When the rank indicator RI or the number of layers is 2, the precoding matrix whose structure is **W** may also be

$$\mathbf{W} \in \left\{ \frac{1}{2} \begin{bmatrix} 1 & 0 \\ 0 & 1 \\ 0 & 0 \\ 0 & 0 \end{bmatrix}, \frac{1}{2} \begin{bmatrix} 1 & 0 \\ 0 & 0 \\ 0 & 1 \\ 0 & 0 \end{bmatrix}, \frac{1}{2} \begin{bmatrix} 1 & 0 \\ 0 & 0 \\ 0 & 0 \\ 0 & 1 \end{bmatrix}, \frac{1}{2} \begin{bmatrix} 0 & 0 \\ 1 & 0 \\ 0 & 1 \\ 0 & 0 \end{bmatrix}, \frac{1}{2} \begin{bmatrix} 0 & 0 \\ 1 & 0 \\ 0 & 0 \\ 0 & 1 \end{bmatrix}, \frac{1}{2} \begin{bmatrix} 0 & 0 \\ 0 & 0 \\ 1 & 0 \\ 0 & 1 \end{bmatrix} \right\} \tag{22}$$

Four antenna ports are used. When the rank indicator RI or the number of layers is 3, the precoding matrix whose structure is **W** may be

$$
\mathbf{W} \in \left\{ \frac{1}{\sqrt{6}} \begin{bmatrix} 1 & 1 & 0 \\ e^{j\theta} & -e^{j\theta} & 0 \\ 0 & 0 & 1 \\ 0 & 0 & 0 \end{bmatrix}, \frac{1}{\sqrt{6}} \begin{bmatrix} 1 & 1 & 0 \\ 1 & -e^{j\theta} & 0 \\ 0 & 0 & 0 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 0 \end{bmatrix}, \frac{1}{\sqrt{6}} \begin{bmatrix} 1 & 1 & 0 \\ 0 & 0 & 0 \\ e^{j\theta} & -e^{j\theta} & 0 \\ 0 & 0 & 1 \end{bmatrix}, \right.
$$
$$
\frac{1}{\sqrt{6}} \begin{bmatrix} 1 & 1 & 0 \\ 0 & 0 & 1 \\ 0 & 0 & 0 \\ e^{j\theta} & -e^{j\theta} & 0 \end{bmatrix}, \frac{1}{\sqrt{6}} \begin{bmatrix} 1 & 1 & 0 \\ 0 & 0 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 1 & 1 & 0 \\ e^{j\theta} & -e^{j\theta} & 0 \\ 0 & 0 & 0 \end{bmatrix}, \frac{1}{\sqrt{6}} \begin{bmatrix} 0 & 0 & 0 \\ 1 & 1 & 0 \\ e^{j\theta} & -e^{j\theta} & 0 \\ 0 & 0 & 1 \end{bmatrix},
$$
$$
\left. \frac{1}{\sqrt{6}} \begin{bmatrix} 0 & 0 & 1 \\ 1 & 1 & 0 \\ 0 & 0 & 0 \\ e^{j\theta} & -e^{j\theta} & 0 \end{bmatrix}, \frac{1}{\sqrt{6}} \begin{bmatrix} 0 & 0 & 0 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 0 \\ 1 & 1 & 0 \\ e^{j\theta} & -e^{j\theta} & 0 \end{bmatrix}, \frac{1}{\sqrt{6}} \begin{bmatrix} 0 & 0 & 0 \\ 0 & 0 & 1 \\ 1 & 1 & 0 \\ e^{j\theta} & -e^{j\theta} & 0 \end{bmatrix} \right\}
$$

$$(23)$$

correspondingly:

$$
\alpha = 1 \tag{24}
$$

$$
\mathbf{V} \in \left\{ \frac{1}{\sqrt{6}} \begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}} \begin{bmatrix} 1 & 1 & 0 \\ 0 & 0 & 1 \\ 0 & 0 & 1 \\ e^{j\theta} & -e^{j\theta} & 0 \end{bmatrix}, \right.
$$
$$
\left. \frac{1}{\sqrt{6}} \begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}} \begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 1 \\ 1 & 1 & 0 \\ e^{j\theta} & -e^{j\theta} & 0 \end{bmatrix} \right\}
$$

$$(25)$$

$$
\mathbf{S} \in \left\{ \begin{bmatrix} 1 & 0 & 0 & 0 \\ 0 & 1 & 0 & 0 \\ 0 & 0 & 1 & 0 \\ 0 & 0 & 0 & 0 \end{bmatrix}, \begin{bmatrix} 1 & 0 & 0 & 0 \\ 0 & 1 & 0 & 0 \\ 0 & 0 & 0 & 0 \\ 0 & 0 & 0 & 1 \end{bmatrix}, \begin{bmatrix} 1 & 0 & 0 & 0 \\ 0 & 0 & 0 & 0 \\ 0 & 0 & 1 & 0 \\ 0 & 0 & 0 & 1 \end{bmatrix}, \begin{bmatrix} 0 & 0 & 0 & 0 \\ 0 & 1 & 0 & 0 \\ 0 & 0 & 1 & 0 \\ 0 & 0 & 0 & 1 \end{bmatrix} \right\}
$$

$$(26)$$

where the matrix **S** in formula (23) is used to select the first, second, and third rows, first, second, and fourth rows, first, third, and fourth rows, and second, third, and fourth rows of the matrix **V**. The value of $\theta$ may be 0 to $2\pi$. Specifically, the value of $\theta$ may be, for example, $0, \pm\frac{\pi}{2}, \pm\frac{\pi}{3}, \pm\frac{\pi}{6}, \pm\frac{\pi}{8}, \pm\frac{\pi}{16}, \pm\frac{\pi}{32}$.

Four antenna ports are used. When the rank indicator RI or the number of layers is 3, the precoding matrix whose structure is **W** may also be

$$\mathbf{W} \in \left\{ \begin{array}{l} \frac{1}{\sqrt{3}}\begin{bmatrix} 1 & 0 & 0 \\ 0 & 1 & 0 \\ 0 & 0 & \frac{1}{\sqrt{2}} \\ 0 & 0 & 0 \end{bmatrix}, \frac{1}{\sqrt{3}}\begin{bmatrix} 1 & 0 & 0 \\ 0 & 1 & 0 \\ 0 & 0 & 0 \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & 0 \end{bmatrix}, \frac{1}{\sqrt{3}}\begin{bmatrix} 1 & 0 & 0 \\ 0 & 0 & 0 \\ 0 & 1 & 0 \\ 0 & 0 & \frac{1}{\sqrt{2}} \end{bmatrix}, \\ \frac{1}{\sqrt{3}}\begin{bmatrix} 0 & 0 & \frac{1}{\sqrt{2}} \\ 1 & 0 & 0 \\ 0 & 1 & 0 \\ 0 & 0 & 0 \end{bmatrix}, \frac{1}{\sqrt{3}}\begin{bmatrix} 0 & 0 & 0 \\ 1 & 0 & 0 \\ 0 & 1 & 0 \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 0 & 0 \\ 0 & 1 & 0 \end{bmatrix}, \frac{1}{\sqrt{3}}\begin{bmatrix} 1 & 0 & 0 \\ 0 & 0 & 0 \\ 0 & 0 & \frac{1}{\sqrt{2}} \\ 0 & 1 & 0 \end{bmatrix}, \\ \frac{1}{\sqrt{3}}\begin{bmatrix} 0 & 0 & \frac{1}{\sqrt{2}} \\ 1 & 0 & 0 \\ 0 & 0 & 0 \\ 0 & 1 & 0 \end{bmatrix}, \frac{1}{\sqrt{3}}\begin{bmatrix} 0 & 0 & 0 \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & 0 \\ 1 & 0 & 0 \\ 0 & 1 & 0 \end{bmatrix}, \frac{1}{\sqrt{3}}\begin{bmatrix} 0 & 0 & 0 \\ 0 & 0 & \frac{1}{\sqrt{2}} \\ 1 & 0 & 0 \\ 0 & 1 & 0 \end{bmatrix}, \end{array} \right\} \tag{27}$$

correspondingly:

$$\alpha = 1, \tag{28}$$

$$\mathbf{V} \in \left\{ \begin{array}{l} \frac{1}{\sqrt{3}}\begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}}\begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \\ \frac{1}{\sqrt{3}}\begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix}, \end{array} \right\} \tag{29}$$

$$\mathbf{S} \in \left\{ \begin{bmatrix} 1 & 0 & 0 & 0 \\ 0 & 1 & 0 & 0 \\ 0 & 0 & 1 & 0 \\ 0 & 0 & 0 & 0 \end{bmatrix}, \begin{bmatrix} 1 & 0 & 0 & 0 \\ 0 & 1 & 0 & 0 \\ 0 & 0 & 0 & 0 \\ 0 & 0 & 0 & 1 \end{bmatrix}, \begin{bmatrix} 1 & 0 & 0 & 0 \\ 0 & 0 & 0 & 0 \\ 0 & 0 & 1 & 0 \\ 0 & 0 & 0 & 1 \end{bmatrix}, \begin{bmatrix} 0 & 0 & 0 & 0 \\ 0 & 1 & 0 & 0 \\ 0 & 0 & 1 & 0 \\ 0 & 0 & 0 & 1 \end{bmatrix} \right\} \tag{30}$$

It should be further noted that, the values of $\alpha$ in the precoding matrices whose structures are **W** shown in formulas (4) to (27) may be changed to acquire other precoding matrices whose structures are **W**, which are not further listed herein.

Four antenna ports are used. The precoding matrix whose structure is **W** may also be

$$\mathbf{W} = \alpha \cdot \mathbf{SV} \tag{31}$$

where $\alpha$ is a constant, **S** is a row selection matrix, and a matrix V is a precoding matrix in a codebook corresponding to four antenna ports of an LTE R8 downlink system and a v-layer CSI report.

Four antenna ports are used as an example. In a rank-v codebook, the precoding matrix whose structure is **W** may also be

$$\mathbf{W} = \alpha \cdot \mathbf{SV} \tag{32}$$

where $\alpha$ is a constant, **S** is a row selection matrix, and a matrix V is a precoding matrix in a codebook corresponding to eight antenna ports of an LTE R10 downlink system and a v-layer CSI report.

It should be noted that, this embodiment of the present invention does not limit the specific form of CSI sent in step 103. For example, a precoding matrix indicator PMI and a rank indicator RI have different time domains or frequency domain granularities, or are acquired based on different subframe periods or subband sizes. Furthermore, a precoding matrix indicator PMI and a rank indicator RI may be sent by using a same subframe or may be sent by using different subframes. Furthermore, the CSI may include a channel quality indicator (Channel Quality Indicator/Index, abbreviated as CQI).

For example, the sending channel state information CSI to the base station may be: sending, by the UE, channel state information CSI through a Physical Uplink Control Channel (Physical Uplink Control Channel, PUCCH) or Physical Uplink Shared Channel (Physical Uplink Shared Channel, PUSCH) to the base station.

Optionally, as another embodiment, the codebook further includes a precoding matrix whose structure is **P**=βU, where a matrix U is an N×u matrix, N is the number of reference signal ports, u ≤ N, β is a constant, and a value of β enables the precoding matrix P and the precoding matrix W to satisfy $\|P\|_F = \|W\|_F$, where $\|\|_F$ is a matrix Frobenius norm (Frobenius). The precoding matrix **P** may be acquired by scaling a precoding matrix **U** in another codebook (here referred to as a second codebook), that is

$$\mathbf{P} = \beta \cdot \mathbf{U} \tag{33}$$

where $\beta$ is a constant, which is called a scale factor. When at least precoding matrix **P** and precoding matrix W exist, the value of β enables the precoding matrix P and the precoding matrix W to satisfy $\|P\|_F = \|W\|_F$, where $\|\|_F$ is a matrix Frobenius (Frobenius) norm. For example, in a matrix **A**, the matrix Frobenius norm is:

$$\|\mathbf{A}\|_F = \sqrt{\sum_{i=1}^{m_A} \sum_{j=1}^{n_A} |a_{ij}|^2} \tag{34}$$

where $a_{ij}$ is an element in column j and row i of the matrix **A**, and $m_A$ and $n_A$ are the number of rows in the matrix **A** and the number of columns in the matrix **A** respectively.

It is easy to understand that, the β that satisfies $\|P\|_F = \|W\|_F$ is

$$\beta = \|\mathbf{W}\|_F / \|\mathbf{U}\|_F \tag{35}$$

In this embodiment, the selected precoding matrix may be the precoding matrix P.

Further, the matrix **U** may satisfy the relationship:

$$\mathbf{U}^H \mathbf{U} = v^{-1} \mathbf{I} \tag{36}$$

Optionally, the precoding matrix P and the precoding matrix W are corresponding to a same value of v, and in this case, the precoding matrix P and the precoding matrix W have the same number of layers, that is, both belong to a rank-v codebook;

Optionally, the precoding matrix P and the precoding matrix W are corresponding to different values of v, and in this case, the precoding matrix P and the precoding matrix W have different numbers of layers, that is, the two do not belong to a codebook with a same number of layers. Four antenna ports are used as an example. The matrix **U** may be a precoding matrix in a codebook corresponding to four antenna ports of an LTE R8 downlink system and a v-layer CSI report.

According to the claimed invention, four antenna ports are used. The rank indicator RI is 2, and the precoding matrix P may be one of the following matrices:

$$\beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix}, \qquad (37)$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix},$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix}.$$

Four antenna ports are used. The rank indicator RI is 3, and the precoding matrix P may also be one of the following matrices:

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \quad (38)$$

Four antenna ports are used. The rank indicator RI is 3, and the precoding matrix P is one of the following matrices:

$$\beta \cdot \frac{1}{\sqrt{6}} \begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}} \begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}$$

$$\beta \cdot \frac{1}{\sqrt{6}} \begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}} \begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix} \quad (39)$$

Four antenna ports are used. The rank indicator RI is 4, and the precoding matrix P is one of the following matrices:

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix} \quad (40)$$

Four antenna ports are used. The rank indicator RI is 4, and the precoding matrix P is one of the following matrices:

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix},$$

$$\beta \cdot \frac{1}{\sqrt{8}} \begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -1 \end{bmatrix}, \text{ and } \beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \quad (41)$$

It should be noted that, in this embodiment of the present invention, the precoding matrix **W** or the precoding matrix **P** may be a precoding matrix after row or column replacement. For example, different antenna numbers correspondingly cause row replacement of a precoding matrix.

It should be understood that, this embodiment of the present invention does not limit the specific form of the codebook in step 102. For example, a rank-a codebook may include a precoding matrix whose structure is W, but does not include a precoding matrix whose structure is P, where a is a positive integer; a rank-b codebook may include a precoding matrix whose structure is P, but does not include a precoding matrix whose structure is W, where b is a positive integer; and a rank-a codebook may also include a precoding matrix whose structure is W and a precoding matrix whose structure is P. It should be noted that, a rank-a codebook may be a precoding matrix set of precoding matrices formed by a column vectors.

With reference to FIG. 1, a CSI reporting method according to an embodiment of the present invention is described above from the perspective of a UE. With reference to FIG. 2, the following describes a CSI reporting method according to an embodiment of the present invention from the perspective of a base station.

FIG. 2 illustrates a CSI reporting method according to another embodiment of the present invention. The method according to FIG. 2 is implemented by a base station, which may be, for example, a NodeB (NodeB), an access point (Access Point), a transmission point (Transmission Point, TP), an evolved NodeB (Evolved NodeB, eNB), or a relay (Relay).

It should be understood that, illustration on the UE side in FIG. 1, including interaction between a UE and a base station, and related features and functions, is corresponding to illustration on the base station side in FIG. 2. For conciseness, details are not described herein again.

201. Send a reference signal to a user equipment UE.

202. Receive CSI sent by the UE, where the CSI includes a precoding matrix indicator PMI, the PMI is corresponding to a precoding matrix, the precoding matrix is selected by the UE based on the reference signal, and the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

In this embodiment of the present invention, by means of codebook structure adjustment, a suitable precoding matrix may be selected according to an interference situation, so as to select an antenna for transmitting data and power of the antenna to reduce the amount of scheduling resources wasted due to interference control by a base station.

Optionally, as an embodiment, the PMI in step 202 may be acquired by the UE based on the reference signal and an RI, where the RI is corresponding to the number of useful transmission layers, and the method may include:

acquiring, by the UE based on the reference signal, a channel estimation value;
based on the channel estimation value, acquiring, by the UE, a value of each allowed rank indicator RI, calculating a measurement value of each precoding matrix, such as a channel capacity or throughput; and selecting a rank indicator RI that yields an optimum of the measurement value as a determined rank indicator RI.

The RI may also be acquired by the UE based on the number of reference signal ports and the only value of the allowed RI corresponding to a codebook subset restriction; the codebook subset restriction may be notified by the base station by using high-level signaling such as RRC signaling to the UE.

Optionally, as an embodiment, the codebook further includes a precoding matrix P and P=$\beta$U, where a matrix U is an N×u matrix, u $\leq$ N, $\beta$ is a constant, a value of $\beta$ enables P and W to satisfy $\|P\|_F=\|W\|_F$, and $\|\|_F$ is a matrix Frobenius norm.

Optionally, as another embodiment, the v is not equal to the u.

Optionally, as another embodiment, the codebook may include one or more matrices described in formula (1) to formula (41).

Optionally, as another embodiment, the number of reference signal ports is 4, and the matrix V and/or matrix U are/is a precoding matrix in a codebook corresponding to four antenna ports of a Long Term Evolution LTE R8 downlink system.

Optionally, as another embodiment, the number of reference signal ports is 4, and the matrix V is a precoding matrix in a codebook corresponding to eight antenna ports of an LTE R10 downlink system.

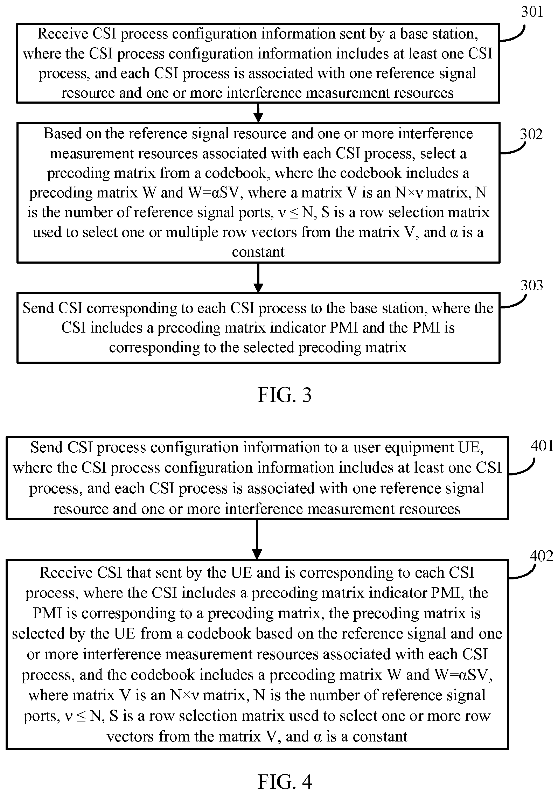

FIG. 3 illustrates a CSI reporting method according to another embodiment of the present invention. The method according to FIG. 3 may be implemented by a UE, where the UE may be, for example, a User Equipment (User Equipment, UE), Mobile Station (Mobile Station, MS), or Relay (Relay), which are hereinafter referred to as UE.

301. Receive CSI process configuration information sent by a base station, where the CSI process configuration information includes at least one CSI process, and each CSI process is associated with one reference signal resource and one or more interference measurement resources.

302. Based on the reference signal resource and interference measurement resources associated with each CSI process, select a precoding matrix from a codebook, where the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

303. Send CSI corresponding to each CSI process to the base station, where the CSI includes a precoding matrix indicator PMI and the PMI is corresponding to the selected precoding matrix.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput.

Optionally, as an embodiment, the codebook further includes a precoding matrix P and P=$\beta$U, where a matrix U is an N×u matrix, u $\leq$ N, $\beta$ is a constant, a value of $\beta$ enables P and W to satisfy $\|P\|_F=\|W\|_F$, and $\|\|_F$ is a matrix Frobenius norm.

According to the claimed invention, a first CSI process among the at least one CSI process is corresponding to a first codebook, a second CSI process among the at least one CSI process is corresponding to a second codebook, a precoding matrix in the first codebook is the precoding matrix W, and a precoding matrix in the second codebook is the precoding matrix P.

The number of reference signal ports associated with the first CSI process is 4, and the precoding matrix W in the first codebook is at least one of the following matrices:

$$\frac{1}{2}\begin{bmatrix}1\\1\\0\\0\end{bmatrix}, \ \frac{1}{2}\begin{bmatrix}0\\0\\1\\1\end{bmatrix}, \ \frac{1}{2}\begin{bmatrix}1\\-1\\0\\0\end{bmatrix}, \ \frac{1}{2}\begin{bmatrix}0\\0\\1\\-1\end{bmatrix}, \ \frac{1}{2}\begin{bmatrix}1\\j\\0\\0\end{bmatrix}, \ \frac{1}{2}\begin{bmatrix}0\\0\\1\\j\end{bmatrix}, \ \frac{1}{2}\begin{bmatrix}1\\-j\\0\\0\end{bmatrix}, \text{ and } \frac{1}{2}\begin{bmatrix}0\\0\\1\\-j\end{bmatrix}.$$

Further, an RI corresponding to the first CSI process may be restricted to 1;

The number of reference signal ports associated with the second CSI process is 4, and the precoding matrix P in the second codebook is at least one of the following matrices:

$$\beta\cdot\frac{1}{2}\begin{bmatrix}1 & 0\\1 & 0\\0 & 1\\0 & 1\end{bmatrix}, \ \beta\cdot\frac{1}{2}\begin{bmatrix}1 & 0\\1 & 0\\0 & 1\\0 & -1\end{bmatrix}, \ \beta\cdot\frac{1}{2}\begin{bmatrix}1 & 0\\1 & 0\\0 & 1\\0 & j\end{bmatrix}, \ \beta\cdot\frac{1}{2}\begin{bmatrix}1 & 0\\1 & 0\\0 & 1\\0 & -j\end{bmatrix},$$

$$\beta\cdot\frac{1}{2}\begin{bmatrix}1 & 0\\-1 & 0\\0 & 1\\0 & 1\end{bmatrix}, \ \beta\cdot\frac{1}{2}\begin{bmatrix}1 & 0\\-1 & 0\\0 & 1\\0 & -1\end{bmatrix}, \ \beta\cdot\frac{1}{2}\begin{bmatrix}1 & 0\\-1 & 0\\0 & 1\\0 & j\end{bmatrix}, \ \beta\cdot\frac{1}{2}\begin{bmatrix}1 & 0\\-1 & 0\\0 & 1\\0 & -j\end{bmatrix},$$

$$\beta\cdot\frac{1}{2}\begin{bmatrix}1 & 0\\j & 0\\0 & 1\\0 & 1\end{bmatrix}, \ \beta\cdot\frac{1}{2}\begin{bmatrix}1 & 0\\j & 0\\0 & 1\\0 & -1\end{bmatrix}, \ \beta\cdot\frac{1}{2}\begin{bmatrix}1 & 0\\j & 0\\0 & 1\\0 & j\end{bmatrix}, \ \beta\cdot\frac{1}{2}\begin{bmatrix}1 & 0\\j & 0\\0 & 1\\0 & -j\end{bmatrix},$$

$$\beta\cdot\frac{1}{2}\begin{bmatrix}1 & 0\\-j & 0\\0 & 1\\0 & 1\end{bmatrix}, \ \beta\cdot\frac{1}{2}\begin{bmatrix}1 & 0\\-j & 0\\0 & 1\\0 & -1\end{bmatrix}, \ \beta\cdot\frac{1}{2}\begin{bmatrix}1 & 0\\-j & 0\\0 & 1\\0 & j\end{bmatrix}, \text{ and } \beta\cdot\frac{1}{2}\begin{bmatrix}1 & 0\\-j & 0\\0 & 1\\0 & -j\end{bmatrix}.$$

Further, an RI corresponding to the second CSI process may be restricted to 2;

The first codebook includes one or more matrices described in formula (1) to formula (41).

The second codebook includes one or more matrices described in formula (1) to formula (41).

FIG. 4 illustrates a CSI reporting method according to another embodiment of the present invention. The method according to FIG. 4 is implemented by a base station, which may be, for example, a NodeB (NodeB), an access point (Access Point), a transmission point (Transmission Point, TP), an evolved NodeB (Evolved NodeB, eNB), or a relay (Relay).

It should be understood that, illustration on the UE side in FIG. 3, including interaction between a UE and a base station, and related features and functions, is corresponding to illustration on the base station side in FIG. 4. For conciseness, details are not described herein again.

401. Send CSI process configuration information to a user equipment UE, where the CSI process configuration information includes at least one CSI process, and each CSI process is associated with one reference signal resource and one or more interference measurement resources.

402. Receive CSI that is sent by the UE and is corresponding to each CSI process, where the CSI includes a precoding matrix indicator PMI, the PMI is corresponding to a precoding matrix, the precoding matrix is selected by the UE from a codebook based on the reference signal and interference measurement resources associated with each CSI process, and the codebook includes a precoding matrix W and W=αSV, where a matrix V is an N×v matrix, N is the number of reference signal ports, v ≤ N, S is a row selection matrix used to select one or more row vectors from the matrix V, and α is a constant.

After the base station receives the PMI, it acquires a precoding matrix corresponding to the PMI according to the PMI.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput. Optionally, as an embodiment, the codebook further includes a precoding matrix P and P=βU, where a matrix U is an N×u matrix, u ≤ N, β is a constant, a value of β enables P and W to satisfy $\|P\|_F=\|W\|_F$, and $\|\|_F$ is a matrix Frobenius norm.

Optionally, as another embodiment, a first CSI process among the at least one CSI process is corresponding to a first codebook, a second CSI process among the at least one CSI process is corresponding to a second codebook, a precoding matrix in the first codebook is the precoding matrix W, and a precoding matrix in the second codebook is the precoding matrix P.

Optionally, as an embodiment, the number of reference signal ports associated with the first CSI process is 4, and the precoding matrix W in the first codebook is at least one of the following matrices:

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix}, \text{ and } \frac{1}{2}\begin{bmatrix}0\\0\\1\\-j\end{bmatrix}.$$

Further, an RI corresponding to the first CSI process may be restricted to 1;

The number of reference signal ports associated with the second CSI process is 4, and the precoding matrix P in the second codebook is at least one of the following matrices:

$$\beta\cdot\frac{1}{2}\begin{bmatrix}1&0\\1&0\\0&1\\0&1\end{bmatrix}, \beta\cdot\frac{1}{2}\begin{bmatrix}1&0\\1&0\\0&1\\0&-1\end{bmatrix}, \beta\cdot\frac{1}{2}\begin{bmatrix}1&0\\1&0\\0&1\\0&j\end{bmatrix}, \beta\cdot\frac{1}{2}\begin{bmatrix}1&0\\1&0\\0&1\\0&-j\end{bmatrix},$$

$$\beta\cdot\frac{1}{2}\begin{bmatrix}1&0\\-1&0\\0&1\\0&1\end{bmatrix}, \beta\cdot\frac{1}{2}\begin{bmatrix}1&0\\-1&0\\0&1\\0&-1\end{bmatrix}, \beta\cdot\frac{1}{2}\begin{bmatrix}1&0\\-1&0\\0&1\\0&j\end{bmatrix}, \beta\cdot\frac{1}{2}\begin{bmatrix}1&0\\-1&0\\0&1\\0&-j\end{bmatrix},$$

$$\beta\cdot\frac{1}{2}\begin{bmatrix}1&0\\j&0\\0&1\\0&1\end{bmatrix}, \beta\cdot\frac{1}{2}\begin{bmatrix}1&0\\j&0\\0&1\\0&-1\end{bmatrix}, \beta\cdot\frac{1}{2}\begin{bmatrix}1&0\\j&0\\0&1\\0&j\end{bmatrix}, \beta\cdot\frac{1}{2}\begin{bmatrix}1&0\\j&0\\0&1\\0&-j\end{bmatrix},$$

$$\beta \cdot \frac{1}{2}\begin{bmatrix} 1 & 0 \\ -j & 0 \\ 0 & 1 \\ 0 & 1 \end{bmatrix}, \quad \beta \cdot \frac{1}{2}\begin{bmatrix} 1 & 0 \\ -j & 0 \\ 0 & 1 \\ 0 & -1 \end{bmatrix}, \quad \beta \cdot \frac{1}{2}\begin{bmatrix} 1 & 0 \\ -j & 0 \\ 0 & 1 \\ 0 & j \end{bmatrix}, \text{ and } \quad \beta \cdot \frac{1}{2}\begin{bmatrix} 1 & 0 \\ -j & 0 \\ 0 & 1 \\ 0 & -j \end{bmatrix}.$$

Further, an RI corresponding to the second CSI process may be restricted to 2;

Optionally, as another embodiment, the first codebook may include one or more matrices described in formula (1) to formula (41).

Optionally, as another embodiment, the second codebook may include one or more matrices described in formula (1) to formula (41).

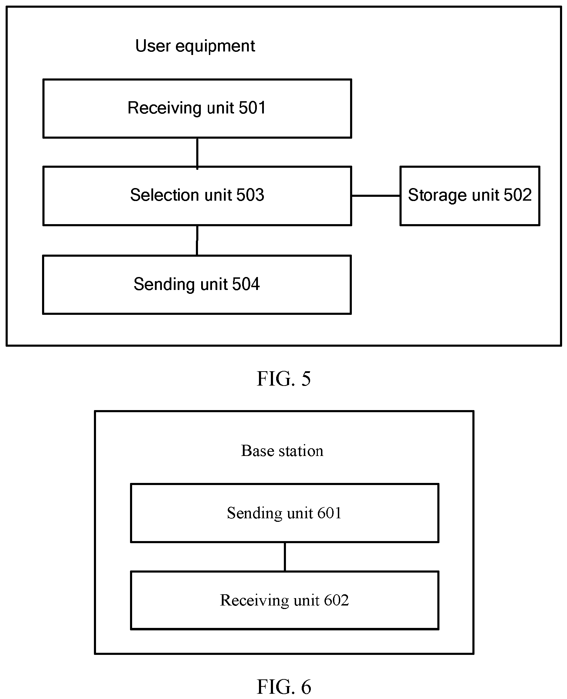

With reference to FIG. 1 to FIG. 4, the foregoing describes in detail a CSI reporting method according to the embodiments of the present invention. With reference to FIG. 5 to FIG. 12, the following describes a user equipment and a base station according to the embodiments of the present invention.

FIG. 5 is a block diagram of a user equipment according to an embodiment of the present invention. According to the method in FIG. 5, the user equipment includes a receiving unit 501, a storage unit 502, a selection unit 503, and a sending unit 504.

The receiving unit 501 is configured to receive a reference signal sent by a base station.

The storage unit 502 is configured to store a codebook.

The selection unit 503 is configured to: based on the reference signal, select a precoding matrix from the codebook stored in the storage unit 502, where the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

The sending unit 504 is configured to send CSI to the base station, where the CSI includes a precoding matrix indicator PMI and the PMI is corresponding to the selected precoding matrix.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, as an embodiment, the codebook stored in the storage unit 502 further includes a precoding matrix P and P=$\beta$U, where a matrix U is an N×u matrix, u $\leq$ N, $\beta$ is a constant, a value of $\beta$ enables P and W to satisfy $\|P\|_F = \|W\|_F$, and $\|\|_F$ is a matrix Frobenius norm.

Optionally, as another embodiment, the codebook stored in the storage unit 502 may include one or more matrices described in formula (1) to formula (41).

Optionally, as another embodiment, the v is not equal to the u.

Optionally, as another embodiment, the number of reference signal ports is 4, and the matrix V and/or matrix U are/is a precoding matrix in a codebook corresponding to four antenna ports of a Long Term Evolution LTE R8 downlink system.

Optionally, as another embodiment, the number of reference signal ports is 4, and the matrix V is a precoding matrix in a codebook corresponding to eight antenna ports of an LTE R10 downlink system.

FIG. 6 is a block diagram of a base station according to an embodiment of the present invention. The base station in FIG. 6 includes a sending unit 601 and receiving unit 602.

The sending unit 601 is configured to send a reference signal to a user equipment UE.

The receiving unit 602 is configured to receive CSI sent by the UE, where the CSI includes a precoding matrix indicator PMI, the PMI is corresponding to a precoding matrix, the precoding matrix is selected by the UE based on the reference signal, the codebook includes a precoding matrix W, and W=$\alpha$SV, where a matrix V is an N×v matrix, N is the number of reference signal ports, v $\leq$ N, S is a row selection matrix used to select one or more row vectors from the matrix V, and $\alpha$ is a constant.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the base station may include a storage unit, configured to store the codebook.

The base station may further include an obtaining unit, configured to obtain, after receiving the PMI, a precoding matrix corresponding to the PMI from the codebook stored in the storage unit according to the PMI.

Optionally, as an embodiment, the codebook may further include a precoding matrix P and P=$\beta$U, where a matrix U is an N×u matrix, u $\leq$ N, $\beta$ is a constant, a value of $\beta$ enables P and W to satisfy $\|P\|_F = \|W\|_F$, and $\|\|_F$ is a matrix Frobenius norm.

Optionally, as another embodiment, the codebook may include one or more matrices described in formula (1) to formula (41).

Optionally, as another embodiment, the v is not equal to the u.

Optionally, as another embodiment, the number of reference signal ports is 4, and the matrix V and/or matrix U are/is a precoding matrix in a codebook corresponding to four antenna ports of a Long Term Evolution LTE R8 downlink system.

Optionally, as another embodiment, the number of reference signal ports is 4, and the matrix V is a precoding matrix in a codebook corresponding to eight antenna ports of an LTE R10 downlink system.

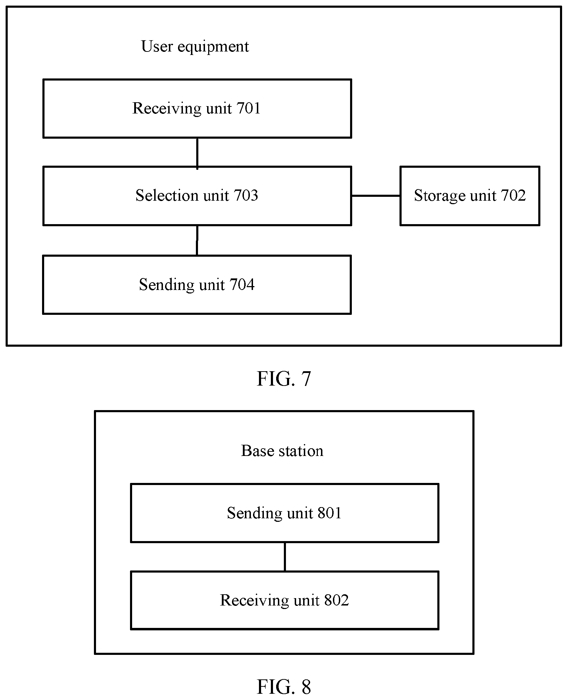

FIG. 7 is a block diagram of a user equipment according to another embodiment of the present invention. In FIG. 7, the user equipment includes a receiving unit 701, a storage unit 702, a selection unit 703, and a sending unit 704.

The receiving unit 701 is configured to receive CSI process configuration information sent by a base station, where the CSI process configuration information includes at least one CSI process, and each CSI process is associated with one reference signal resource and one or more interference measurement resources.

The storage unit 702 is configured to store a codebook.

The selection unit 703 is configured to select, based on the reference signal resource and interference measurement resources associated with each CSI process, a precoding matrix from the codebook stored in the storage unit 702, where the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

The sending unit 704 is configured to send CSI corresponding to each CSI process to the base station, where the CSI includes a precoding matrix indicator PMI and the PMI is corresponding to the selected precoding matrix.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput. Optionally, as an embodiment, the codebook stored in the storage unit 702 further includes a precoding matrix P and P=$\beta$U, where a matrix U is an N×u matrix, u $\leq$ N, $\beta$ is a constant, a value of $\beta$ enables P and W to satisfy $\|P\|_F=\|W\|_F$, and $\|\|_F$ is a matrix Frobenius norm.

Optionally, as another embodiment, a first CSI process among the at least one CSI process is corresponding to a first codebook stored in the storage unit 702, a second CSI process among the at least one CSI process is corresponding to a second codebook stored in the storage unit 702, a precoding matrix in the first codebook is the precoding matrix W, and a precoding matrix in the second codebook is the precoding matrix P.

Optionally, as another embodiment, the number of reference signal ports associated with the first CSI process is 4, and the precoding matrix W in the first codebook stored in the storage unit 702 is at least one of the following matrices:

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix}, \text{and } \frac{1}{2}\begin{bmatrix}0\\0\\1\\-j\end{bmatrix}.$$

Further, an RI corresponding to the first CSI process may be restricted to 1.

The number of reference signal ports associated with the second CSI process is 4, and the precoding matrix P in the second codebook stored in the storage unit 702 is at least one of the following matrices:

$$\beta\cdot\frac{1}{2}\begin{bmatrix}1&0\\1&0\\0&1\\0&1\end{bmatrix}, \beta\cdot\frac{1}{2}\begin{bmatrix}1&0\\1&0\\0&1\\0&-1\end{bmatrix}, \beta\cdot\frac{1}{2}\begin{bmatrix}1&0\\1&0\\0&1\\0&j\end{bmatrix}, \beta\cdot\frac{1}{2}\begin{bmatrix}1&0\\1&0\\0&1\\0&-j\end{bmatrix},$$

$$\beta \cdot \frac{1}{2} \begin{bmatrix} 1 & 0 \\ -1 & 0 \\ 0 & 1 \\ 0 & 1 \end{bmatrix}, \quad \beta \cdot \frac{1}{2} \begin{bmatrix} 1 & 0 \\ -1 & 0 \\ 0 & 1 \\ 0 & -1 \end{bmatrix}, \quad \beta \cdot \frac{1}{2} \begin{bmatrix} 1 & 0 \\ -1 & 0 \\ 0 & 1 \\ 0 & j \end{bmatrix}, \quad \beta \cdot \frac{1}{2} \begin{bmatrix} 1 & 0 \\ -1 & 0 \\ 0 & 1 \\ 0 & -j \end{bmatrix},$$

$$\beta \cdot \frac{1}{2} \begin{bmatrix} 1 & 0 \\ j & 0 \\ 0 & 1 \\ 0 & 1 \end{bmatrix}, \quad \beta \cdot \frac{1}{2} \begin{bmatrix} 1 & 0 \\ j & 0 \\ 0 & 1 \\ 0 & -1 \end{bmatrix}, \quad \beta \cdot \frac{1}{2} \begin{bmatrix} 1 & 0 \\ j & 0 \\ 0 & 1 \\ 0 & j \end{bmatrix}, \quad \beta \cdot \frac{1}{2} \begin{bmatrix} 1 & 0 \\ j & 0 \\ 0 & 1 \\ 0 & -j \end{bmatrix},$$

$$\beta \cdot \frac{1}{2} \begin{bmatrix} 1 & 0 \\ -j & 0 \\ 0 & 1 \\ 0 & 1 \end{bmatrix}, \quad \beta \cdot \frac{1}{2} \begin{bmatrix} 1 & 0 \\ -j & 0 \\ 0 & 1 \\ 0 & -1 \end{bmatrix}, \quad \beta \cdot \frac{1}{2} \begin{bmatrix} 1 & 0 \\ -j & 0 \\ 0 & 1 \\ 0 & j \end{bmatrix}, \text{ and } \quad \beta \cdot \frac{1}{2} \begin{bmatrix} 1 & 0 \\ -j & 0 \\ 0 & 1 \\ 0 & -j \end{bmatrix}.$$

Further, an RI corresponding to the second CSI process may be restricted to 2.

Optionally, as another embodiment, the first codebook may include one or more matrices described in formula (1) to formula (41).

Optionally, as another embodiment, the second codebook may include one or more matrices described in formula (1) to formula (41).

FIG. 8 is a block diagram of a base station according to another embodiment of the present invention. The base station in FIG. 8 includes a sending unit 801 and a receiving unit 802.

The sending unit 801 is configured to send CSI process configuration information to a user equipment UE, where the CSI process configuration information includes at least one CSI process, and each CSI process is associated with one reference signal resource and one or more interference measurement resources.

The receiving unit 802 is configured to receive CSI that is sent by the UE and is corresponding to each CSI process, where the CSI includes a precoding matrix indicator PMI, the PMI is corresponding to a precoding matrix, the precoding matrix is selected by the UE from a codebook based on the reference signal and interference measurement resources associated with each CSI process, and the codebook includes a precoding matrix W and $W = \alpha SV$, where a matrix V is an $N \times v$ matrix, N is the number of reference signal ports, $v \le N$, S is a row selection matrix used to select one or more row vectors from the matrix V, and $\alpha$ is a constant.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput. Optionally, as an embodiment, the codebook further includes a precoding matrix P and $P = \beta U$, where a matrix U is an $N \times u$ matrix, $u \le N$, $\beta$ is a constant, a value of $\beta$ enables P and W to satisfy $\|P\|_F = \|W\|_F$, and $\|\|_F$ is a matrix Frobenius norm.

Optionally, as another embodiment, a first CSI process among the at least one CSI process is corresponding to a first codebook, a second CSI process among the at least one CSI process is corresponding to a second codebook, a precoding matrix in the first codebook is the precoding matrix W, and a precoding matrix in the second codebook is the precoding matrix P.

Optionally, as another embodiment, the number of reference signal ports associated with the first CSI process is 4, and the precoding matrix W in the first codebook is at least one of the following matrices:

$$\frac{1}{2}\begin{bmatrix} 1 \\ 1 \\ 0 \\ 0 \end{bmatrix}, \quad \frac{1}{2}\begin{bmatrix} 0 \\ 0 \\ 1 \\ 1 \end{bmatrix}, \quad \frac{1}{2}\begin{bmatrix} 1 \\ -1 \\ 0 \\ 0 \end{bmatrix}, \quad \frac{1}{2}\begin{bmatrix} 0 \\ 0 \\ 1 \\ -1 \end{bmatrix}, \quad \frac{1}{2}\begin{bmatrix} 1 \\ j \\ 0 \\ 0 \end{bmatrix}, \quad \frac{1}{2}\begin{bmatrix} 0 \\ 0 \\ 1 \\ j \end{bmatrix}, \quad \frac{1}{2}\begin{bmatrix} 1 \\ -j \\ 0 \\ 0 \end{bmatrix}, \text{ and } \frac{1}{2}\begin{bmatrix} 0 \\ 0 \\ 1 \\ -j \end{bmatrix}.$$

Further, an RI corresponding to the first CSI process may be restricted to 1.

The number of reference signal ports associated with the second CSI process is 4, and the precoding matrix P in the second codebook is at least one of the following matrices:

$$\beta \cdot \frac{1}{2}\begin{bmatrix} 1 & 0 \\ 1 & 0 \\ 0 & 1 \\ 0 & 1 \end{bmatrix}, \quad \beta \cdot \frac{1}{2}\begin{bmatrix} 1 & 0 \\ 1 & 0 \\ 0 & 1 \\ 0 & -1 \end{bmatrix}, \quad \beta \cdot \frac{1}{2}\begin{bmatrix} 1 & 0 \\ 1 & 0 \\ 0 & 1 \\ 0 & j \end{bmatrix}, \quad \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2}\begin{bmatrix} 1 & 0 \\ -1 & 0 \\ 0 & 1 \\ 0 & 1 \end{bmatrix}, \quad \beta \cdot \frac{1}{2}\begin{bmatrix} 1 & 0 \\ -1 & 0 \\ 0 & 1 \\ 0 & -1 \end{bmatrix}, \quad \beta \cdot \frac{1}{2}\begin{bmatrix} 1 & 0 \\ -1 & 0 \\ 0 & 1 \\ 0 & j \end{bmatrix}, \quad \beta \cdot \frac{1}{2}\begin{bmatrix} 1 & 0 \\ -1 & 0 \\ 0 & 1 \\ 0 & -j \end{bmatrix},$$

$$\beta \cdot \frac{1}{2}\begin{bmatrix} 1 & 0 \\ j & 0 \\ 0 & 1 \\ 0 & 1 \end{bmatrix}, \quad \beta \cdot \frac{1}{2}\begin{bmatrix} 1 & 0 \\ j & 0 \\ 0 & 1 \\ 0 & -1 \end{bmatrix}, \quad \beta \cdot \frac{1}{2}\begin{bmatrix} 1 & 0 \\ j & 0 \\ 0 & 1 \\ 0 & j \end{bmatrix}, \quad \beta \cdot \frac{1}{2}\begin{bmatrix} 1 & 0 \\ j & 0 \\ 0 & 1 \\ 0 & -j \end{bmatrix},$$

$$\beta \cdot \frac{1}{2}\begin{bmatrix} 1 & 0 \\ -j & 0 \\ 0 & 1 \\ 0 & 1 \end{bmatrix}, \quad \beta \cdot \frac{1}{2}\begin{bmatrix} 1 & 0 \\ -j & 0 \\ 0 & 1 \\ 0 & -1 \end{bmatrix}, \quad \beta \cdot \frac{1}{2}\begin{bmatrix} 1 & 0 \\ -j & 0 \\ 0 & 1 \\ 0 & j \end{bmatrix}, \text{ and } \beta \cdot \frac{1}{2}\begin{bmatrix} 1 & 0 \\ -j & 0 \\ 0 & 1 \\ 0 & -j \end{bmatrix}.$$

Further, an RI corresponding to the second CSI process may be restricted to 2.

Optionally, as another embodiment, the first codebook may include one or more matrices described in formula (1) to formula (41).

Optionally, as another embodiment, the second codebook may include one or more matrices described in formula (1) to formula (41).

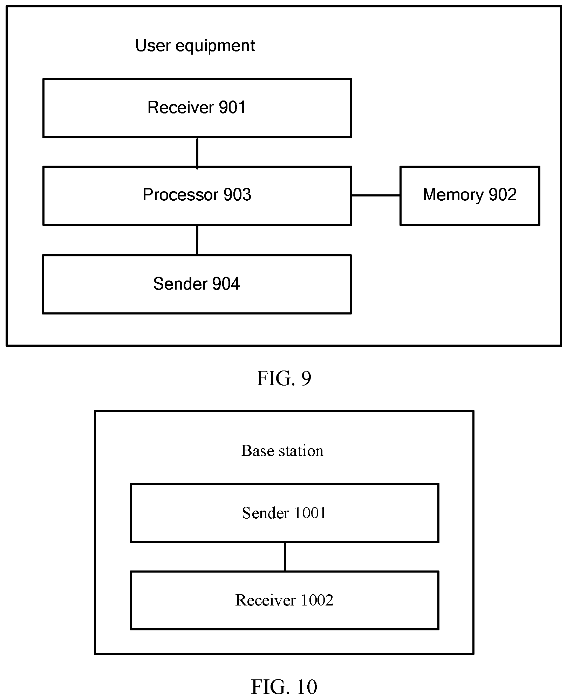

FIG. 9 is a block diagram of a user equipment according to an embodiment of the present invention. The user equipment in FIG. 9 includes a receiver 901, a memory 902, a processor 903, and a sender 904.

The receiver 901 is configured to receive a reference signal sent by a base station.

The memory 902 is configured to store a codebook.

The processor 903 is configured to: based on the reference signal, select a precoding matrix from the codebook stored in the memory 902, where the codebook includes a precoding matrix W and $W=\alpha SV$, where a matrix V is an $N \times v$ matrix, N is the number of reference signal ports, $v \leq N$, S is a row selection matrix used to select one or more row vectors from the matrix V, and $\alpha$ is a constant.

The sender 904 is configured to send CSI to the base station, where the CSI includes a precoding matrix indicator PMI and the PMI is corresponding to the selected precoding matrix.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, as an embodiment, the codebook stored in the memory 902 may further include a precoding matrix P and P=$\beta$U, where a matrix U is an N$\times$u matrix, u $\leq$ N, $\beta$ is a constant, a value of $\beta$ enables P and W to satisfy $\|P\|_F=\|W\|_F$, and $\|\|_F$ is a matrix Frobenius norm.

Optionally, as another embodiment, the codebook stored in the memory 902 may include one or more matrices described in formula (1) to formula (41).

Optionally, as another embodiment, the v is not equal to the u.

Optionally, as another embodiment, the number of reference signal ports is 4, and the matrix V and/or matrix U are/is a precoding matrix in a codebook corresponding to four antenna ports of a Long Term Evolution LTE R8 downlink system.

Optionally, as another embodiment, the number of reference signal ports is 4, and the matrix V is a precoding matrix in a codebook corresponding to eight antenna ports of an LTE R10 downlink system.

FIG. 10 is a block diagram of a base station according to an embodiment of the present invention. The base station in FIG. 10 includes a sender 1001 and a receiver 1002.

The sender 1001 is configured to send a reference signal to a user equipment UE.

The receiver 1002 is configured to receive CSI sent by the UE, where the CSI includes a precoding matrix indicator PMI, the PMI is corresponding to a precoding matrix, the precoding matrix is selected by the UE based on the reference signal, the codebook includes a precoding matrix W, and W=$\alpha$SV, where a matrix V is an N$\times$v matrix, N is the number of reference signal ports, v $\leq$ N, S is a row selection matrix used to select one or more row vectors from the matrix V, and $\alpha$ is a constant.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the base station may include a memory, configured to store the codebook.

The processor may be further configured to obtain, after receiving the PMI, a precoding matrix corresponding to the PMI from the codebook stored in the memory according to the PMI. Optionally, as an embodiment, the codebook may further include a precoding matrix P and P=$\beta$U, where a matrix U is an N$\times$u matrix, u $\leq$ N, $\beta$ is a constant, a value of $\beta$ enables P and W to satisfy $\|P\|_F=\|W\|_F$, and $\|\|_F$ is a matrix Frobenius norm.

Optionally, as another embodiment, the codebook may include one or more matrices described in formula (1) to formula (41).

Optionally, as another embodiment, the v is not equal to the u.

Optionally, as another embodiment, the number of reference signal ports is 4, and the matrix V and/or matrix U are/is a precoding matrix in a codebook corresponding to four antenna ports of a Long Term Evolution LTE R8 downlink system.

Optionally, as another embodiment, the number of reference signal ports is 4, and the matrix V is a precoding matrix in a codebook corresponding to eight antenna ports of an LTE R10 downlink system.

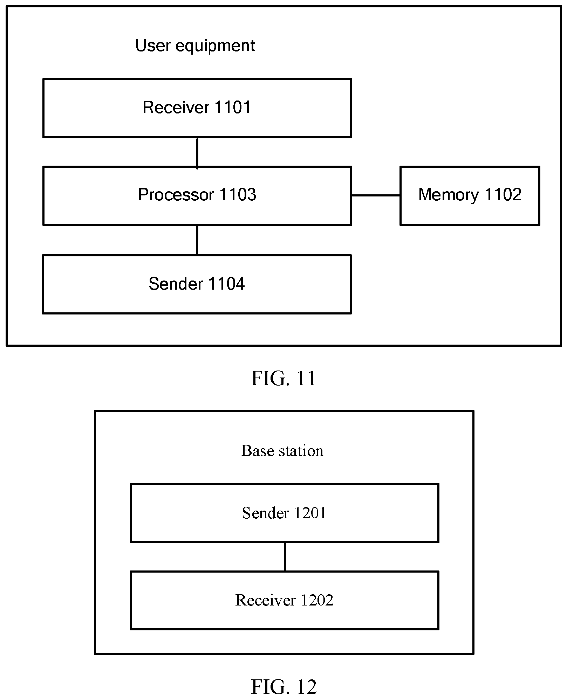

FIG. 11 is a block diagram of a user equipment according to another embodiment of the present invention. The user equipment in FIG. 11 includes a receiver 1101, a memory 1102, a processor 1103, and a sender 1104.

The receiver 1101 is configured to receive CSI process configuration information sent by a base station, where the CSI process configuration information includes at least one CSI process, and each CSI process is associated with one reference signal resource and one or more interference measurement resources.

The memory 1102 is configured to store a codebook.

The processor 1103 is configured to select, based on the reference signal resource and interference measurement resources associated with each CSI process, a precoding matrix from the codebook stored in the memory 1102, where the codebook includes a precoding matrix W and W=$\alpha$SV, where a matrix V is an N$\times$v matrix, N is the number of reference signal ports, v $\leq$ N, S is a row selection matrix used to select one or more row vectors from the matrix V, and $\alpha$ is a constant.

The sender 1104 is configured to send CSI corresponding to each CSI process to the base station, where the CSI includes a precoding matrix indicator PMI and the PMI is corresponding to the selected precoding matrix.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput. Optionally, as an embodiment, the codebook stored in the memory 1102 further includes a precoding matrix P and P=$\beta$U, where a matrix U is an N$\times$u

matrix, $u \leq N$, $\beta$ is a constant, a value of $\beta$ enables P and W to satisfy $\|P\|_F = \|W\|_F$, and $\|\|\|_F$ is a matrix Frobenius norm.

Optionally, as another embodiment, a first CSI process among the at least one CSI process is corresponding to a first codebook stored in the memory 1102, a second CSI process among the at least one CSI process is corresponding to a second codebook stored in the memory 1102, a precoding matrix in the first codebook is the precoding matrix W, and a precoding matrix in the second codebook is the precoding matrix P.

Optionally, as another embodiment, the number of reference signal ports associated with the first CSI process is 4, and the precoding matrix W in the first codebook stored in the memory 1102 is at least one of the following matrices:

$$
\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix}, \text{ and } \frac{1}{2}\begin{bmatrix}0\\0\\1\\-j\end{bmatrix}.
$$

Further, an RI corresponding to the first CSI process may be restricted to 1.

The number of reference signal ports associated with the second CSI process is 4, and the precoding matrix P in the second codebook stored in the memory 1102 is at least one of the following matrices:

$$
\beta \cdot \frac{1}{2}\begin{bmatrix}1&0\\1&0\\0&1\\0&1\end{bmatrix}, \beta \cdot \frac{1}{2}\begin{bmatrix}1&0\\1&0\\0&1\\0&-1\end{bmatrix}, \beta \cdot \frac{1}{2}\begin{bmatrix}1&0\\1&0\\0&1\\0&j\end{bmatrix}, \beta \cdot \frac{1}{2}\begin{bmatrix}1&0\\1&0\\0&1\\0&-j\end{bmatrix},
$$

$$
\beta \cdot \frac{1}{2}\begin{bmatrix}1&0\\-1&0\\0&1\\0&1\end{bmatrix}, \beta \cdot \frac{1}{2}\begin{bmatrix}1&0\\-1&0\\0&1\\0&-1\end{bmatrix}, \beta \cdot \frac{1}{2}\begin{bmatrix}1&0\\-1&0\\0&1\\0&j\end{bmatrix}, \beta \cdot \frac{1}{2}\begin{bmatrix}1&0\\-1&0\\0&1\\0&-j\end{bmatrix},
$$

$$
\beta \cdot \frac{1}{2}\begin{bmatrix}1&0\\j&0\\0&1\\0&1\end{bmatrix}, \beta \cdot \frac{1}{2}\begin{bmatrix}1&0\\j&0\\0&1\\0&-1\end{bmatrix}, \beta \cdot \frac{1}{2}\begin{bmatrix}1&0\\j&0\\0&1\\0&j\end{bmatrix}, \beta \cdot \frac{1}{2}\begin{bmatrix}1&0\\j&0\\0&1\\0&-j\end{bmatrix},
$$

$$
\beta \cdot \frac{1}{2}\begin{bmatrix}1&0\\-j&0\\0&1\\0&1\end{bmatrix}, \beta \cdot \frac{1}{2}\begin{bmatrix}1&0\\-j&0\\0&1\\0&-1\end{bmatrix}, \beta \cdot \frac{1}{2}\begin{bmatrix}1&0\\-j&0\\0&1\\0&j\end{bmatrix}, \text{ and } \beta \cdot \frac{1}{2}\begin{bmatrix}1&0\\-j&0\\0&1\\0&-j\end{bmatrix}.
$$

Further, an RI corresponding to the second CSI process may be restricted to 2.

Optionally, as another embodiment, the first codebook stored in the memory 1102 may include one or more matrices described in formula (1) to formula (41).

Optionally, as another embodiment, the second codebook stored in the memory 1102 may include one or more matrices described in formula (1) to formula (41).

FIG. 12 is a block diagram of a base station according to another embodiment of the present invention. The base station in FIG. 12 includes a sender 1201 and a receiver 1202.

The sender 1201 is configured to send CSI process configuration information to a user equipment UE, where the CSI process configuration information includes at least one CSI process, and each CSI process is associated with one reference signal resource and one or more interference measurement resources;

The receiver 1202 is configured to receive CSI that is sent by the UE and is corresponding to each CSI process, where the CSI includes a precoding matrix indicator PMI, the PMI is corresponding to a precoding matrix, the precoding matrix is selected by the UE from a codebook based on the reference signal and interference measurement resources associated with each CSI process, and the codebook includes a precoding matrix W and W=$\alpha$SV, where a matrix V is an N×v matrix, N is the number of reference signal ports, v $\leq$ N, S is a row selection matrix used to select one or more row vectors from the matrix V, and $\alpha$ is a constant.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Furthermore, multiple CSI processes use different codebooks to improve the freedom of the base station to select scheduling and transmission methods, so as to increase system throughput. Optionally, as an embodiment, the codebook further includes a precoding matrix P and P=$\beta$U, where a matrix U is an N×u matrix, u $\leq$ N, $\beta$ is a constant, a value of $\beta$ enables P and W to satisfy $\|P\|_F = \|W\|_F$, and $\|\|_F$ is a matrix Frobenius norm.

Optionally, as another embodiment, a first CSI process among the at least one CSI process is corresponding to a first codebook, a second CSI process among the at least one CSI process is corresponding to a second codebook, a precoding matrix in the first codebook is the precoding matrix W, and a precoding matrix in the second codebook is the precoding matrix P.

Optionally, as another embodiment, the number of reference signal ports associated with the first CSI process is 4, and the precoding matrix W in the first codebook is at least one of the following matrices:

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix}, \text{ and } \frac{1}{2}\begin{bmatrix}0\\0\\1\\-j\end{bmatrix}.$$

Further, an RI corresponding to the first CSI process may be restricted to 1.

The number of reference signal ports associated with the second CSI process is 4, and the precoding matrix P in the second codebook is at least one of the following matrices:

$$\beta\cdot\frac{1}{2}\begin{bmatrix}1&0\\1&0\\0&1\\0&1\end{bmatrix}, \beta\cdot\frac{1}{2}\begin{bmatrix}1&0\\1&0\\0&1\\0&-1\end{bmatrix}, \beta\cdot\frac{1}{2}\begin{bmatrix}1&0\\1&0\\0&1\\0&j\end{bmatrix}, \beta\cdot\frac{1}{2}\begin{bmatrix}1&0\\1&0\\0&1\\0&-j\end{bmatrix},$$

$$\beta\cdot\frac{1}{2}\begin{bmatrix}1&0\\-1&0\\0&1\\0&1\end{bmatrix}, \beta\cdot\frac{1}{2}\begin{bmatrix}1&0\\-1&0\\0&1\\0&-1\end{bmatrix}, \beta\cdot\frac{1}{2}\begin{bmatrix}1&0\\-1&0\\0&1\\0&j\end{bmatrix}, \beta\cdot\frac{1}{2}\begin{bmatrix}1&0\\-1&0\\0&1\\0&-j\end{bmatrix},$$

$$\beta\cdot\frac{1}{2}\begin{bmatrix}1&0\\j&0\\0&1\\0&1\end{bmatrix}, \quad \beta\cdot\frac{1}{2}\begin{bmatrix}1&0\\j&0\\0&1\\0&-1\end{bmatrix}, \quad \beta\cdot\frac{1}{2}\begin{bmatrix}1&0\\j&0\\0&1\\0&j\end{bmatrix}, \quad \beta\cdot\frac{1}{2}\begin{bmatrix}1&0\\j&0\\0&1\\0&-j\end{bmatrix},$$

$$\beta\cdot\frac{1}{2}\begin{bmatrix}1&0\\-j&0\\0&1\\0&1\end{bmatrix}, \quad \beta\cdot\frac{1}{2}\begin{bmatrix}1&0\\-j&0\\0&1\\0&-1\end{bmatrix}, \quad \beta\cdot\frac{1}{2}\begin{bmatrix}1&0\\-j&0\\0&1\\0&j\end{bmatrix}, \text{ and } \beta\cdot\frac{1}{2}\begin{bmatrix}1&0\\-j&0\\0&1\\0&-j\end{bmatrix}.$$

Further, an RI corresponding to the second CSI process may be restricted to 2.

Optionally, as another embodiment, the first codebook may include one or more matrices in formula (1) to formula (37).

Optionally, as another embodiment, the second codebook may include one or more matrices in formula (1) to formula (37).

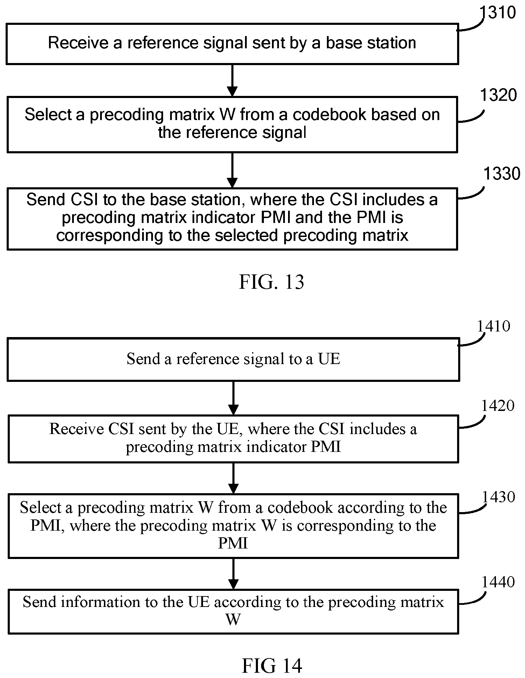

FIG. 13 is a CSI reporting method according to an embodiment of the present invention. The method according to FIG. 13 may be implemented by a UE, which may be, for example, a mobile phone or a terminal.

1310. Receive a reference signal sent by a base station;

1320. Select a precoding matrix W from a codebook based on the reference signal;

1330. Send CSI to the base station, where the CSI includes a precoding matrix indicator PMI and the PMI is corresponding to the selected precoding matrix W.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, an antenna port used for transmission may be selected by using the precoding matrix W.

Optionally, before step 1310, the method may further include acquiring a reference signal resource sent by the base station. In this embodiment of the present invention, the specific manner of acquiring the reference signal by the UE is not limited. For example, the UE acquires a reference signal resource by accepting signaling (such as RRC or DCI) notified by an eNB, or the UE acquires a reference signal resource based on predefined information (such as a cell ID). Specifically, the reference signal resource may be a CSI RS resource, where the CSI RS resource may be a combination of a CSI RS resource configuration and a CSI RS subframe configuration. A CSI RS resource configuration may be a port configuration of a CSI RS in an RB, such as a used subcarrier, symbol, or sequence. A CSI RS subframe configuration may be a subframe period or offset.

The reference signal resource may also be a DM RS resource, where the DM RS resource may be a DM RS resource configuration, such as a port configuration. The DM RS resource may also be a combination of a DM RS resource configuration and a DM RS subframe configuration, and indicate a DM RS port, offset, or subframe period. The DM RS subframe period or offset may be predefined and known to the UE and base station.

The reference signal resource may also be a CRS resource, where the CRS resource may be a CRS resource configuration, such as a port configuration. The CRS resource may also be a combination of a CRS resource configuration and a CRS subframe configuration, for example, a CRS interface, subframe period, or offset. The CRS subframe period or offset may be predefined and known to the UE and base station.

The reference signal resource may be UE-specific, and may also be cell-specific.

Optionally, as an embodiment, the codebook in step 1320 includes a rank-1 codebook, and the selecting a precoding matrix W from a codebook based on the reference signal may include: selecting the precoding matrix W from the rank-1 codebook based on the reference signal. The number of transmission layers which is corresponding to the precoding matrix in the rank-1 codebook is 1.

Optionally, as an embodiment, the number of reference signal ports in step 1310 is 4, and in the rank-1 codebook,

$$W_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

the precoding matrix $W=W_1W_2$, where ; and $W_2$ is a matrix in a first set, and the first set includes at least one of $\alpha_1 \begin{bmatrix} v_m \\ \mathbf{0}_{2\times1} \end{bmatrix}$ and $\alpha_1 \begin{bmatrix} \mathbf{0}_{2\times1} \\ v_m \end{bmatrix}$, where $v_m = \begin{bmatrix} 1 \\ e^{j2\pi\frac{m}{N}} \end{bmatrix}$, $\mathbf{0}_{2\times1}$ is an all-zero matrix of two rows and one column, $m=0,1,\cdots,N$-1, $N$ is a positive integer, and $\alpha_1$ is a scale factor.

Optionally, as an embodiment, the number of reference signal ports in step 1310 is 4, and in the rank-1 codebook, the precoding matrix $W=W_3W_4$, where $W_3$ is a matrix in a second set, the second set includes at least one of

$$\begin{bmatrix} 1 & 1 & 1 & 1 \\ 1 & j & -1 & -j \\ 0 & 0 & 0 & 0 \\ 0 & 0 & 0 & 0 \end{bmatrix}, \begin{bmatrix} 1 & 1 & 0 & 0 \\ -1 & -j & 0 & 0 \\ 0 & 0 & 1 & 1 \\ 0 & 0 & -1 & -j \end{bmatrix}, \begin{bmatrix} 0 & 0 & 0 & 0 \\ 0 & 0 & 0 & 0 \\ 1 & 1 & 1 & 1 \\ -1 & -j & 1 & j \end{bmatrix}, \text{ and } \begin{bmatrix} 0 & 0 & 1 & 1 \\ 0 & 0 & 1 & j \\ 1 & 1 & 0 & 0 \\ 1 & j & 0 & 0 \end{bmatrix}$$

, $W_4$ is a matrix in a third set, the third set includes at least one of $\alpha_2 \begin{bmatrix} 1 \\ 0 \\ 0 \\ 0 \end{bmatrix}$, $\alpha_2 \begin{bmatrix} 0 \\ 1 \\ 0 \\ 0 \end{bmatrix}$, $\alpha_2 \begin{bmatrix} 0 \\ 0 \\ 1 \\ 0 \end{bmatrix}$, and $\alpha_2 \begin{bmatrix} 0 \\ 0 \\ 0 \\ 1 \end{bmatrix}$, and $\alpha_2$ is a scale factor.

Optionally, as an embodiment, the number of reference signal ports in step 1310 is 4, in the rank-1 codebook, the precoding matrix $W=W_5W_6$ and $W_5=[\mathbf{b}_{p\bmod N} \mathbf{b}_{(p+1)\bmod N} \cdots \mathbf{b}_{(p+n\text{-}1)\bmod N}]$, where $p$ is a non-negative integer, for example, $p = 0,1,2,\cdots$ or $p = 0,2,4,\cdots$; n is a positive integer, for example, n=2 or n=4; N is a positive integer, for example, N=8;

$$\mathbf{b}_m = \alpha \begin{bmatrix} 1 \\ e^{j2\pi\frac{m}{N}} \\ 0 \\ 0 \end{bmatrix} \quad \mathbf{b}_m = \alpha \begin{bmatrix} 0 \\ 0 \\ 1 \\ e^{j2\pi\frac{m}{N}} \end{bmatrix}$$

and or , where, for example, when N=8, a value of m may be from 0 to 15 and column vectors $b_0$ to $b_{15}$ are as follows:

$$(\mathbf{b}_0 \ \mathbf{b}_1 \ \cdots \ \mathbf{b}_{15}) = \left( \begin{bmatrix} 1 \\ 1 \\ 0 \\ 0 \end{bmatrix} \begin{bmatrix} 1 \\ e^{j\frac{\pi}{4}} \\ 0 \\ 0 \end{bmatrix} \begin{bmatrix} 1 \\ j \\ 0 \\ 0 \end{bmatrix} \begin{bmatrix} 1 \\ e^{j\frac{3\pi}{4}} \\ 0 \\ 0 \end{bmatrix} \begin{bmatrix} 1 \\ -1 \\ 0 \\ 0 \end{bmatrix} \begin{bmatrix} 1 \\ e^{j\frac{5\pi}{4}} \\ 0 \\ 0 \end{bmatrix} \begin{bmatrix} 1 \\ -j \\ 0 \\ 0 \end{bmatrix} \begin{bmatrix} 1 \\ e^{j\frac{7\pi}{4}} \\ 0 \\ 0 \end{bmatrix} \begin{bmatrix} 0 \\ 0 \\ 1 \\ 1 \end{bmatrix} \begin{bmatrix} 0 \\ 0 \\ 1 \\ e^{j\frac{\pi}{4}} \end{bmatrix} \begin{bmatrix} 0 \\ 0 \\ 1 \\ j \end{bmatrix} \begin{bmatrix} 0 \\ 0 \\ 1 \\ e^{j\frac{3\pi}{4}} \end{bmatrix} \begin{bmatrix} 0 \\ 0 \\ 1 \\ -1 \end{bmatrix} \begin{bmatrix} 0 \\ 0 \\ 1 \\ e^{j\frac{5\pi}{4}} \end{bmatrix} \begin{bmatrix} 0 \\ 0 \\ 1 \\ -j \end{bmatrix} \begin{bmatrix} 0 \\ 0 \\ 1 \\ e^{j\frac{7\pi}{4}} \end{bmatrix} \right);$$

when n=2, $W_6$ is a matrix in a fourth set, and the fourth set includes at least one of $\alpha_3 \begin{bmatrix} 1 \\ 0 \end{bmatrix}$ and $\alpha_3 \begin{bmatrix} 0 \\ 1 \end{bmatrix}$; when n=4,

$W_6$ is a matrix in a fifth set, and the fifth set includes at least one of $\alpha_3 \begin{bmatrix} 0 \\ 0 \\ 0 \\ 1 \end{bmatrix}$, $\alpha_3 \begin{bmatrix} 1 \\ 0 \\ 0 \\ 0 \end{bmatrix}$, $\alpha_3 \begin{bmatrix} 0 \\ 1 \\ 0 \\ 0 \end{bmatrix}$, $\alpha_3 \begin{bmatrix} 0 \\ 0 \\ 1 \\ 0 \end{bmatrix}$, and

$\alpha_3 \begin{bmatrix} 0 \\ 0 \\ 0 \\ 1 \end{bmatrix}$ ; and $\alpha_3$ is a scale factor.

Optionally, as an embodiment, the number of reference signal ports in step 1310 is 4, and in the rank-1 codebook, the precoding matrix W=$W_7W_8$, where $W_7 = \begin{bmatrix} \mathbf{X} & \mathbf{0}_{2\times n} \\ \mathbf{0}_{2\times n} & \mathbf{X} \end{bmatrix}$, $\mathbf{X} = [\mathbf{b}_{p\bmod N}\ \mathbf{b}_{(p+1)\bmod N} \cdots \mathbf{b}_{(p+n-1)\bmod N}]$, and p is a non-negative integer, for example, $p = 0,1,2,\cdots$ or $p = 0,2,4,\cdots$. n is a positive integer, for example, $n = 2$ or $n = 4$; N is a positive integer, for example, N=8; $\mathbf{b}_m = \alpha \begin{bmatrix} 1 \\ e^{j2\pi\frac{m}{N}} \end{bmatrix}$, for example, when N=8, a value of m may be from 0 to 7, and column vectors $b_0$ to $b_7$ are as follows:

$$\begin{pmatrix} \mathbf{b}_0 & \mathbf{b}_2 & \cdots & \mathbf{b}_7 \end{pmatrix} = \begin{pmatrix} \begin{bmatrix} 1 \\ 1 \end{bmatrix} & \begin{bmatrix} 1 \\ e^{j\frac{\pi}{4}} \end{bmatrix} & \begin{bmatrix} 1 \\ e^{j\frac{\pi}{2}} \end{bmatrix} & \begin{bmatrix} 1 \\ e^{j\frac{3\pi}{4}} \end{bmatrix} & \begin{bmatrix} 1 \\ e^{j\pi} \end{bmatrix} & \begin{bmatrix} 1 \\ e^{j\frac{5\pi}{4}} \end{bmatrix} & \begin{bmatrix} 1 \\ e^{j\frac{3\pi}{2}} \end{bmatrix} & \begin{bmatrix} 1 \\ e^{j\frac{7\pi}{4}} \end{bmatrix} \end{pmatrix}$$ ; $\mathbf{0}_{2\times n}$ is an

all-zero matrix of two rows and n columns; and $W_8 = \begin{bmatrix} \alpha_4 \begin{bmatrix} \mathbf{Y}_1 \\ \mathbf{Y}_2 \end{bmatrix} \end{bmatrix}$, where $\mathbf{Y}_1$ and $\mathbf{Y}_2$ are column selection matrices or all-zero matrices, and $\alpha_4$ is a scale factor. When n=2, ($\mathbf{Y}_1$, $\mathbf{Y}_2$) may be a matrix group in a sixth set, and the sixth set includes at least one of the following matrix groups: $\begin{pmatrix} \begin{bmatrix} 1 \\ 0 \end{bmatrix}, \begin{bmatrix} 0 \\ 0 \end{bmatrix} \end{pmatrix}$, $\begin{pmatrix} \begin{bmatrix} 0 \\ 1 \end{bmatrix}, \begin{bmatrix} 0 \\ 0 \end{bmatrix} \end{pmatrix}$, $\begin{pmatrix} \begin{bmatrix} 0 \\ 0 \end{bmatrix}, \begin{bmatrix} 1 \\ 0 \end{bmatrix} \end{pmatrix}$, and $\begin{pmatrix} \begin{bmatrix} 0 \\ 0 \end{bmatrix}, \begin{bmatrix} 0 \\ 1 \end{bmatrix} \end{pmatrix}$

. When n=4, ($\mathbf{Y}_1$,$\mathbf{Y}_2$) may be a matrix group in a seventh set, and the seventh set includes at least one of the following matrix groups: $\begin{pmatrix} \begin{bmatrix} 1 \\ 0 \\ 0 \\ 0 \end{bmatrix}, \begin{bmatrix} 0 \\ 0 \\ 0 \\ 0 \end{bmatrix} \end{pmatrix}$, $\begin{pmatrix} \begin{bmatrix} 0 \\ 1 \\ 0 \\ 0 \end{bmatrix}, \begin{bmatrix} 0 \\ 0 \\ 0 \\ 0 \end{bmatrix} \end{pmatrix}$, $\begin{pmatrix} \begin{bmatrix} 0 \\ 0 \\ 1 \\ 0 \end{bmatrix}, \begin{bmatrix} 0 \\ 0 \\ 0 \\ 0 \end{bmatrix} \end{pmatrix}$, $\begin{pmatrix} \begin{bmatrix} 0 \\ 0 \\ 0 \\ 1 \end{bmatrix}, \begin{bmatrix} 0 \\ 0 \\ 0 \\ 0 \end{bmatrix} \end{pmatrix}$, $\begin{pmatrix} \begin{bmatrix} 0 \\ 0 \\ 0 \\ 0 \end{bmatrix}, \begin{bmatrix} 1 \\ 0 \\ 0 \\ 0 \end{bmatrix} \end{pmatrix}$, $\begin{pmatrix} \begin{bmatrix} 0 \\ 0 \\ 0 \\ 0 \end{bmatrix}, \begin{bmatrix} 0 \\ 1 \\ 0 \\ 0 \end{bmatrix} \end{pmatrix}$,

$\begin{pmatrix} \begin{bmatrix} 0 \\ 0 \\ 0 \\ 0 \end{bmatrix}, \begin{bmatrix} 0 \\ 0 \\ 1 \\ 0 \end{bmatrix} \end{pmatrix}$, and $\begin{pmatrix} \begin{bmatrix} 0 \\ 0 \\ 0 \\ 0 \end{bmatrix}, \begin{bmatrix} 0 \\ 0 \\ 0 \\ 1 \end{bmatrix} \end{pmatrix}$ .

Optionally, as an embodiment, the number of reference signal ports in step 1310 is 4, and in the rank-1 codebook, the precoding matrix W=W$_9$W$_{10}$, where $W_9 = \begin{bmatrix} \mathbf{X} & \mathbf{0}_{2\times2} \\ \mathbf{0}_{2\times2} & \mathbf{X} \end{bmatrix}$, $\mathbf{X} = \begin{bmatrix} 1 & 0 \\ 0 & 1 \end{bmatrix}$, and $\mathbf{0}_{2\times2}$ is an all-zero matrix of two rows and two columns; and $W_{10} = \alpha_5 \begin{bmatrix} \mathbf{Y_1} \\ \mathbf{Y_2} \end{bmatrix}$, where $\mathbf{Y_1}$ and $\mathbf{Y_2}$ are column selection matrices or all-zero matrices, $(\mathbf{Y_1},$ $\mathbf{Y_2})$ may be a matrix group in an eighth set, and the eighth set includes at least one of the following matrix groups:

$$\left( \begin{bmatrix} 1 \\ 0 \end{bmatrix}, \begin{bmatrix} 0 \\ 0 \end{bmatrix} \right)$$
,

$$\left( \begin{bmatrix} 0 \\ 1 \end{bmatrix}, \begin{bmatrix} 0 \\ 0 \end{bmatrix} \right), \ \left( \begin{bmatrix} 0 \\ 0 \end{bmatrix}, \begin{bmatrix} 1 \\ 0 \end{bmatrix} \right), \ \left( \begin{bmatrix} 0 \\ 0 \end{bmatrix}, \begin{bmatrix} 0 \\ 1 \end{bmatrix} \right), \ \beta_1 \left( \begin{bmatrix} 1 \\ 0 \end{bmatrix}, \begin{bmatrix} \varphi_n \\ 0 \end{bmatrix} \right), \ \beta_1 \left( \begin{bmatrix} 0 \\ 1 \end{bmatrix}, \begin{bmatrix} \varphi_n \\ 0 \end{bmatrix} \right), \ \beta_1 \left( \begin{bmatrix} 1 \\ 0 \end{bmatrix}, \begin{bmatrix} 0 \\ \varphi_n \end{bmatrix} \right)$$, and

$$\beta_1 \left( \begin{bmatrix} 0 \\ 1 \end{bmatrix}, \begin{bmatrix} 0 \\ \varphi_n \end{bmatrix} \right)$$, where $\varphi_n = e^{j2\pi\frac{n}{M}}$, M is a positive integer, n is a non-negative integer less than M, and $\alpha_5$ and $\beta_1$ are scale factors.

Optionally, as an embodiment, the codebook in step 1320 includes a rank-2 codebook, and the selecting a precoding matrix W from a codebook based on the reference signal may include: selecting the precoding matrix W from the rank-2 codebook based on the reference signal. The number of transmission layers which is corresponding to the precoding matrix in the rank-2 codebook is 2.

Optionally, as an embodiment, the number of reference signal ports in step 1320 is 4, and in the rank-2 codebook, the precoding matrix W=W$_{11}$W$_{12}$, where $W_{11} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$, and W$_{12}$ may be a matrix in a ninth set, and the ninth set includes at least one of $\alpha_6 \begin{bmatrix} v_m & \mathbf{0}_{2\times1} \\ \mathbf{0}_{2\times1} & v_m \end{bmatrix}$, $\alpha_6 \begin{bmatrix} v_m & v_{m+\frac{N}{2}} \\ \mathbf{0}_{2\times1} & \mathbf{0}_{2\times1} \end{bmatrix}$, and $\alpha_6 \begin{bmatrix} \mathbf{0}_{2\times1} & \mathbf{0}_{2\times1} \\ v_m & v_{m+\frac{N}{2}} \end{bmatrix}$, where

$v_m = \begin{bmatrix} 1 \\ e^{j2\pi\frac{m}{N}} \end{bmatrix}$, $v_{m+\frac{N}{2}} = \begin{bmatrix} 1 \\ e^{j2\pi\frac{(m+\frac{N}{2})}{N}} \end{bmatrix}$, $\mathbf{0}_{2\times1}$ is an all-zero matrix of two rows and one column, $\alpha$ is a scale factor, and when $W_{12} = \alpha_6 \begin{bmatrix} v_m & \mathbf{0}_{2\times1} \\ \mathbf{0}_{2\times1} & v_m \end{bmatrix}$, $m = 0,1,\cdots,N$-1, when $W_{12} = \alpha_6 \begin{bmatrix} v_m & v_{m+\frac{N}{2}} \\ \mathbf{0}_{2\times1} & \mathbf{0}_{2\times1} \end{bmatrix}$ or

$W_{12} = \alpha_6 \begin{bmatrix} \mathbf{0}_{2\times1} & \mathbf{0}_{2\times1} \\ v_m & v_{m+\frac{N}{2}} \end{bmatrix}$, $m = 0,1,\cdots,\frac{N}{2}-1$, and $\mathbf{0}_{2\times1}$ is an all-zero matrix of two rows and one column.

Optionally, as an embodiment, the number of reference signal ports in step 1320 is 4, and in the rank-2 codebook, the precoding matrix W=W$_{13}$W$_{14}$, where W$_{13}$ may be a matrix in a tenth set, and the tenth set includes at least one of

$$\mathbf{A} \cdot \begin{bmatrix} 1 & 1 & 1 & 1 \\ 1 & j & -1 & -j \\ 0 & 0 & 0 & 0 \\ 0 & 0 & 0 & 0 \end{bmatrix}, \quad \mathbf{A} \cdot \begin{bmatrix} 1 & 1 & 0 & 0 \\ -1 & -j & 0 & 0 \\ 0 & 0 & 1 & 1 \\ 0 & 0 & -1 & -j \end{bmatrix}, \quad \mathbf{A} \cdot \begin{bmatrix} 0 & 0 & 0 & 0 \\ 0 & 0 & 0 & 0 \\ 1 & 1 & 1 & 1 \\ -1 & -j & 1 & j \end{bmatrix}, \text{ and } \begin{bmatrix} 0 & 0 & 1 & 1 \\ 0 & 0 & 1 & j \\ 1 & 1 & 0 & 0 \\ 1 & j & 0 & 0 \end{bmatrix}, \text{ where}$$

$$\mathbf{A} = \begin{bmatrix} 1 & 0 & 0 & 0 \\ 0 & \varphi_m & 0 & 0 \\ 0 & 0 & 1 & 0 \\ 0 & 0 & 0 & \varphi_n \end{bmatrix}, \varphi_m = e^{j\theta_1}, \varphi_n = e^{j\theta_2}, \text{ and } \theta_1, \theta_2 \in [0,2\pi] \text{ for example } \theta_1, \theta_2 = 0, \pm\frac{\pi}{16}, \pm\frac{\pi}{8}, \pm\frac{\pi}{4}, \cdots \text{ ; and }$$

$W_{14}$ may be a matrix in an eleventh set, and the eleventh set includes at least one of $\alpha_7 \begin{bmatrix} 1 & 0 \\ 0 & 0 \\ 0 & 1 \\ 0 & 0 \end{bmatrix}$ and $\alpha_7 \begin{bmatrix} 0 & 0 \\ 1 & 0 \\ 0 & 0 \\ 0 & 1 \end{bmatrix}$, and $\alpha_7$ is a scale factor.

Optionally, as an embodiment, the number of reference signal ports in step 1320 is 4, and in the rank-2 codebook, the precoding matrix $W = W_{15}W_{16}$, where $W_{15} = \begin{bmatrix} \mathbf{X} & \mathbf{0}_{2\times2} \\ \mathbf{0}_{2\times2} & \mathbf{X} \end{bmatrix}$, $\mathbf{X} = \mathbf{A} \cdot \begin{bmatrix} 1 & 1 \\ 1 & -1 \end{bmatrix}$, $\mathbf{A} = \begin{bmatrix} 1 & 0 \\ 0 & \varphi_n \end{bmatrix}$, $\varphi_n = e^{j\theta}$, $\theta \in$

$[0,2\pi]$, for example, $\theta = 0, \pm\frac{\pi}{16}, \pm\frac{\pi}{8}, \pm\frac{\pi}{4}, \cdots$, and $\mathbf{0}_{2\times2}$ is an all-zero matrix of two rows and two columns;

$W_{16} = \alpha_8 \begin{bmatrix} \mathbf{Y_1} & \mathbf{0}_{2\times1} \\ \mathbf{0}_{2\times1} & \mathbf{Y_2} \end{bmatrix}$, where $(\mathbf{Y_1}, \mathbf{Y_2})$ may be a matrix group in a twelfth set, and the twelfth set includes at least one of the following matrix groups: $\left(\begin{bmatrix}1\\0\end{bmatrix}, \begin{bmatrix}1\\0\end{bmatrix}\right)$, $\left(\begin{bmatrix}0\\1\end{bmatrix}, \begin{bmatrix}1\\0\end{bmatrix}\right)$, $\left(\begin{bmatrix}1\\0\end{bmatrix}, \begin{bmatrix}0\\1\end{bmatrix}\right)$, and $\left(\begin{bmatrix}0\\1\end{bmatrix}, \begin{bmatrix}0\\1\end{bmatrix}\right)$, or,

$W_{16} = \alpha_8 \begin{bmatrix} \mathbf{Y_1} & \mathbf{Y_2} \\ \mathbf{0}_{2\times1} & \mathbf{0}_{2\times1} \end{bmatrix}$, where $(\mathbf{Y_1}, \mathbf{Y_2})$ may be a matrix group in a thirteenth set, and the thirteenth set includes at least one of the following matrix groups: $\left(\begin{bmatrix}0\\1\end{bmatrix}, \begin{bmatrix}1\\0\end{bmatrix}\right)$ and $\left(\begin{bmatrix}1\\0\end{bmatrix}, \begin{bmatrix}0\\1\end{bmatrix}\right)$, or, $W_{16} = \alpha_8 \begin{bmatrix} \mathbf{0}_{2\times1} & \mathbf{0}_{2\times1} \\ \mathbf{Y_1} & \mathbf{Y_2} \end{bmatrix}$, where $(\mathbf{Y_1}, \mathbf{Y_2})$

may be a matrix group in a fourteenth set, the fourteenth set includes at least one of the following matrix groups:

$\left(\begin{bmatrix}0\\1\end{bmatrix}, \begin{bmatrix}1\\0\end{bmatrix}\right)$ and $\left(\begin{bmatrix}1\\0\end{bmatrix}, \begin{bmatrix}0\\1\end{bmatrix}\right)$, and $\mathbf{0}_{2\times1}$ is an all-zero matrix of two rows and one column and $\alpha_8$ is a scale factor.

Optionally, as an embodiment, the number of reference signal ports in step 1320 is 4, and in the rank-2 codebook, the precoding matrix $W=W_{17}W_{18}$, where $W_{17}=\begin{bmatrix} \mathbf{X} & \mathbf{0}_{2\times4} \\ \mathbf{0}_{2\times4} & \mathbf{X} \end{bmatrix}$,

$$\mathbf{X} = \mathbf{A}\cdot\begin{bmatrix} 1 & 1 & 1 & 1 \\ 1 & e^{j\frac{\pi}{2}} & e^{j\pi} & e^{j\frac{3\pi}{2}} \end{bmatrix},\quad \mathbf{A}=\begin{bmatrix} 1 & 0 \\ 0 & \varphi_n \end{bmatrix},\quad \varphi_n=e^{j\theta},\quad \theta\in[0,2\pi],\text{ for example,}$$

$\theta = 0,\pm\dfrac{\pi}{16},\pm\dfrac{\pi}{8},\pm\dfrac{\pi}{4},\cdots$ , and $\mathbf{0}_{2\times4}$ is an all-zero matrix of two rows and four columns; $W_{18}=\alpha_9\begin{bmatrix} \mathbf{Y_1} & \mathbf{0}_{4\times1} \\ \mathbf{0}_{4\times1} & \mathbf{Y_2} \end{bmatrix}$

, where $\mathbf{Y_1}$ and $\mathbf{Y_2}$ may be a matrix in a fifteenth set, and the fifteenth set includes at least one of $\begin{bmatrix}1\\0\\0\\0\end{bmatrix}$, $\begin{bmatrix}0\\1\\0\\0\end{bmatrix}$, $\begin{bmatrix}0\\0\\1\\0\end{bmatrix}$,

and $\begin{bmatrix}0\\0\\0\\1\end{bmatrix}$, or, $W_{18}=\alpha_9\begin{bmatrix} \mathbf{Y_1} & \mathbf{Y_2} \\ \mathbf{0}_{4\times1} & \mathbf{0}_{4\times1} \end{bmatrix}$, where $(\mathbf{Y_1},\mathbf{Y_2})$ may be a matrix group in a sixteenth set, and the sixteenth set includes at least one of the following matrix groups: $\left(\begin{bmatrix}1\\0\\0\\0\end{bmatrix},\begin{bmatrix}0\\0\\1\\0\end{bmatrix}\right)$ and $\left(\begin{bmatrix}0\\1\\0\\0\end{bmatrix},\begin{bmatrix}0\\0\\0\\1\end{bmatrix}\right)$, or, $W_{18}=\alpha_9\begin{bmatrix} \mathbf{0}_{4\times1} & \mathbf{0}_{4\times1} \\ \mathbf{Y_1} & \mathbf{Y_2} \end{bmatrix}$,

where $(\mathbf{Y_1}, \mathbf{Y_2})$ may be a matrix group in a seventeenth set, the seventeenth set includes at least one of the following

matrix groups: $\left(\begin{bmatrix}1\\0\\0\\0\end{bmatrix},\begin{bmatrix}0\\0\\1\\0\end{bmatrix}\right)$ and $\left(\begin{bmatrix}0\\1\\0\\0\end{bmatrix},\begin{bmatrix}0\\0\\0\\1\end{bmatrix}\right)$, and $\alpha_9$ is a scale factor and $\mathbf{0}_{4\times1}$ is an all-zero matrix of four rows and one column.

Optionally, as an embodiment, the number of reference signal ports in step 1320 is 4, and in the rank-2 codebook, the precoding matrix $W=W_{19}W_{20}$ and $W_{19}=\begin{bmatrix} \mathbf{X} & \mathbf{0}_{2\times2} \\ \mathbf{0}_{2\times2} & \mathbf{X} \end{bmatrix}$ $\mathbf{X}=\mathbf{A}\cdot\begin{bmatrix} 1 & 0 \\ 0 & 1 \end{bmatrix}$, $\mathbf{A}=\begin{bmatrix} 1 & 0 \\ 0 & \varphi_n \end{bmatrix}$, where , $\varphi_n = e^{j\theta}$,

$\theta \in [0, 2\pi]$, for example, $\theta = 0,\pm\dfrac{\pi}{16},\pm\dfrac{\pi}{8},\pm\dfrac{\pi}{4},\cdots$ , and $\mathbf{0}_{2\times2}$ is an all-zero matrix of two rows and two columns;

$$W_{20} = \alpha_{10} \begin{bmatrix} \mathbf{Y_1} & \mathbf{0}_{2\times1} \\ \mathbf{0}_{2\times1} & \mathbf{Y_2} \end{bmatrix}$$

, where $\mathbf{Y_1}$ and $\mathbf{Y_2}$ may be a matrix in an eighteenth set, and the eighteenth set includes at least one of $\begin{bmatrix} 1 \\ 0 \end{bmatrix}$ and $\begin{bmatrix} 0 \\ 1 \end{bmatrix}$, or, $W_{20} = \alpha_{10} \begin{bmatrix} \mathbf{Y_1} & \mathbf{Y_2} \\ \mathbf{0}_{2\times1} & \mathbf{0}_{2\times1} \end{bmatrix}$, where $(\mathbf{Y_1}, \mathbf{Y_2})$ may be a matrix group in a nineteenth set, and the nineteenth set includes at least one of the following matrix groups: $\left( \begin{bmatrix} 1 \\ 0 \end{bmatrix}, \begin{bmatrix} 0 \\ 1 \end{bmatrix} \right)$ and $\left( \begin{bmatrix} 0 \\ 1 \end{bmatrix}, \begin{bmatrix} 1 \\ 0 \end{bmatrix} \right)$, or,

$$W_{20} = \alpha_{10} \begin{bmatrix} \mathbf{0}_{2\times1} & \mathbf{0}_{2\times1} \\ \mathbf{Y_1} & \mathbf{Y_2} \end{bmatrix}$$

, where $(\mathbf{Y_1}, \mathbf{Y_2})$ may be a matrix group in a twentieth set, the twentieth set includes at least one of the following matrix groups: $\left( \begin{bmatrix} 1 \\ 0 \end{bmatrix}, \begin{bmatrix} 0 \\ 1 \end{bmatrix} \right)$ and $\left( \begin{bmatrix} 0 \\ 1 \end{bmatrix}, \begin{bmatrix} 1 \\ 0 \end{bmatrix} \right)$, or, $W_{20}$ is equal to $\beta_2 \begin{bmatrix} \mathbf{Y_1} & \mathbf{Y_2} \\ \varphi_m \mathbf{Y_1} & -\varphi_m \mathbf{Y_2} \end{bmatrix}$ or

$\beta_2 \begin{bmatrix} \mathbf{Y_1} & \mathbf{Y_1} \\ \varphi_m \mathbf{Y_2} & -\varphi_m \mathbf{Y_2} \end{bmatrix}$, where $\varphi_m = e^{j\theta}$, $\theta \in [0, 2\pi]$, for example, $\theta = 0, \pm\dfrac{\pi}{16}, \pm\dfrac{\pi}{8}, \pm\dfrac{\pi}{4}, \cdots$, $\mathbf{Y_1}$ and $\mathbf{Y_2}$ may be

a matrix in a twenty-first set, the twenty-first set includes at least one of $\begin{bmatrix} 1 \\ 0 \end{bmatrix}$ and $\begin{bmatrix} 0 \\ 1 \end{bmatrix}$, $\mathbf{0}_{2\times1}$ is an all-zero matrix of two rows and one column, and $\alpha_{10}$ and $\beta_2$ are scale factors.

Optionally, as an embodiment, the codebook in step 1320 includes a rank-3 codebook, and the selecting a preceding matrix W from a codebook based on the reference signal may include: selecting the precoding matrix W from the rank-3 codebook based on the reference signal. The number of transmission layers which is corresponding to the precoding matrix in the rank-3 codebook is 3.

Optionally, as an embodiment, the number of reference signal ports in step 1320 is 4, and in the rank-3 codebook,

$$W_{21} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

the precoding matrix $W = W_{21}W_{22}$, where , $W_{22}$ may be a matrix in a twenty-second set, and the twenty-second set includes at least one of

$$\alpha_{11} \begin{bmatrix} v_m & v_{m+\frac{N}{2}} & \mathbf{0}_{2\times1} \\ \mathbf{0}_{2\times1} & \mathbf{0}_{2\times1} & v_m \end{bmatrix} , \quad \alpha_{11} \begin{bmatrix} v_m & v_{m+\frac{N}{2}} & \mathbf{0}_{2\times1} \\ \mathbf{0}_{2\times1} & \mathbf{0}_{2\times1} & v_{m+\frac{N}{2}} \end{bmatrix} , \quad \alpha_{11} \begin{bmatrix} v_m & \mathbf{0}_{2\times1} & \mathbf{0}_{2\times1} \\ \mathbf{0}_{2\times1} & v_m & v_{m+\frac{N}{2}} \end{bmatrix}$$

, and

$$\alpha_{11} \begin{bmatrix} v_{m+\frac{N}{2}} & \mathbf{0}_{2\times1} & \mathbf{0}_{2\times1} \\ \mathbf{0}_{2\times1} & v_m & v_{m+\frac{N}{2}} \end{bmatrix} \quad v_m = \begin{bmatrix} 1 \\ e^{j2\pi\frac{m}{N}} \end{bmatrix}, \quad v_{m+\frac{N}{2}} = \begin{bmatrix} 1 \\ e^{j2\pi\frac{(m+\frac{N}{2})}{N}} \end{bmatrix}$$

, where , $\mathbf{0}_{2\times1}$ is an all-zero matrix of two rows

$$m = 0,1,\cdots,\frac{N}{2}-1$$

and one column, , and $\alpha_{11}$ is a scale factor.

Optionally, as an embodiment, the number of reference signal ports in step 1320 is 4, and in the rank-3 codebook,

$$W_{23} = \mathbf{A} \cdot \begin{bmatrix} 1 & 1 & 0 & 0 \\ 1 & -1 & 0 & 0 \\ 0 & 0 & 1 & 1 \\ 0 & 0 & 1 & -1 \end{bmatrix} \qquad \mathbf{A} = \begin{bmatrix} 1 & 0 & 0 & 0 \\ 0 & \varphi_m & 0 & 0 \\ 0 & 0 & 1 & 0 \\ 0 & 0 & 0 & \varphi_n \end{bmatrix}$$

the precoding matrix $W = W_{23}W_{24}$, where , where , , $\varphi_m$

$$\theta = 0, \pm\frac{\pi}{16}, \pm\frac{\pi}{8}, \pm\frac{\pi}{4}, \cdots$$

$= e^{j\theta_1}$, $\varphi_n = e^{j\theta_2}$, and $\theta_1, \theta_2 \in [0, 2\pi]$, for example, ; and W24 may be a matrix in a twenty-

$$\alpha_{12}\begin{bmatrix} 1 & 0 & 0 \\ 0 & 1 & 0 \\ 0 & 0 & 1 \\ 0 & 0 & 0 \end{bmatrix}, \quad \alpha_{12}\begin{bmatrix} 1 & 0 & 0 \\ 0 & 1 & 0 \\ 0 & 0 & 0 \\ 0 & 0 & 1 \end{bmatrix}, \quad \alpha_{12}\begin{bmatrix} 1 & 0 & 0 \\ 0 & 0 & 0 \\ 0 & 1 & 0 \\ 0 & 0 & 1 \end{bmatrix},$$

third set, and the twenty-third set includes at least one of

$$\alpha_{12}\begin{bmatrix} 0 & 0 & 0 \\ 1 & 0 & 0 \\ 0 & 1 & 0 \\ 0 & 0 & 1 \end{bmatrix}$$

and , where $\alpha$ is a scale factor.

Optionally, as an embodiment, the number of reference signal ports in step 1320 is 4, and in the rank-3 codebook,

$$W_{25} = \begin{bmatrix} \mathbf{X} & \mathbf{0}_{2\times4} \\ \mathbf{0}_{2\times4} & \mathbf{X} \end{bmatrix}$$

the precoding matrix $W = W_{25}W_{26}$ and , where

$$\mathbf{X} = \mathbf{A} \cdot \begin{bmatrix} 1 & 1 & 1 & 1 \\ 1 & e^{j\frac{\pi}{2}} & e^{j\pi} & e^{j\frac{3\pi}{2}} \end{bmatrix}, \qquad \mathbf{A} = \begin{bmatrix} 1 & 0 \\ 0 & \varphi_n \end{bmatrix}$$

, $\varphi_n = e^{j\theta}$, $\theta \in [0, 2\pi]$, for example,

$$\theta = 0, \pm\frac{\pi}{16}, \pm\frac{\pi}{8}, \pm\frac{\pi}{4}, \cdots$$

, and $\mathbf{0}_{2\times4}$ is an all-zero matrix of two rows and four columns; and

$$W_{26} = \alpha_{13}\begin{bmatrix} \mathbf{Y}_1 & \mathbf{0}_{4\times1} \\ \mathbf{0}_{4\times2} & \mathbf{Y}_2 \end{bmatrix}$$

, where $(\mathbf{Y}_1, \mathbf{Y}_2)$ may be a matrix group in a twenty-fourth set, and the twenty-fourth set includes at least one of the following matrix groups:

$$\left( \begin{bmatrix} 1 & 0 \\ 0 & 0 \\ 0 & 1 \\ 0 & 0 \end{bmatrix} \begin{bmatrix} 1 \\ 0 \\ 0 \\ 0 \end{bmatrix} \right), \left( \begin{bmatrix} 0 & 0 \\ 1 & 0 \\ 0 & 0 \\ 0 & 1 \end{bmatrix} \begin{bmatrix} 1 \\ 0 \\ 0 \\ 0 \end{bmatrix} \right), \left( \begin{bmatrix} 1 & 0 \\ 0 & 0 \\ 0 & 1 \\ 0 & 0 \end{bmatrix} \begin{bmatrix} 0 \\ 1 \\ 0 \\ 0 \end{bmatrix} \right), \left( \begin{bmatrix} 0 & 0 \\ 1 & 0 \\ 0 & 0 \\ 0 & 1 \end{bmatrix} \begin{bmatrix} 0 \\ 1 \\ 0 \\ 0 \end{bmatrix} \right),$$

$$\left( \begin{bmatrix} 1 & 0 \\ 0 & 0 \\ 0 & 1 \\ 0 & 0 \end{bmatrix} \begin{bmatrix} 0 \\ 0 \\ 1 \\ 0 \end{bmatrix} \right), \left( \begin{bmatrix} 0 & 0 \\ 1 & 0 \\ 0 & 0 \\ 0 & 1 \end{bmatrix} \begin{bmatrix} 0 \\ 0 \\ 1 \\ 0 \end{bmatrix} \right), \left( \begin{bmatrix} 1 & 0 \\ 0 & 0 \\ 0 & 1 \\ 0 & 0 \end{bmatrix} \begin{bmatrix} 0 \\ 0 \\ 0 \\ 1 \end{bmatrix} \right), \text{ and } \left( \begin{bmatrix} 0 & 0 \\ 1 & 0 \\ 0 & 0 \\ 0 & 1 \end{bmatrix} \begin{bmatrix} 0 \\ 0 \\ 0 \\ 1 \end{bmatrix} \right),$$

$$W_{26} = \alpha_{13} \begin{bmatrix} \mathbf{Y_1} & \mathbf{0}_{4\times2} \\ \mathbf{0}_{4\times1} & \mathbf{Y_2} \end{bmatrix}$$

or, , where $(\mathbf{Y}_1, \mathbf{Y}_2)$ is a matrix group in a twenty-eighth set, where the twenty-eighth set includes at least one of the following matrix groups:

$$\left( \begin{bmatrix} 1 \\ 0 \\ 0 \\ 0 \end{bmatrix} \begin{bmatrix} 1 & 0 \\ 0 & 0 \\ 0 & 1 \\ 0 & 0 \end{bmatrix} \right), \left( \begin{bmatrix} 1 \\ 0 \\ 0 \\ 0 \end{bmatrix} \begin{bmatrix} 0 & 0 \\ 1 & 0 \\ 0 & 0 \\ 0 & 1 \end{bmatrix} \right), \left( \begin{bmatrix} 0 \\ 1 \\ 0 \\ 0 \end{bmatrix} \begin{bmatrix} 1 & 0 \\ 0 & 0 \\ 0 & 1 \\ 0 & 0 \end{bmatrix} \right), \left( \begin{bmatrix} 0 \\ 1 \\ 0 \\ 0 \end{bmatrix} \begin{bmatrix} 0 & 0 \\ 1 & 0 \\ 0 & 0 \\ 0 & 1 \end{bmatrix} \right),$$

$$\left( \begin{bmatrix} 0 \\ 0 \\ 1 \\ 0 \end{bmatrix} \begin{bmatrix} 1 & 0 \\ 0 & 0 \\ 0 & 1 \\ 0 & 0 \end{bmatrix} \right), \left( \begin{bmatrix} 0 \\ 0 \\ 1 \\ 0 \end{bmatrix} \begin{bmatrix} 0 & 0 \\ 1 & 0 \\ 0 & 0 \\ 0 & 1 \end{bmatrix} \right), \left( \begin{bmatrix} 0 \\ 0 \\ 0 \\ 1 \end{bmatrix} \begin{bmatrix} 1 & 0 \\ 0 & 0 \\ 0 & 1 \\ 0 & 0 \end{bmatrix} \right), \text{ and } \left( \begin{bmatrix} 0 \\ 0 \\ 0 \\ 1 \end{bmatrix} \begin{bmatrix} 0 & 0 \\ 1 & 0 \\ 0 & 0 \\ 0 & 1 \end{bmatrix} \right),$$

$\alpha_{13}$ is a scale factor, $\mathbf{0}_{4\times2}$ is an all-zero matrix of four rows and two columns, and $\mathbf{0}_{4\times1}$ is an all-zero matrix of four rows and one column.

Optionally, as an embodiment, the number of reference signal ports in step 1320 is 4, and in the rank-3 codebook,

$$W_{27} = \begin{bmatrix} \mathbf{X} & \mathbf{0}_{2\times2} \\ \mathbf{0}_{2\times2} & \mathbf{X} \end{bmatrix}$$

the precoding matrix $W = W_{27}W_{28}$ and , where $\mathbf{X} = \mathbf{A} \cdot \begin{bmatrix} 1 & 1 \\ 1 & -1 \end{bmatrix}$, $\mathbf{A} = \begin{bmatrix} 1 & 0 \\ 0 & \varphi_n \end{bmatrix}$, $\varphi_n =$

$e^{j\theta}$, $\theta \in [0, 2\pi]$, for example, $\theta = 0, \pm\dfrac{\pi}{16}, \pm\dfrac{\pi}{8}, \pm\dfrac{\pi}{4}, \cdots$ , $\mathbf{0}_{2\times2}$ is an all-zero matrix of two rows and two columns;

$$W_{28} = \alpha_{14} \begin{bmatrix} \mathbf{Y_1} & \mathbf{0}_{2\times1} \\ \mathbf{0}_{2\times2} & \mathbf{Y_2} \end{bmatrix}$$

and , where $(\mathbf{Y}_1, \mathbf{Y}_2)$ may be a matrix group in a twenty-fifth set, and the twenty-fifth set includes at least one of the following matrix groups: $\left( \begin{bmatrix} 1 & 0 \\ 0 & 1 \end{bmatrix} \begin{bmatrix} 1 \\ 0 \end{bmatrix} \right)$ and $\left( \begin{bmatrix} 1 & 0 \\ 0 & 1 \end{bmatrix} \begin{bmatrix} 0 \\ 1 \end{bmatrix} \right)$, or

$$W_{28} = \alpha_{14} \begin{bmatrix} \mathbf{Y_1} & \mathbf{0}_{2\times2} \\ \mathbf{0}_{2\times1} & \mathbf{Y_2} \end{bmatrix}$$

, where $(\mathbf{Y_1}, \mathbf{Y_2})$ is a matrix group in a twenty-ninth set, and the twenty-ninth set includes at least one of the following matrix groups: $\left( \begin{bmatrix} 1 \\ 0 \end{bmatrix}, \begin{bmatrix} 1 & 0 \\ 0 & 1 \end{bmatrix} \right)$ and $\left( \begin{bmatrix} 0 \\ 1 \end{bmatrix}, \begin{bmatrix} 1 & 0 \\ 0 & 1 \end{bmatrix} \right)$, $\mathbf{0}_{2\times1}$ is an all-zero matrix of two rows and one column, and $\alpha_{15}$ is a scale factor.

Optionally, as an embodiment, the number of reference signal ports in step 1320 is 4, and in the rank-3 codebook, the precoding matrix $W = W_{29}W_{30}$ and $W_{29} = \begin{bmatrix} \mathbf{X} & \mathbf{0}_{2\times2} \\ \mathbf{0}_{2\times2} & \mathbf{X} \end{bmatrix}$, where $\mathbf{X} = \mathbf{A} \cdot \begin{bmatrix} 1 & 0 \\ 0 & 1 \end{bmatrix}$, $\mathbf{A} = \begin{bmatrix} 1 & 0 \\ 0 & \varphi_n \end{bmatrix}$, $\varphi_n =$

$$\theta = 0, \pm\frac{\pi}{16}, \pm\frac{\pi}{8}, \pm\frac{\pi}{4}, \cdots$$

$e^{j\theta}$, $\theta \in [0, 2\pi]$, for example, , $\mathbf{0}_{2\times2}$ is an all-zero matrix of two rows and two columns; and

$$W_{30} = \alpha_{15} \begin{bmatrix} \mathbf{Y_1} & \mathbf{0}_{2\times1} \\ \mathbf{0}_{2\times2} & \mathbf{Y_2} \end{bmatrix}$$

, where $(\mathbf{Y_1}, \mathbf{Y_2})$ may be a matrix group in a twenty-sixth set, and the twenty-sixth set includes at least one of the following matrix groups: $\left( \begin{bmatrix} 1 & 0 \\ 0 & 1 \end{bmatrix}, \begin{bmatrix} 1 \\ 0 \end{bmatrix} \right)$ and $\left( \begin{bmatrix} 1 & 0 \\ 0 & 1 \end{bmatrix}, \begin{bmatrix} 0 \\ 1 \end{bmatrix} \right)$, $W_{30} = \alpha_{15} \begin{bmatrix} \mathbf{Y_1} & \mathbf{0}_{2\times2} \\ \mathbf{0}_{2\times1} & \mathbf{Y_2} \end{bmatrix}$, or

, where $(\mathbf{Y_1}, \mathbf{Y_2})$ is a matrix group in a thirtieth set, and the thirtieth set includes at least one of the following matrix groups:

$\left( \begin{bmatrix} 1 \\ 0 \end{bmatrix}, \begin{bmatrix} 1 & 0 \\ 0 & 1 \end{bmatrix} \right)$ and $\left( \begin{bmatrix} 0 \\ 1 \end{bmatrix}, \begin{bmatrix} 1 & 0 \\ 0 & 1 \end{bmatrix} \right)$, $\alpha_{15}$ is a scale factor, and $\mathbf{0}_{2\times1}$ is an all-zero matrix of two rows and one column.

Optionally, as an embodiment, the codebook in step 1320 includes a rank-4 codebook, and the selecting a precoding matrix W from a codebook based on the reference signal may include: selecting the precoding matrix W from the rank-4 codebook based on the reference signal. The number of transmission layers which is corresponding to the precoding matrix in the rank-4 codebook is 4.

Optionally, as an embodiment, the number of reference signal ports in step 1320 is 4, and in the rank-4 codebook, the precoding matrix $W = W_{31}W_{32}$, where $W_{31} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$, $W_{32} =$

$\alpha_{16} \begin{bmatrix} v_m & v_{m+\frac{N}{2}} & \mathbf{0}_{2\times1} & \mathbf{0}_{2\times1} \\ \mathbf{0}_{2\times1} & \mathbf{0}_{2\times1} & v_m & v_{m+\frac{N}{2}} \end{bmatrix}$, $v_m = \begin{bmatrix} 1 \\ e^{j2\pi\frac{m}{N}} \end{bmatrix}$, $v_{m+\frac{N}{2}} = \begin{bmatrix} 1 \\ e^{j2\pi\frac{(m+\frac{N}{2})}{N}} \end{bmatrix}$, $m = 0, 1, \cdots, \frac{N}{2} - 1$

, $N$ is a positive integer, $\mathbf{0}_{2\times1}$ is an all-zero matrix of two rows and one column, and $\alpha_{16}$ is a scale factor.

Optionally, as an embodiment, the number of reference signal ports in step 1320 is 4, and in the rank-4 codebook,

$$W_{33}= \mathbf{A} \cdot \begin{bmatrix} 1 & 1 & 0 & 0 \\ 1 & -1 & 0 & 0 \\ 0 & 0 & 1 & 1 \\ 0 & 0 & 1 & -1 \end{bmatrix} \qquad \mathbf{A} = \begin{bmatrix} 1 & 0 & 0 & 0 \\ 0 & \varphi_m & 0 & 0 \\ 0 & 0 & 1 & 0 \\ 0 & 0 & 0 & \varphi_n \end{bmatrix}$$

the precoding matrix $W=W_{33}W_{34}$ and , where , $\varphi_m =$

$$W_{34}=\alpha_{17} \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$\theta = 0, \pm\frac{\pi}{16}, \pm\frac{\pi}{8}, \pm\frac{\pi}{4}, \cdots$$

$e^{j\theta_1}$, $\varphi_n = e^{j\theta_2}$, $\theta_1, \theta_2 \in [0, 2\pi]$, for example, ; and , where $\alpha_{17}$ is a scale factor.

Optionally, as an embodiment, the number of reference signal ports in step 1320 is 4, and in the rank-4 codebook,

$$W_{35}= \begin{bmatrix} \mathbf{X} & \mathbf{0}_{2\times4} \\ \mathbf{0}_{2\times4} & \mathbf{X} \end{bmatrix}$$

the precoding matrix $W=W_{35}W_{36}$ and , where

$$\mathbf{X} = \mathbf{A} \cdot \begin{bmatrix} 1 & 1 & 1 & 1 \\ 1 & e^{j\frac{\pi}{2}} & e^{j\pi} & e^{j\frac{3\pi}{2}} \end{bmatrix}, \qquad \mathbf{A} = \begin{bmatrix} 1 & 0 \\ 0 & \varphi_n \end{bmatrix}$$

, $\varphi_n = e^{j\theta}$, $\theta \in [0, 2\pi]$, for example,

$$\theta = 0, \pm\frac{\pi}{16}, \pm\frac{\pi}{8}, \pm\frac{\pi}{4}, \cdots$$

, and $\mathbf{0}_{2\times4}$ is an all-zero matrix of two rows and four columns; and

$$W_{36}=\alpha_{18} \begin{bmatrix} \mathbf{Y_1} & \mathbf{0}_{4\times2} \\ \mathbf{0}_{4\times2} & \mathbf{Y_2} \end{bmatrix}$$

, where $(\mathbf{Y}_1, \mathbf{Y}_2)$ may be a matrix group in a twenty-seventh set, the twenty-seventh set

$$\left( \begin{bmatrix} 1 & 0 \\ 0 & 0 \\ 0 & 1 \\ 0 & 0 \end{bmatrix} \begin{bmatrix} 1 & 0 \\ 0 & 0 \\ 0 & 1 \\ 0 & 0 \end{bmatrix} \right)$$

includes at least one of the following matrix groups: ,

$$\left( \begin{bmatrix} 1 & 0 \\ 0 & 0 \\ 0 & 1 \\ 0 & 0 \end{bmatrix} \begin{bmatrix} 0 & 0 \\ 1 & 0 \\ 0 & 0 \\ 0 & 1 \end{bmatrix} \right), \left( \begin{bmatrix} 0 & 0 \\ 1 & 0 \\ 0 & 0 \\ 0 & 1 \end{bmatrix} \begin{bmatrix} 1 & 0 \\ 0 & 0 \\ 0 & 1 \\ 0 & 0 \end{bmatrix} \right), \left( \begin{bmatrix} 0 & 0 \\ 1 & 0 \\ 0 & 0 \\ 0 & 1 \end{bmatrix} \begin{bmatrix} 1 & 0 \\ 0 & 0 \\ 0 & 1 \\ 0 & 0 \end{bmatrix} \right)$$

, and , and $\mathbf{0}_{4\times2}$ is an all-zero matrix of four rows and two columns and $\alpha_{18}$ is scale factor.

Optionally, as an embodiment, the number of reference signal ports in step 1320 is 4, and in the rank-4 codebook,

$$W_{37}= \begin{bmatrix} \mathbf{X} & \mathbf{0}_{2\times2} \\ \mathbf{0}_{2\times2} & \mathbf{X} \end{bmatrix} \qquad \mathbf{X} = \mathbf{A} \cdot \begin{bmatrix} 1 & 1 \\ 1 & -1 \end{bmatrix}, \qquad \mathbf{A} = \begin{bmatrix} 1 & 0 \\ 0 & \varphi_n \end{bmatrix}$$

the precoding matrix $W=W_{37}W_{38}$ and , where , $\varphi_n =$

$$\theta = 0, \pm\frac{\pi}{16}, \pm\frac{\pi}{8}, \pm\frac{\pi}{4}, \cdots$$

$e^{j\theta}$, $\theta \in [0, 2\pi]$, for example , and $\mathbf{0}_{2\times2}$ is an all-zero matrix of two rows and two columns;

$$W_{38} = \alpha_{19}\begin{bmatrix} \mathbf{Y_1} & \mathbf{0}_{2\times2} \\ \mathbf{0}_{2\times2} & \mathbf{Y_2} \end{bmatrix}$$

and , where $(\mathbf{Y_1}, \mathbf{Y_2})$ may be $\left(\begin{bmatrix} 1 & 0 \\ 0 & 1 \end{bmatrix}, \begin{bmatrix} 1 & 0 \\ 0 & 1 \end{bmatrix}\right)$ and $\alpha_{19}$ is a scale factor.

Optionally, as an embodiment, the number of reference signal ports in step 1320 is 4, and in the rank-4 codebook,

$$W_{39} = \begin{bmatrix} \mathbf{X} & \mathbf{0}_{2\times2} \\ \mathbf{0}_{2\times2} & \mathbf{X} \end{bmatrix}$$

the precoding matrix $W=W_{39}W_{40}$ and , where $\mathbf{X} = \mathbf{A}\cdot\begin{bmatrix} 1 & 0 \\ 0 & 1 \end{bmatrix}$, $\mathbf{A} = \begin{bmatrix} 1 & 0 \\ 0 & \varphi_n \end{bmatrix}$, $\varphi_n = $

$$\theta = 0, \pm\frac{\pi}{16}, \pm\frac{\pi}{8}, \pm\frac{\pi}{4}, \cdots$$

$e^{j\theta}$, $\theta \in [0, 2\pi]$, for example , and $\mathbf{0}_{2\times2}$ is an all-zero matrix of two rows and two columns;

$$W_{40} = \alpha_{20}\begin{bmatrix} \mathbf{Y_1} & \mathbf{0}_{2\times2} \\ \mathbf{0}_{2\times2} & \mathbf{Y_2} \end{bmatrix}$$

and , where $(\mathbf{Y_1}, \mathbf{Y_2})$ may be $\left(\begin{bmatrix} 1 & 0 \\ 0 & 1 \end{bmatrix}, \begin{bmatrix} 1 & 0 \\ 0 & 1 \end{bmatrix}\right)$ and $\alpha_{20}$ is a scale factor.

Optionally, as an embodiment, the precoding matrix $W=W_kW_t$, where k is an odd number, t is an even number, and $W_k$ is used to indicate broadband channel state information and $W_t$ is used to indicate narrowband channel state information, or, $W_k$ is used to indicate long-term channel state information and Wt is used to indicate short-term channel state information.

Optionally, as another embodiment, based on the reference signal, after selecting a precoding matrix W from a codebook, the method may further include implementing row replacement or column replacement on the precoding matrix W according to an antenna code.

It should be noted that, the codebook in this embodiment of the present invention may be various combinations of the rank-1 codebook, rank-2 codebook, rank-3 codebook, and rank-2 codebook, or may be formed by the codebooks and other codebooks by means of power configuration, where the rank-1 codebook may be formed by the precoding matrix W in the rank-1 codebook mentioned in part of or all the foregoing specific embodiments, the rank-2 codebook may be formed by the precoding matrix W in the rank-2 codebook mentioned in part of or all the foregoing specific embodiments, the rank-3 codebook may be formed by the precoding matrix W in the rank-3 codebook mentioned in part of or all the foregoing specific embodiments, and the rank-4 codebook may be formed by the precoding matrix W in the rank-4 codebook mentioned in part of or all the foregoing specific embodiments.

In step 1320, the selecting a precoding matrix from a codebook based on the reference signal may include: acquiring, by a UE based on the reference signal, channel estimation; and then, selecting according to the channel estimation and based on a predefined criterion (such as a criterion of channel capacity/throughput maximization or a criterion of chordal distance minimization).

It should be understood that, selecting a precoding matrix from a codebook may refer to selecting the precoding matrix from a codebook subset. For example, the codebook includes the rank-1 codebook, rank-2 codebook, rank-3 codebook, and rank-4 codebook. Each of the rank-n codebooks is a subset of the codebook. The codebook subset may be predefined, or be reported by the UE to the base station, determined by the base station according to the reported information of the UE, and notified to the UE, or be a codebook subset determined and reported by the UE, for example, a codebook subset reported recently.

In step 1320, the reference signal may refer to a CSI RS, a DM RS, or a CRS. A UE may acquire the reference signal according to a reference signal resource.

Specifically, in step 1330, the PMI is used to indicate the precoding matrix selected from a codebook (precoding matrix set), where the PMI has different time domains or frequency domain granularities, or is acquired based on different subframe periods or subband sizes.

Specifically, in step 1330, the PMI may be sent by the UE by using a PUCCH or PUSCH to the base station.

It should be noted that, in this embodiment, the precoding matrix W may be a precoding matrix after row or column replacement. For example, row replacement of the precoding matrix W may be caused by a change or inversion of an antenna code.

With reference to FIG. 13, a CSI reporting method according to an embodiment of the present invention is described above in detail from the perspective of a UE. With reference to FIG. 14, the following describes a CSI reporting method according to an embodiment of the present invention from the perspective of a base station.

It should be understood that, illustration on the base station side, including interaction between a UE and a base station, and related features and functions is corresponding to illustration on the UE side. For conciseness, details are not described herein again.

FIG. 14 is a CSI reporting method according to an embodiment of the present invention. The method in FIG. 14 is implemented by a base station, such as an eNodeB.

1410. Send a reference signal to a UE;

1420. Receive CSI sent by the UE, where the CSI includes a precoding matrix indicator PMI;

1430. Select a precoding matrix W from a codebook according to the PMI, where the precoding matrix W is corresponding to the PMI;

1440. Send information to the UE according to the precoding matrix W.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

It should be noted that, in step 1440, the sending information to the UE according to the precoding matrix W may refer to: implementing channel encoding for the information source to be sent to the UE to form code words, then implementing modulation for different code words to generate modulation symbols, then implementing layer mapping for different modulation symbols, after layer mapping, implementing data precoding (that is, multiplied by a precoding matrix) to map the precoded data to antenna ports for transmission; and

Optionally, as an embodiment, the codebook may include various combinations of a rank-1 codebook, a rank-2 codebook, a rank-3 codebook, and a rank-4 codebook, and the precoding matrix W may be selected by the UE from any one of the foregoing codebooks based on the reference signal. The specific form of the precoding matrix W in the rank-1 codebook, rank-2 codebook, rank-3 codebook, and rank-4 codebook is illustrated in the description of the UE side in FIG. 13. For conciseness, details are not described herein again.

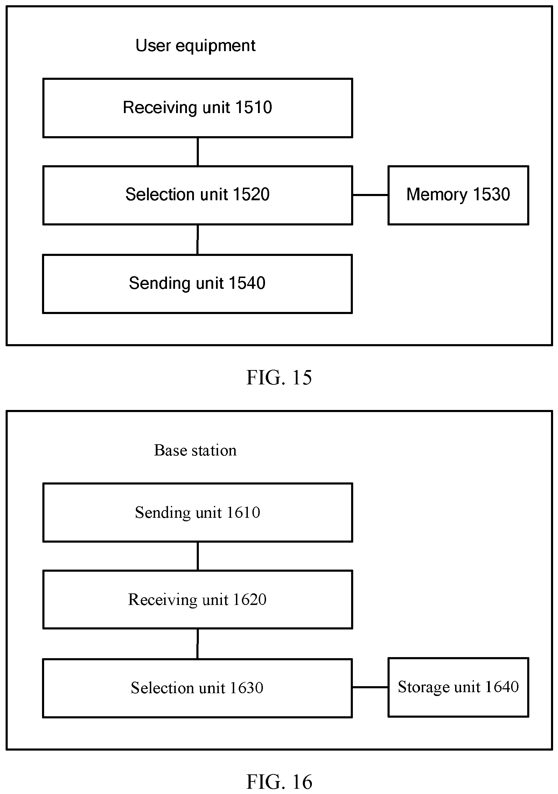

With reference to FIG. 13 to FIG. 14, the foregoing describes in detail a CSI reporting method according to the embodiments of the present invention. With reference to FIG. 15 to FIG. 18, the following describes a user equipment and a base station according to the embodiments of the present invention.

FIG. 15 is a block diagram of a user equipment according to an embodiment of the present invention. The user equipment includes a receiving unit 1510, a selection unit 1520, a storage unit 1530, and a sending unit 1540. It should be understood that, the user equipment in FIG. 15 can implement the steps implemented by the user equipment in FIG. 13. For conciseness, details are not described herein again.

The receiving unit 1510 is configured to receive a reference signal sent by a base station.

The selection unit 1520 is configured to select, based on the reference signal, a precoding matrix W from a codebook stored in the storage unit 1530.

The sending unit 1540 is configured to send CSI to the base station, where the CSI includes a precoding matrix indicator PMI and the PMI is corresponding to the selected precoding matrix W.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the user equipment further includes a replacement unit, configured to implement, according to an antenna code, row replacement or column replacement on the precoding matrix W.

FIG. 16 is a block diagram of a base station according to an embodiment of the present invention. The base station includes a sending unit 1610, a receiving unit 1620, a selection unit 1630, and a storage unit 1640. It should be understood that, the user equipment in FIG. 16 can implement the steps implemented by the base station in FIG. 14. For conciseness, details are not described herein. again

The sending unit 1610 is configured to send a reference signal to a UE;

The receiving unit 1620 is configured to receive CSI sent by the UE, where the CSI includes a precoding matrix indicator PMI;

The selection unit 1630 is configured to select, according to the PMI, a precoding matrix W from a codebook stored in the storage unit 1640, where the precoding matrix W is corresponding to the PMI; and

The sending unit 1610 is configured to send information to the UE according to the precoding matrix W.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the base station further includes a replacement unit, configured to implement, according to an antenna code, row replacement or column replacement on the precoding matrix W.

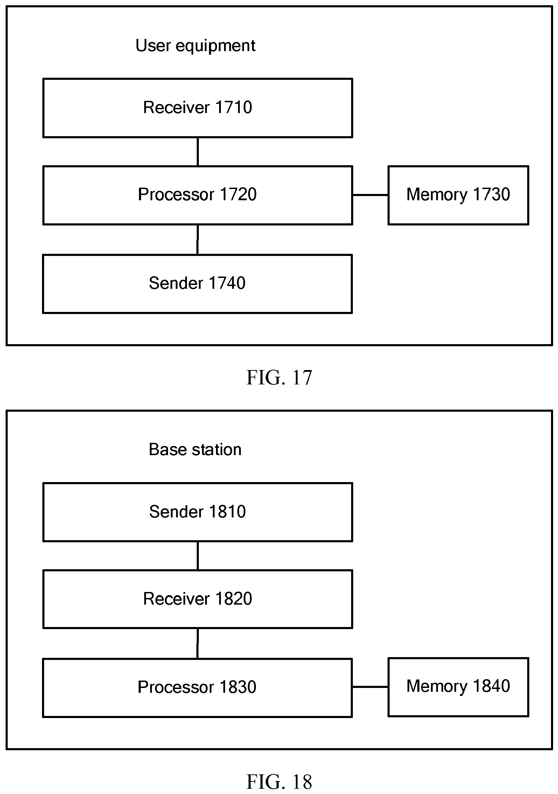

FIG. 17 is a block diagram of a user equipment according to another embodiment of the present invention. The user equipment includes a receiver 1710, a processor 1720, a memory 1730, and a sender 1740. It should be understood that, the user equipment in FIG. 17 can implement the steps implemented by the user equipment in FIG. 13. For conciseness, details are not described herein again.

The receiver 1710 is configured to receive a reference signal sent by a base station.

The processor 1720 is configured to select, based on the reference signal, a precoding matrix W from a codebook stored in the memory 1730, where $W=W_1W_2$.

The sender 1740 is configured to send CSI to the base station, where the CSI includes a precoding matrix indicator PMI and the PMI is corresponding to the selected precoding matrix. In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the processor 1720 is configured to further implement, according to an antenna code, row replacement or column replacement on the precoding matrix W.

FIG. 18 is a block diagram of a base station according to an embodiment of the present invention. The base station includes a sender 1810, a receiver 1820, a processor 1830, and a memory 1840. It should be understood that, the user equipment in FIG. 18 can implement the steps implemented by the base station in FIG. 14. For conciseness, details are not described herein again.

The sender 1810 is configured to send a reference signal to a UE.

The receiver 1820 is configured to receive CSI sent by the UE, where the CSI includes a precoding matrix indicator PMI.

The processor 1830 is configured to select, according to the PMI, a precoding matrix W from a codebook stored in the memory 1840, where the precoding matrix W is corresponding to the PMI and $W=W_1W_2$;

The sending unit 1810 is configured to send information to the UE according to the precoding matrix W.

In this embodiment of the present invention, by means of codebook structure adjustment, a suitable precoding matrix can be selected according to an interference situation, so as to select an antenna for transmitting data and power of the antenna to reduce the amount of scheduling resources wasted due to interference control by a base station.

Optionally, the processor 1830 is configured to further implement, according to an antenna code, row replacement or column replacement on the precoding matrix W.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A channel state information, CSI, reporting method, **characterized by** comprising:

receiving (301), by a user equipment from a base station, CSI process configuration information, wherein the CSI process configuration information includes configuration information for at least two CSI processes, and each CSI process is associated with both one reference signal resource and one or more interference measurement resources;

selecting (302), by the user equipment for each CSI process, a precoding matrix from a codebook based on the reference signal resource and interference measurement resources associated with each CSI process, wherein the codebook comprises a first codebook and a second codebook, a first CSI process among the at least two CSI processes is corresponding to the first codebook, a second CSI process among the at least two CSI processes is corresponding to the second codebook, a precoding matrix in the first codebook is a precoding matrix W, a precoding matrix in the second codebook is a precoding matrix different from the precoding matrix W, and W=$\alpha$SV, wherein a matrix V is an N$\times v$ matrix, N is the number of reference signal ports, $v \leq$ N, S is a row selection matrix used to select one or more row vectors from the matrix V, $\alpha$ is a constant, and both the number of reference signal ports that is associated with the first CSI process and the number of reference signal ports that is associated with the second CSI process is 4; and

sending (303), by the user equipment, CSI corresponding to each CSI process to the base station, wherein the CSI includes a precoding matrix indicator, PMI, and the PMI is corresponding to the selected precoding matrix; wherein the matrix V is a precoding matrix in a codebook

$$\left\{ \mathbf{V} = \frac{1}{2}\begin{bmatrix} 1 & 1 & 1 & 1 \end{bmatrix}^{T} \right. ;$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\} ;$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\} ;$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\} ;$$

$$\mathbf{V} \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$

$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$\mathbf{V} \in \left\{ \frac{1}{\sqrt{3}}\begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}}\begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$

$$\left. \frac{1}{\sqrt{3}}\begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

wherein the precoding matrix in the second codebook is a precoding matrix P and $P=\beta U$, wherein a matrix U is an $N\times u$ matrix, $u \leq N$, $\beta$ is a constant, a value of $\beta$ enables P and W to satisfy $\|P\|_F = \|W\|_F$, and $\|\|_F$ is a matrix Frobenius norm;

wherein, the matrix $\beta U$ is a precoding matrix in a codebook

$$\left\{ \beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix} \right\};$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix};$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}\}.$$

**2.** The method according to claim 1, wherein the precoding matrix W in the first codebook is at least one of the following matrices:

$$\frac{1}{2}\begin{bmatrix}1\\1\\0\\0\end{bmatrix}, \ \frac{1}{2}\begin{bmatrix}0\\0\\1\\1\end{bmatrix}, \ \frac{1}{2}\begin{bmatrix}1\\-1\\0\\0\end{bmatrix}, \ \frac{1}{2}\begin{bmatrix}0\\0\\1\\-1\end{bmatrix}, \ \frac{1}{2}\begin{bmatrix}1\\j\\0\\0\end{bmatrix}, \ \frac{1}{2}\begin{bmatrix}0\\0\\1\\j\end{bmatrix}, \ \frac{1}{2}\begin{bmatrix}1\\-j\\0\\0\end{bmatrix}, \text{and} \ \frac{1}{2}\begin{bmatrix}0\\0\\1\\-j\end{bmatrix};$$

the precoding matrix P in the second codebook is at least one of the following matrices:

$$\beta \cdot \frac{1}{2}\begin{bmatrix}1 & 0\\1 & 0\\0 & 1\\0 & 1\end{bmatrix}, \ \beta \cdot \frac{1}{2}\begin{bmatrix}1 & 0\\1 & 0\\0 & 1\\0 & -1\end{bmatrix}, \ \beta \cdot \frac{1}{2}\begin{bmatrix}1 & 0\\1 & 0\\0 & 1\\0 & j\end{bmatrix}, \ \beta \cdot \frac{1}{2}\begin{bmatrix}1 & 0\\1 & 0\\0 & 1\\0 & -j\end{bmatrix},$$

$$\beta \cdot \frac{1}{2}\begin{bmatrix}1 & 0\\-1 & 0\\0 & 1\\0 & 1\end{bmatrix}, \ \beta \cdot \frac{1}{2}\begin{bmatrix}1 & 0\\-1 & 0\\0 & 1\\0 & -1\end{bmatrix}, \ \beta \cdot \frac{1}{2}\begin{bmatrix}1 & 0\\-1 & 0\\0 & 1\\0 & j\end{bmatrix}, \ \beta \cdot \frac{1}{2}\begin{bmatrix}1 & 0\\-1 & 0\\0 & 1\\0 & -j\end{bmatrix},$$

$$\beta \cdot \frac{1}{2}\begin{bmatrix}1 & 0\\j & 0\\0 & 1\\0 & 1\end{bmatrix}, \ \beta \cdot \frac{1}{2}\begin{bmatrix}1 & 0\\j & 0\\0 & 1\\0 & -1\end{bmatrix}, \ \beta \cdot \frac{1}{2}\begin{bmatrix}1 & 0\\j & 0\\0 & 1\\0 & j\end{bmatrix}, \ \beta \cdot \frac{1}{2}\begin{bmatrix}1 & 0\\j & 0\\0 & 1\\0 & -j\end{bmatrix},$$

$$\beta \cdot \frac{1}{2}\begin{bmatrix}1 & 0\\-j & 0\\0 & 1\\0 & 1\end{bmatrix}, \ \beta \cdot \frac{1}{2}\begin{bmatrix}1 & 0\\-j & 0\\0 & 1\\0 & -1\end{bmatrix}, \ \beta \cdot \frac{1}{2}\begin{bmatrix}1 & 0\\-j & 0\\0 & 1\\0 & j\end{bmatrix}, \text{and} \ \beta \cdot \frac{1}{2}\begin{bmatrix}1 & 0\\-j & 0\\0 & 1\\0 & -j\end{bmatrix}.$$

3. A channel state information, CSI, receiving method, **characterized by** comprising:

sending (401), by a base station to a user equipment (UE), CSI process configuration information, wherein the CSI process configuration information includes configuration information for at least two CSI processes, each CSI process is associated with both one reference signal resource and one or more interference measurement resources, and the one reference signal resource and one or more interference measurement resources are used for selecting a precoding matrix from a codebook for an associated CSI process, the codebook includes a precoding matrix W and W=αSV, the codebook comprises a first codebook and a second codebook, a first CSI process among the at least two CSI processes is corresponding to the first codebook, a second CSI process among the at least two CSI processes is corresponding to the second codebook, a precoding matrix in the first codebook is the precoding matrix W, and a precoding matrix in the second codebook is a precoding matrix different from the precoding matrix W; and

receiving (402), by the base station from the UE, CSI that is corresponding to each CSI process, wherein the CSI includes a precoding matrix indicator, PMI, the PMI is corresponding to the selected precoding matrix, wherein a matrix V is an N×v matrix, N is the number of reference signal ports, v ≤ N, S is a row selection matrix used to select one or more row vectors from the matrix V, α is a constant, and both the number of reference signal ports that is associated with the first CSI process and the number of reference signal ports that is associated with the second CSI process is 4;

wherein the matrix V is a precoding matrix in a codebook

$$\left\{ \mathbf{V} = \frac{1}{2}\begin{bmatrix} 1 & 1 & 1 & 1 \end{bmatrix}^{T} \right\};$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\};$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\};$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$\mathbf{V} \in \left\{ \begin{array}{l} \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \\ \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \end{array} \right\};$$

$$\mathbf{V} \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$

$$\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

wherein the precoding matrix in the second codebook is precoding matrix P and P=βU, wherein a matrix U is an N×u matrix, u ≤ N, β is a constant, a value of β enables P and W to satisfy $\|P\|_F = \|W\|_F$, and $\|\|_F$ is a matrix Frobenius norm;

wherein, the matrix βU is a precoding matrix in a codebook

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};$$

$$\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};$$

$$\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};$$

$$\beta \cdot \frac{1}{2} \begin{bmatrix} 1 & 0 \\ -j & 0 \\ 0 & 1 \\ 0 & 1 \end{bmatrix}, \beta \cdot \frac{1}{2} \begin{bmatrix} 1 & 0 \\ -j & 0 \\ 0 & 1 \\ 0 & -1 \end{bmatrix}, \beta \cdot \frac{1}{2} \begin{bmatrix} 1 & 0 \\ -j & 0 \\ 0 & 1 \\ 0 & j \end{bmatrix}, \beta \cdot \frac{1}{2} \begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}\}.$$

4.  The method according to claim 3, wherein the precoding matrix W in the first codebook is at least one of the following matrices:

$$\frac{1}{2}\begin{bmatrix} 1 \\ 1 \\ 0 \\ 0 \end{bmatrix}, \frac{1}{2}\begin{bmatrix} 0 \\ 0 \\ 1 \\ 1 \end{bmatrix}, \frac{1}{2}\begin{bmatrix} 1 \\ -1 \\ 0 \\ 0 \end{bmatrix}, \frac{1}{2}\begin{bmatrix} 0 \\ 0 \\ 1 \\ -1 \end{bmatrix}, \frac{1}{2}\begin{bmatrix} 1 \\ j \\ 0 \\ 0 \end{bmatrix}, \frac{1}{2}\begin{bmatrix} 0 \\ 0 \\ 1 \\ j \end{bmatrix}, \frac{1}{2}\begin{bmatrix} 1 \\ -j \\ 0 \\ 0 \end{bmatrix}, \text{ and } \frac{1}{2}\begin{bmatrix} 0 \\ 0 \\ 1 \\ -j \end{bmatrix};$$

the precoding matrix P in the second codebook is at least one of the following matrices:

$$\beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2} \begin{bmatrix} 1 & 0 \\ -1 & 0 \\ 0 & 1 \\ 0 & 1 \end{bmatrix}, \quad \beta \cdot \frac{1}{2} \begin{bmatrix} 1 & 0 \\ -1 & 0 \\ 0 & 1 \\ 0 & -1 \end{bmatrix}, \quad \beta \cdot \frac{1}{2} \begin{bmatrix} 1 & 0 \\ -1 & 0 \\ 0 & 1 \\ 0 & j \end{bmatrix}, \quad \beta \cdot \frac{1}{2} \begin{bmatrix} 1 & 0 \\ -1 & 0 \\ 0 & 1 \\ 0 & -j \end{bmatrix},$$

$$\beta \cdot \frac{1}{2} \begin{bmatrix} 1 & 0 \\ j & 0 \\ 0 & 1 \\ 0 & 1 \end{bmatrix}, \quad \beta \cdot \frac{1}{2} \begin{bmatrix} 1 & 0 \\ j & 0 \\ 0 & 1 \\ 0 & -1 \end{bmatrix}, \quad \beta \cdot \frac{1}{2} \begin{bmatrix} 1 & 0 \\ j & 0 \\ 0 & 1 \\ 0 & j \end{bmatrix}, \quad \beta \cdot \frac{1}{2} \begin{bmatrix} 1 & 0 \\ j & 0 \\ 0 & 1 \\ 0 & -j \end{bmatrix},$$

$$\beta \cdot \frac{1}{2} \begin{bmatrix} 1 & 0 \\ -j & 0 \\ 0 & 1 \\ 0 & 1 \end{bmatrix}, \quad \beta \cdot \frac{1}{2} \begin{bmatrix} 1 & 0 \\ -j & 0 \\ 0 & 1 \\ 0 & -1 \end{bmatrix}, \quad \beta \cdot \frac{1}{2} \begin{bmatrix} 1 & 0 \\ -j & 0 \\ 0 & 1 \\ 0 & j \end{bmatrix}, \text{ and } \beta \cdot \frac{1}{2} \begin{bmatrix} 1 & 0 \\ -j & 0 \\ 0 & 1 \\ 0 & -j \end{bmatrix}.$$

5. A user equipment, **characterized by** comprising:

a receiving unit (701), configured to receive, from a base station, channel state information, CSI, process configuration information, wherein the CSI process configuration information includes configuration information for at least two CSI processes, and each CSI process is associated with both one reference signal resource and one or more interference measurement resources;

a storage unit (702), configured to store a codebook, wherein the codebook comprises a first codebook and a second codebook;

a selection unit (703), configured to select, based on the reference signal resource and interference measurement resources associated with each CSI process, a precoding matrix from the codebook stored in the storage unit (702), wherein a first CSI process among the at least two CSI processes is corresponding to the first codebook, a second CSI process among the at least two CSI processes is corresponding to the second codebook, a precoding matrix in the first codebook is a precoding matrix W, a precoding matrix in the second codebook is a precoding matrix different from the precoding matrix W, and W=αSV, wherein a matrix V is an N×ν matrix, N is the number of reference signal ports, $\nu \leq N$, S is a row selection matrix used to select one or more row vectors from the matrix V, α is a constant, and both the number of reference signal ports that is associated with the first CSI process and the number of reference signal ports that is associated with the second CSI process is 4; and

a sending unit (704), configured to send, to the base station, CSI corresponding to each CSI process, wherein the CSI includes a precoding matrix indicator, PMI, and the PMI is corresponding to the selected precoding matrix;

wherein the matrix V is a precoding matrix in a codebook

$$\left\{ \mathbf{V} = \frac{1}{2} \begin{bmatrix} 1 & 1 & 1 & 1 \end{bmatrix}^T \right. ;$$

$$\mathbf{V} \in \left\{ \frac{1}{2} \begin{bmatrix} 1 & 1 & e^{j\theta} & e^{j\theta} \end{bmatrix}^T, \frac{1}{2} \begin{bmatrix} 1 & 1 & -e^{j\theta} & -e^{j\theta} \end{bmatrix}^T \right\} ;$$

$$\mathbf{V} \in \left\{ \frac{1}{\sqrt{8}} \begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}} \begin{bmatrix} 1 & 1 \\ 1 & 1 \\ e^{j\theta} & -e^{j\theta} \\ e^{j\theta} & -e^{j\theta} \end{bmatrix} \right\} ;$$

$$\mathbf{V} \in \left\{ \frac{1}{2} \begin{bmatrix} 1 & 0 \\ e^{j\theta} & 0 \\ 0 & 1 \\ 0 & e^{j\theta} \end{bmatrix}, \frac{1}{2} \begin{bmatrix} 1 & 0 \\ 0 & 1 \\ e^{j\theta} & 0 \\ 0 & e^{j\theta} \end{bmatrix} \right\} ;$$

$$\mathbf{V} \in \left\{ \frac{1}{\sqrt{6}} \begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}} \begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}} \begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}} \begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 1 \\ 1 & 1 & 0 \\ e^{j\theta} & -e^{j\theta} & 0 \end{bmatrix} \right\} ;$$

$$\mathbf{V} \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$
$$\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\} ;$$

wherein the precoding matrix in the second codebook stored in the storage unit (703) is a precoding matrix P and P=βU, wherein a matrix U is an N×u matrix, u ≤ N, β is a constant, a value of β enables P and W to satisfy $\|P\|_F = \|W\|_F$, and $\|\cdot\|_F$ is a matrix Frobenius norm;

wherein, the matrix βU is a precoding matrix in a codebook

$$\left\{\beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix}\right\};$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix};$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \Big\}.$$

6. The user equipment according to claim 5, wherein the precoding matrix W in the first codebook stored in the storage unit (702) is at least one of the following matrices:

$$\frac{1}{2}\begin{bmatrix}1\\1\\0\\0\end{bmatrix}, \ \frac{1}{2}\begin{bmatrix}0\\0\\1\\1\end{bmatrix}, \ \frac{1}{2}\begin{bmatrix}1\\-1\\0\\0\end{bmatrix}, \ \frac{1}{2}\begin{bmatrix}0\\0\\1\\-1\end{bmatrix}, \ \frac{1}{2}\begin{bmatrix}1\\j\\0\\0\end{bmatrix}, \ \frac{1}{2}\begin{bmatrix}0\\0\\1\\j\end{bmatrix}, \ \frac{1}{2}\begin{bmatrix}1\\-j\\0\\0\end{bmatrix}, \ \text{and} \ \frac{1}{2}\begin{bmatrix}0\\0\\1\\-j\end{bmatrix};$$

the precoding matrix P in the second codebook stored in the storage unit (702) is at least one of the following matrices:

$$\beta \cdot \frac{1}{2}\begin{bmatrix}1&0\\1&0\\0&1\\0&1\end{bmatrix}, \ \beta \cdot \frac{1}{2}\begin{bmatrix}1&0\\1&0\\0&1\\0&-1\end{bmatrix}, \ \beta \cdot \frac{1}{2}\begin{bmatrix}1&0\\1&0\\0&1\\0&j\end{bmatrix}, \ \beta \cdot \frac{1}{2}\begin{bmatrix}1&0\\1&0\\0&1\\0&-j\end{bmatrix},$$

$$\beta \cdot \frac{1}{2}\begin{bmatrix}1&0\\-1&0\\0&1\\0&1\end{bmatrix}, \ \beta \cdot \frac{1}{2}\begin{bmatrix}1&0\\-1&0\\0&1\\0&-1\end{bmatrix}, \ \beta \cdot \frac{1}{2}\begin{bmatrix}1&0\\-1&0\\0&1\\0&j\end{bmatrix}, \ \beta \cdot \frac{1}{2}\begin{bmatrix}1&0\\-1&0\\0&1\\0&-j\end{bmatrix},$$

$$\beta \cdot \frac{1}{2}\begin{bmatrix}1&0\\j&0\\0&1\\0&1\end{bmatrix}, \ \beta \cdot \frac{1}{2}\begin{bmatrix}1&0\\j&0\\0&1\\0&-1\end{bmatrix}, \ \beta \cdot \frac{1}{2}\begin{bmatrix}1&0\\j&0\\0&1\\0&j\end{bmatrix}, \ \beta \cdot \frac{1}{2}\begin{bmatrix}1&0\\j&0\\0&1\\0&-j\end{bmatrix},$$

$$\beta \cdot \frac{1}{2}\begin{bmatrix}1&0\\-j&0\\0&1\\0&1\end{bmatrix}, \ \beta \cdot \frac{1}{2}\begin{bmatrix}1&0\\-j&0\\0&1\\0&-1\end{bmatrix}, \ \beta \cdot \frac{1}{2}\begin{bmatrix}1&0\\-j&0\\0&1\\0&j\end{bmatrix}, \ \text{and} \ \beta \cdot \frac{1}{2}\begin{bmatrix}1&0\\-j&0\\0&1\\0&-j\end{bmatrix}.$$

7. A base station, **characterized by** comprising:

a sending unit (801), configured to send, to a user equipment, UE, channel state information, CSI, process configuration information, wherein the CSI process configuration information includes configuration information for at least two CSI processes, each CSI process is associated with both one reference signal resource and one or more interference measurement resources, and the one reference signal resource and one or more interference measurement resources are used for selecting a precoding matrix from a codebook for an associated CSI process, the codebook comprises a first codebook and a second codebook, the first codebook includes a precoding matrix W and W=$\alpha$SV, a first CSI process among the at least two CSI processes is corresponding to the first codebook, a second CSI process among the at least two CSI processes is corresponding to the second codebook, and a precoding matrix in the second codebook is a precoding matrix different from the precoding matrix W; and

a receiving unit (802), configured to receive, from the UE, CSI that is corresponding to each CSI process, wherein the CSI includes a precoding matrix indicator, PMI, the PMI is corresponding to the selected precoding matrix,

wherein a matrix V is an N×$\nu$ matrix, N is the number of reference signal ports, $\nu \leq$ N, S is a row selection matrix used to select one or more row vectors from the matrix V, $\alpha$ is a constant, and both the number of reference signal ports that is associated with the first CSI process and the number of reference signal ports that is associated with the second CSI process is 4;

wherein the matrix V is a precoding matrix

$$\left\{ \mathbf{V} = \frac{1}{2}\begin{bmatrix} 1 & 1 & 1 & 1 \end{bmatrix}^{T} \right. ;$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\} ;$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\} ;$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\} ;$$

$$\mathbf{V} \in \left\{ \begin{array}{l} \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \\ \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \end{array} \right\} ;$$

$$
\mathbf{V} \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.
$$

$$
\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};
$$

wherein the precoding matrix in the second codebook is a precoding matrix P and P=βU, wherein a matrix U is an N×u matrix, u ≤ N, β is a constant, a value of β enables P and W to satisfy $\|P\|_F = \|W\|_F$, and $\|\|_F$ is a matrix Frobenius norm;

wherein, the matrix βU is a precoding matrix in a codebook

$$
\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};
$$

$$
\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};
$$

$$
\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};
$$

$$
\beta \cdot \frac{1}{2} \begin{bmatrix} 1 & 0 \\ -j & 0 \\ 0 & 1 \\ 0 & 1 \end{bmatrix}, \beta \cdot \frac{1}{2} \begin{bmatrix} 1 & 0 \\ -j & 0 \\ 0 & 1 \\ 0 & -1 \end{bmatrix}, \beta \cdot \frac{1}{2} \begin{bmatrix} 1 & 0 \\ -j & 0 \\ 0 & 1 \\ 0 & j \end{bmatrix}, \beta \cdot \frac{1}{2} \begin{bmatrix} 1 & 0 \\ -j & 0 \\ 0 & 1 \\ 0 & -j \end{bmatrix};
$$

$$\beta \cdot \frac{1}{\sqrt{6}} \begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}} \begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}} \begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}} \begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \}.$$

8. The base station according to claim 7, wherein the precoding matrix W in the first codebook is at least one of the following matrices:

$$\frac{1}{2} \begin{bmatrix} 1 \\ 1 \\ 0 \\ 0 \end{bmatrix}, \frac{1}{2} \begin{bmatrix} 0 \\ 0 \\ 1 \\ 1 \end{bmatrix}, \frac{1}{2} \begin{bmatrix} 1 \\ -1 \\ 0 \\ 0 \end{bmatrix}, \frac{1}{2} \begin{bmatrix} 0 \\ 0 \\ 1 \\ -1 \end{bmatrix}, \frac{1}{2} \begin{bmatrix} 1 \\ j \\ 0 \\ 0 \end{bmatrix}, \frac{1}{2} \begin{bmatrix} 0 \\ 0 \\ 1 \\ j \end{bmatrix}, \frac{1}{2} \begin{bmatrix} 1 \\ -j \\ 0 \\ 0 \end{bmatrix}, \text{ and } \frac{1}{2} \begin{bmatrix} 0 \\ 0 \\ 1 \\ -j \end{bmatrix};$$

the precoding matrix P in the second codebook is at least one of the following matrices:

$$\beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix},$$

$$\beta \cdot \frac{1}{2}\begin{bmatrix} 1 & 0 \\ -1 & 0 \\ 0 & 1 \\ 0 & 1 \end{bmatrix}, \quad \beta \cdot \frac{1}{2}\begin{bmatrix} 1 & 0 \\ -1 & 0 \\ 0 & 1 \\ 0 & -1 \end{bmatrix}, \quad \beta \cdot \frac{1}{2}\begin{bmatrix} 1 & 0 \\ -1 & 0 \\ 0 & 1 \\ 0 & j \end{bmatrix}, \quad \beta \cdot \frac{1}{2}\begin{bmatrix} 1 & 0 \\ -1 & 0 \\ 0 & 1 \\ 0 & -j \end{bmatrix},$$

$$\beta \cdot \frac{1}{2}\begin{bmatrix} 1 & 0 \\ j & 0 \\ 0 & 1 \\ 0 & 1 \end{bmatrix}, \quad \beta \cdot \frac{1}{2}\begin{bmatrix} 1 & 0 \\ j & 0 \\ 0 & 1 \\ 0 & -1 \end{bmatrix}, \quad \beta \cdot \frac{1}{2}\begin{bmatrix} 1 & 0 \\ j & 0 \\ 0 & 1 \\ 0 & j \end{bmatrix}, \quad \beta \cdot \frac{1}{2}\begin{bmatrix} 1 & 0 \\ j & 0 \\ 0 & 1 \\ 0 & -j \end{bmatrix},$$

$$\beta \cdot \frac{1}{2}\begin{bmatrix} 1 & 0 \\ -j & 0 \\ 0 & 1 \\ 0 & 1 \end{bmatrix}, \quad \beta \cdot \frac{1}{2}\begin{bmatrix} 1 & 0 \\ -j & 0 \\ 0 & 1 \\ 0 & -1 \end{bmatrix}, \quad \beta \cdot \frac{1}{2}\begin{bmatrix} 1 & 0 \\ -j & 0 \\ 0 & 1 \\ 0 & j \end{bmatrix}, \text{ and } \beta \cdot \frac{1}{2}\begin{bmatrix} 1 & 0 \\ -j & 0 \\ 0 & 1 \\ 0 & -j \end{bmatrix}.$$

**Patentansprüche**

1. Verfahren zum Melden von Kanalzustandsinformationen, CSI, **dadurch gekennzeichnet, dass** es Folgendes umfasst:

Empfangen (301), durch ein Benutzergerät von einer Basisstation, von CSI-Prozesskonfigurationsinformationen, wobei die CSI-Prozesskonfigurationsinformationen Konfigurationsinformationen für mindestens zwei CSI-Prozesse enthalten und jeder CSI-Prozess sowohl einer Referenzsignalressource als auch einer oder mehreren Störungsmessungsressourcen zugeordnet ist;

Auswählen (302), durch das Benutzergerät für jeden CSI-Prozess, einer Vorkodierungsmatrix aus einem Codebuch auf Grundlage der Referenzsignalressource und Störungsmessungsressourcen, die jedem CSI-Prozess zugeordnet sind, wobei das Codebuch ein erstes Codebuch und ein zweites Codebuch umfasst, ein erster CSI-Prozess unter den mindestens zwei CSI-Prozessen dem ersten Codebuch entspricht, ein zweiter CSI-Prozess unter den mindestens zwei CSI-Prozessen dem zweiten Codebuch entspricht, eine Vorkodierungsmatrix in dem ersten Codebuch eine Vorkodierungsmatrix W ist, eine Vorkodierungsmatrix in dem zweiten Codebuch eine Vorkodierungsmatrix ist, die sich von der Vorkodierungsmatrix W und W = $\alpha$SV unterscheidet, wobei eine Matrix V eine N×v-Matrix ist, N die Anzahl der Referenzsignalanschlüsse ist, v $\leq$ N, S eine Zeilenauswahlmatrix ist, die verwendet wird, um einen oder mehrere Zeilenvektoren aus der Matrix V auszuwählen, $\alpha$ eine Konstante ist und sowohl die Anzahl der Referenzsignalanschlüsse, die dem ersten CSI-Prozess zugeordnet sind, als auch die Anzahl der Referenzsignalanschlüsse, die dem zweiten CSI-Prozess zugeordnet sind, 4 ist; und

Senden (303), durch das Benutzergerät, von CSI, die jedem CSI-Prozess entsprechen, an die Basisstation, wobei die CSI einen Vorkodierungsmatrixindikator, PMI, enthalten und der PMI der ausgewählten Vorkodierungsmatrix entspricht;

wobei die Matrix V eine Vorkodierungsmatrix in einem Codebuch ist

$$\mathbf{V} = \frac{1}{2}\begin{bmatrix} 1 & 1 & 1 & 1 \end{bmatrix}^T;$$

$$\mathbf{V} \in \left\{ \frac{1}{2}\begin{bmatrix} 1 & 1 & e^{j\theta} & e^{j\theta} \end{bmatrix}^T, \frac{1}{2}\begin{bmatrix} 1 & 1 & -e^{j\theta} & -e^{j\theta} \end{bmatrix}^T \right\};$$

$$\mathbf{V} \in \left\{ \frac{1}{\sqrt{8}} \begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}} \begin{bmatrix} 1 & 1 \\ 1 & 1 \\ e^{j\theta} & -e^{j\theta} \\ e^{j\theta} & -e^{j\theta} \end{bmatrix} \right\},$$

$$\mathbf{V} \in \left\{ \frac{1}{2} \begin{bmatrix} 1 & 0 \\ e^{j\theta} & 0 \\ 0 & 1 \\ 0 & e^{j\theta} \end{bmatrix}, \frac{1}{2} \begin{bmatrix} 1 & 0 \\ 0 & 1 \\ e^{j\theta} & 0 \\ 0 & e^{j\theta} \end{bmatrix} \right\},$$

$$\mathbf{V} \in \left\{ \begin{array}{l} \frac{1}{\sqrt{6}} \begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}} \begin{bmatrix} 1 & 1 & 0 \\ 0 & 0 & 1 \\ 0 & 0 & 1 \\ e^{j\theta} & -e^{j\theta} & 0 \end{bmatrix}, \\ \frac{1}{\sqrt{6}} \begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}} \begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 1 \\ 1 & 1 & 0 \\ e^{j\theta} & -e^{j\theta} & 0 \end{bmatrix} \end{array} \right\},$$

$$\mathbf{V} \in \left\{ \begin{array}{l} \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \\ \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \end{array} \right\};$$

wobei die Vorkodierungsmatrix in dem zweiten Codebuch eine Vorkodierungsmatrix P und P = βU ist, wobei eine Matrix U eine N×u-Matrix ist, u ≤ N, β eine Konstante ist, ein Wert von β es P und W ermöglicht, ∥P∥$_F$ = ∥W∥$_F$ zu erfüllen, und ∥∥$_F$ eine Matrix-Frobeniusnorm ist;
wobei die Matrix βU eine Vorkodierungsmatrix in einem Codebuch ist

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix};$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}.$$

2. Verfahren nach Anspruch 1, wobei die Vorkodierungsmatrix W in dem ersten Codebuch mindestens eine der folgenden Matrizen ist:

$$\frac{1}{2}\begin{bmatrix}1\\1\\0\\0\end{bmatrix},\ \frac{1}{2}\begin{bmatrix}0\\0\\1\\1\end{bmatrix},\ \frac{1}{2}\begin{bmatrix}1\\-1\\0\\0\end{bmatrix},\ \frac{1}{2}\begin{bmatrix}0\\0\\1\\-1\end{bmatrix},\ \frac{1}{2}\begin{bmatrix}1\\j\\0\\0\end{bmatrix},\ \frac{1}{2}\begin{bmatrix}0\\0\\1\\j\end{bmatrix},\ \frac{1}{2}\begin{bmatrix}1\\-j\\0\\0\end{bmatrix} \text{ und } \frac{1}{2}\begin{bmatrix}0\\0\\1\\-j\end{bmatrix};$$

wobei die Vorkodierungsmatrix P in dem zweiten Codebuch mindestens eine der folgenden Matrizen ist:

$$\beta\cdot\frac{1}{2}\begin{bmatrix}1&0\\1&0\\0&1\\0&1\end{bmatrix},\ \beta\cdot\frac{1}{2}\begin{bmatrix}1&0\\1&0\\0&1\\0&-1\end{bmatrix},\ \beta\cdot\frac{1}{2}\begin{bmatrix}1&0\\1&0\\0&1\\0&j\end{bmatrix},\ \beta\cdot\frac{1}{2}\begin{bmatrix}1&0\\1&0\\0&1\\0&-j\end{bmatrix},$$

$$\beta\cdot\frac{1}{2}\begin{bmatrix}1&0\\-1&0\\0&1\\0&1\end{bmatrix},\ \beta\cdot\frac{1}{2}\begin{bmatrix}1&0\\-1&0\\0&1\\0&-1\end{bmatrix},\ \beta\cdot\frac{1}{2}\begin{bmatrix}1&0\\-1&0\\0&1\\0&j\end{bmatrix},\ \beta\cdot\frac{1}{2}\begin{bmatrix}1&0\\-1&0\\0&1\\0&-j\end{bmatrix},$$

$$\beta\cdot\frac{1}{2}\begin{bmatrix}1&0\\j&0\\0&1\\0&1\end{bmatrix},\ \beta\cdot\frac{1}{2}\begin{bmatrix}1&0\\j&0\\0&1\\0&-1\end{bmatrix},\ \beta\cdot\frac{1}{2}\begin{bmatrix}1&0\\j&0\\0&1\\0&j\end{bmatrix},\ \beta\cdot\frac{1}{2}\begin{bmatrix}1&0\\j&0\\0&1\\0&-j\end{bmatrix},$$

$$\beta\cdot\frac{1}{2}\begin{bmatrix}1&0\\-j&0\\0&1\\0&1\end{bmatrix},\ \beta\cdot\frac{1}{2}\begin{bmatrix}1&0\\-j&0\\0&1\\0&-1\end{bmatrix},\ \beta\cdot\frac{1}{2}\begin{bmatrix}1&0\\-j&0\\0&1\\0&j\end{bmatrix} \text{ und } \beta\cdot\frac{1}{2}\begin{bmatrix}1&0\\-j&0\\0&1\\0&-j\end{bmatrix}.$$

3. Verfahren zum Empfangen von Kanalzustandsinformationen, CSI, **dadurch gekennzeichnet, dass** es Folgendes umfasst:

Senden (401), durch eine Basisstation an ein Benutzergerät (UE), von CSI-Prozesskonfigurationsinformationen, wobei die CSI-Prozesskonfigurationsinformationen Konfigurationsinformationen für mindestens zwei CSI-Prozesse enthalten, jeder CSI-Prozess sowohl einer Referenzsignalressource als auch einer oder mehreren Störungsmessungsressourcen zugeordnet ist, und die eine Referenzsignalressource und eine oder mehrere Störungsmessungsressourcen zum Auswählen einer Vorkodierungsmatrix aus einem Codebuch für einen zugeordneten CSI-Prozess verwendet werden, wobei das Codebuch eine Vorkodierungsmatrix W und W = $\alpha$SV enthält, das Codebuch ein erstes Codebuch und ein zweites Codebuch umfasst, ein erster CSI-Prozess unter den mindestens zwei CSI-Prozessen dem ersten Codebuch entspricht, ein zweiter CSI-Prozess unter den mindestens zwei CSI-Prozessen dem zweiten Codebuch entspricht, eine Vorkodierungsmatrix in dem ersten Codebuch die Vorkodierungsmatrix W ist und eine Vorkodierungsmatrix in dem zweiten Codebuch eine Vorkodierungsmatrix ist, die sich von der Vorkodierungsmatrix W unterscheidet; und

Empfangen (402), durch die Basisstation von der UE, von CSI, die jedem CSI-Prozess entsprechen, wobei die CSI einen Vorkodierungsmatrixindikator, PMI, enthalten und der PMI der ausgewählten Vorkodierungsmatrix entspricht,

wobei eine Matrix V eine N×$v$-Matrix ist, N die Anzahl der Referenzsignalanschlüsse ist, $v \le$ N, S eine Zeilenauswahlmatrix ist, die verwendet wird, um einen oder mehrere Zeilenvektoren aus der Matrix V auszuwählen, $\alpha$ eine Konstante ist und sowohl die Anzahl der Referenzsignalanschlüsse, die dem ersten CSI-Prozess zugeordnet sind, als auch die Anzahl der Referenzsignalanschlüsse, die dem zweiten CSI-Prozess zugeordnet sind, 4 ist;

wobei die Matrix V eine Vorkodierungsmatrix in einem Codebuch ist

$$\mathbf{V} = \frac{1}{2}\begin{bmatrix} 1 & 1 & 1 & 1 \end{bmatrix}^T ;$$

$$\mathbf{V} \in \left\{ \frac{1}{2}\begin{bmatrix} 1 & 1 & e^{j\theta} & e^{j\theta} \end{bmatrix}^T, \frac{1}{2}\begin{bmatrix} 1 & 1 & -e^{j\theta} & -e^{j\theta} \end{bmatrix}^T \right\};$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\};$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$\mathbf{V} \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$\mathbf{V} \in \left\{ \frac{1}{\sqrt{3}}\begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}}\begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$
$$\left. \frac{1}{\sqrt{3}}\begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

wobei die Vorkodierungsmatrix in dem zweiten Codebuch eine Vorkodierungsmatrix P und P=βU ist, wobei eine Matrix U eine N×u-Matrix ist, u ≤ N, β eine Konstante ist, ein Wert von β es P und W ermöglicht, $\|P\|_F$ = $\|W\|_F$ zu erfüllen, und $\|\|_F$ eine Matrix-Frobeniusnorm ist;

wobei die Matrix βU eine Vorkodierungsmatrix in einem Codebuch ist

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};$$

$$\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};$$

$$\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};$$

$$\beta \cdot \frac{1}{2} \begin{bmatrix} 1 & 0 \\ -j & 0 \\ 0 & 1 \\ 0 & 1 \end{bmatrix}, \beta \cdot \frac{1}{2} \begin{bmatrix} 1 & 0 \\ -j & 0 \\ 0 & 1 \\ 0 & -1 \end{bmatrix}, \beta \cdot \frac{1}{2} \begin{bmatrix} 1 & 0 \\ -j & 0 \\ 0 & 1 \\ 0 & j \end{bmatrix}, \beta \cdot \frac{1}{2} \begin{bmatrix} 1 & 0 \\ -j & 0 \\ 0 & 1 \\ 0 & -j \end{bmatrix};$$

$$\beta \cdot \frac{1}{\sqrt{6}} \begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}} \begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}} \begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}} \begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \Big\}.$$

4. Verfahren nach Anspruch 3, wobei die Vorkodierungsmatrix W in dem ersten Codebuch mindestens eine der folgenden Matrizen ist:

$$\frac{1}{2}\begin{bmatrix}1\\1\\0\\0\end{bmatrix},\ \frac{1}{2}\begin{bmatrix}0\\0\\1\\1\end{bmatrix},\ \frac{1}{2}\begin{bmatrix}1\\-1\\0\\0\end{bmatrix},\ \frac{1}{2}\begin{bmatrix}0\\0\\1\\-1\end{bmatrix},\ \frac{1}{2}\begin{bmatrix}1\\j\\0\\0\end{bmatrix},\ \frac{1}{2}\begin{bmatrix}0\\0\\1\\0\end{bmatrix},\ \frac{1}{2}\begin{bmatrix}1\\-j\\0\\0\end{bmatrix}\ \text{und}\ \frac{1}{2}\begin{bmatrix}0\\0\\1\\-j\end{bmatrix},$$

wobei die Vorkodierungsmatrix P in dem zweiten Codebuch mindestens eine der folgenden Matrizen ist:

$$\beta\cdot\frac{1}{2}\begin{bmatrix}1&0\\1&0\\0&1\\0&1\end{bmatrix},\ \beta\cdot\frac{1}{2}\begin{bmatrix}1&0\\1&0\\0&1\\0&-1\end{bmatrix},\ \beta\cdot\frac{1}{2}\begin{bmatrix}1&0\\1&0\\0&1\\0&j\end{bmatrix},\ \beta\cdot\frac{1}{2}\begin{bmatrix}1&0\\1&0\\0&1\\0&-j\end{bmatrix},$$

$$\beta\cdot\frac{1}{2}\begin{bmatrix}1&0\\-1&0\\0&1\\0&1\end{bmatrix},\ \beta\cdot\frac{1}{2}\begin{bmatrix}1&0\\-1&0\\0&1\\0&-1\end{bmatrix},\ \beta\cdot\frac{1}{2}\begin{bmatrix}1&0\\-1&0\\0&1\\0&j\end{bmatrix},\ \beta\cdot\frac{1}{2}\begin{bmatrix}1&0\\-1&0\\0&1\\0&-j\end{bmatrix},$$

$$\beta\cdot\frac{1}{2}\begin{bmatrix}1&0\\j&0\\0&1\\0&1\end{bmatrix},\ \beta\cdot\frac{1}{2}\begin{bmatrix}1&0\\j&0\\0&1\\0&-1\end{bmatrix},\ \beta\cdot\frac{1}{2}\begin{bmatrix}1&0\\j&0\\0&1\\0&j\end{bmatrix},\ \beta\cdot\frac{1}{2}\begin{bmatrix}1&0\\j&0\\0&1\\0&-j\end{bmatrix},$$

$$\beta\cdot\frac{1}{2}\begin{bmatrix}1&0\\-j&0\\0&1\\0&1\end{bmatrix},\ \beta\cdot\frac{1}{2}\begin{bmatrix}1&0\\-j&0\\0&1\\0&-1\end{bmatrix},\ \beta\cdot\frac{1}{2}\begin{bmatrix}1&0\\-j&0\\0&1\\0&j\end{bmatrix}\ \text{und}\ \beta\cdot\frac{1}{2}\begin{bmatrix}1&0\\-j&0\\0&1\\0&-j\end{bmatrix}.$$

5. Benutzergerät, **dadurch gekennzeichnet, dass** es Folgendes umfasst:

eine Empfangseinheit (701), die dazu konfiguriert ist, von einer Basisstation Kanalzustandsinformationen-, CSI-, Prozesskonfigurationsinformationen zu empfangen, wobei die CSI-Prozesskonfigurationsinformationen Konfigurationsinformationen für mindestens zwei CSI-Prozesse enthalten und jeder CSI-Prozess sowohl einer Referenzsignalressource als auch einer oder mehreren Störungsmessungsressourcen zugeordnet ist;
eine Speichereinheit (702), die dazu konfiguriert ist, ein Codebuch zu speichern, wobei das Codebuch ein erstes Codebuch und ein zweites Codebuch umfasst;
eine Auswahleinheit (703), die dazu konfiguriert ist, auf Grundlage der Referenzsignalressource und Störungsmessungsressourcen, die jedem CSI-Prozess zugeordnet sind, eine Vorkodierungsmatrix aus dem in der Speichereinheit (702) gespeicherten Codebuch auszuwählen, wobei ein erster CSI-Prozess unter den mindestens zwei CSI-Prozessen dem ersten Codebuch entspricht, ein zweiter CSI-Prozess unter den mindestens zwei CSI-Prozessen dem zweiten Codebuch entspricht, eine Vorkodierungsmatrix in dem ersten Codebuch eine Vorkodierungsmatrix W ist, eine Vorkodierungsmatrix in dem zweiten Codebuch eine Vorkodierungsmatrix ist, die sich von der Vorkodierungsmatrix W und W = $\alpha$SV unterscheidet, wobei eine Matrix V eine N$\times\nu$-Matrix ist, N die Anzahl der Referenzsignalanschlüsse ist, $\nu \leq$ N, S eine Zeilenauswahlmatrix ist, die verwendet wird, um einen oder mehrere Zeilenvektoren aus der Matrix V auszuwählen, $\alpha$ eine Konstante ist und sowohl die Anzahl der Referenzsignalanschlüsse, die dem ersten CSI-Prozess zugeordnet sind, als auch die Anzahl der Referenzsignalanschlüsse, die dem zweiten CSI-Prozess zugeordnet sind, 4 ist; und

eine Sendeeinheit (704), die dazu konfiguriert ist, CSI, die jedem CSI-Prozess entsprechen, an die Basisstation zu senden, wobei die CSI einen Vorkodierungsmatrixindikator, PMI, enthalten und der PMI der ausgewählten Vorkodierungsmatrix entspricht;

wobei die Matrix V eine Vorkodierungsmatrix in einem Codebuch ist

$$\mathbf{V} = \frac{1}{2}\begin{bmatrix} 1 & 1 & 1 & 1 \end{bmatrix}^{T};$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\}.$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\}.$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$\mathbf{V} \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$
V \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.
$$

$$
\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};
$$

wobei die Vorkodierungsmatrix in dem in der Speichereinheit (703) gespeicherten zweiten Codebuch eine Vorkodierungsmatrix P und P = βU ist, wobei eine Matrix U eine N×u-Matrix ist, u ≤ N, β eine Konstante ist, ein Wert von β es P und W ermöglicht, $\|P\|_F = \|W\|_F$ zu erfüllen, und $\|\|_F$ eine Matrix-Frobeniusnorm ist; wobei die Matrix βU eine Vorkodierungsmatrix in einem Codebuch ist

$$
\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix}, \right.
$$

$$
\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};
$$

$$
\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};
$$

$$
\beta \cdot \frac{1}{2} \begin{bmatrix} 1 & 0 \\ -j & 0 \\ 0 & 1 \\ 0 & 1 \end{bmatrix}, \beta \cdot \frac{1}{2} \begin{bmatrix} 1 & 0 \\ -j & 0 \\ 0 & 1 \\ 0 & -1 \end{bmatrix}, \beta \cdot \frac{1}{2} \begin{bmatrix} 1 & 0 \\ -j & 0 \\ 0 & 1 \\ 0 & j \end{bmatrix}, \beta \cdot \frac{1}{2} \begin{bmatrix} 1 & 0 \\ -j & 0 \\ 0 & 1 \\ 0 & -j \end{bmatrix};
$$

$$
\beta \cdot \frac{1}{\sqrt{6}} \begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}} \begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix};
$$

$$\beta \cdot \frac{1}{\sqrt{6}} \begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}} \begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix}.$$

6. Benutzergerät nach Anspruch 5, wobei die Vorkodierungsmatrix W in dem in der Speichereinheit (702) gespeicherten ersten Codebuch mindestens eine der folgenden Matrizen ist:

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix} \text{ und } \frac{1}{2}\begin{bmatrix}0\\0\\1\\-j\end{bmatrix};$$

wobei die Vorkodierungsmatrix P in dem in der Speichereinheit (702) gespeicherten zweiten Codebuch mindestens eine der folgenden Matrizen ist:

$$\beta \cdot \frac{1}{2}\begin{bmatrix}1&0\\1&0\\0&1\\0&1\end{bmatrix}, \ \beta \cdot \frac{1}{2}\begin{bmatrix}1&0\\1&0\\0&1\\0&-1\end{bmatrix}, \ \beta \cdot \frac{1}{2}\begin{bmatrix}1&0\\1&0\\0&1\\0&j\end{bmatrix}, \ \beta \cdot \frac{1}{2}\begin{bmatrix}1&0\\1&0\\0&1\\0&-j\end{bmatrix},$$

$$\beta \cdot \frac{1}{2}\begin{bmatrix}1&0\\-1&0\\0&1\\0&1\end{bmatrix}, \ \beta \cdot \frac{1}{2}\begin{bmatrix}1&0\\-1&0\\0&1\\0&-1\end{bmatrix}, \ \beta \cdot \frac{1}{2}\begin{bmatrix}1&0\\-1&0\\0&1\\0&j\end{bmatrix}, \ \beta \cdot \frac{1}{2}\begin{bmatrix}1&0\\-1&0\\0&1\\0&-j\end{bmatrix},$$

$$\beta \cdot \frac{1}{2}\begin{bmatrix}1&0\\j&0\\0&1\\0&1\end{bmatrix}, \ \beta \cdot \frac{1}{2}\begin{bmatrix}1&0\\j&0\\0&1\\0&-1\end{bmatrix}, \ \beta \cdot \frac{1}{2}\begin{bmatrix}1&0\\j&0\\0&1\\0&j\end{bmatrix}, \ \beta \cdot \frac{1}{2}\begin{bmatrix}1&0\\j&0\\0&1\\0&-j\end{bmatrix},$$

$$\beta \cdot \frac{1}{2}\begin{bmatrix} 1 & 0 \\ -j & 0 \\ 0 & 1 \\ 0 & 1 \end{bmatrix}, \quad \beta \cdot \frac{1}{2}\begin{bmatrix} 1 & 0 \\ -j & 0 \\ 0 & 1 \\ 0 & -1 \end{bmatrix}, \quad \beta \cdot \frac{1}{2}\begin{bmatrix} 1 & 0 \\ -j & 0 \\ 0 & 1 \\ 0 & j \end{bmatrix} \quad \text{und} \quad \beta \cdot \frac{1}{2}\begin{bmatrix} 1 & 0 \\ -j & 0 \\ 0 & 1 \\ 0 & -j \end{bmatrix}.$$

7. Basisstation, **dadurch gekennzeichnet, dass** sie Folgendes umfasst:

eine Sendeeinheit (801), die dazu konfiguriert ist, an ein Benutzergerät (UE) Kanalzustandsinformationen-, CSI-, Prozesskonfigurationsinformationen zu senden, wobei die CSI-Prozesskonfigurationsinformationen Konfigurationsinformationen für mindestens zwei CSI-Prozesse enthalten, jeder CSI-Prozess sowohl einer Referenzsignalressource als auch einer oder mehreren Störungsmessungsressourcen zugeordnet ist, und die eine Referenzsignalressource und eine oder mehrere Störungsmessungsressourcen zum Auswählen einer Vorkodierungsmatrix aus einem Codebuch für einen zugeordneten CSI-Prozess verwendet werden, wobei das Codebuch ein erstes Codebuch und ein zweites Codebuch umfasst, das erste Codebuch eine Vorkodierungsmatrix W und W=$\alpha$SV enthält, ein erster CSI-Prozess unter den mindestens zwei CSI-Prozessen dem ersten Codebuch entspricht, ein zweiter CSI-Prozess unter den mindestens zwei CSI-Prozessen dem zweiten Codebuch entspricht und eine Vorkodierungsmatrix in dem zweiten Codebuch eine Vorkodierungsmatrix ist, die sich von der Vorkodierungsmatrix W unterscheidet; und
eine Empfangseinheit (802), die dazu konfiguriert ist, von dem UE CSI zu empfangen, die jedem CSI-Prozess entsprechen, wobei die CSI einen Vorkodierungsmatrixindikator, PMI, enthalten und der PMI der ausgewählten Vorkodierungsmatrix entspricht,
wobei eine Matrix V eine N$\times\nu$-Matrix ist, N die Anzahl der Referenzsignalanschlüsse ist, $\nu \le$ N, S eine Zeilenauswahlmatrix ist, die verwendet wird, um einen oder mehrere Zeilenvektoren aus der Matrix V auszuwählen, $\alpha$ eine Konstante ist und sowohl die Anzahl der Referenzsignalanschlüsse, die dem ersten CSI-Prozess zugeordnet sind, als auch die Anzahl der Referenzsignalanschlüsse, die dem zweiten CSI-Prozess zugeordnet sind, 4 ist;
wobei die Matrix V eine Vorkodierungsmatrix ist

$$\mathbf{V} = \frac{1}{2}\begin{bmatrix} 1 & 1 & 1 & 1 \end{bmatrix}^{T};$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\};$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\};$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$V \in \left\{ \frac{1}{\sqrt{6}} \begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}} \begin{bmatrix} 1 & 1 & 0 \\ 0 & 0 & 1 \\ 0 & 0 & 1 \\ e^{j\theta} & -e^{j\theta} & 0 \end{bmatrix}, \right.$$

$$\left. \frac{1}{\sqrt{6}} \begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}} \begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$V \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$

$$\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

wobei die Vorkodierungsmatrix in dem zweiten Codebuch eine Vorkodierungsmatrix P und P = βU ist, wobei eine Matrix U eine N×u-Matrix ist, u ≤ N, β eine Konstante ist, ein Wert von β es P und W ermöglicht, $\|P\|_F = \|W\|_F$ zu erfüllen, und $\|\|_F$ eine Matrix-Frobeniusnorm ist;

wobei die Matrix βU eine Vorkodierungsmatrix in einem Codebuch ist

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};$$

$$\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};$$

$$\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix},\ \beta \cdot \frac{1}{2}\begin{bmatrix} 1 & 0 \\ -j & 0 \\ 0 & 1 \\ 0 & -1 \end{bmatrix},\ \beta \cdot \frac{1}{2}\begin{bmatrix} 1 & 0 \\ -j & 0 \\ 0 & 1 \\ 0 & j \end{bmatrix},\ \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix},\ \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix},\ \beta \cdot \frac{1}{\sqrt{6}}\begin{bmatrix} 1 & 1 & 0 \\ -j & j & 0 \\ 0 & 0 & 1 \\ 0 & 0 & j \end{bmatrix},\ \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix},\ \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix},\ \beta \cdot \frac{1}{\sqrt{6}}\begin{bmatrix} 0 & 0 & 1 \\ 0 & 0 & j \\ 1 & 1 & 0 \\ -j & j & 0 \end{bmatrix},\ \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix},\ \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix},\ \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}\Bigg\};$$

**8.** Basisstation nach Anspruch 7, wobei die Vorkodierungsmatrix W in dem ersten Codebuch mindestens eine der folgenden Matrizen ist:

$$\frac{1}{2}\begin{bmatrix} 1 \\ 1 \\ 0 \\ 0 \end{bmatrix},\ \frac{1}{2}\begin{bmatrix} 0 \\ 0 \\ 1 \\ 1 \end{bmatrix},\ \frac{1}{2}\begin{bmatrix} 1 \\ -1 \\ 0 \\ 0 \end{bmatrix},\ \frac{1}{2}\begin{bmatrix} 0 \\ 0 \\ 1 \\ -1 \end{bmatrix},\ \frac{1}{2}\begin{bmatrix} 1 \\ j \\ 0 \\ j \end{bmatrix},\ \frac{1}{2}\begin{bmatrix} 0 \\ 0 \\ 1 \\ 0 \end{bmatrix},\ \frac{1}{2}\begin{bmatrix} 1 \\ -j \\ 0 \\ 0 \end{bmatrix}\ \text{und}\ \frac{1}{2}\begin{bmatrix} 0 \\ 0 \\ 1 \\ -j \end{bmatrix};$$

wobei die Vorkodierungsmatrix P in dem zweiten Codebuch mindestens eine der folgenden Matrizen ist:

$$\beta \cdot \frac{1}{2}\begin{bmatrix} 1 & 0 \\ 1 & 0 \\ 0 & 1 \\ 0 & 1 \end{bmatrix},\ \beta \cdot \frac{1}{2}\begin{bmatrix} 1 & 0 \\ 1 & 0 \\ 0 & 1 \\ 0 & -1 \end{bmatrix},\ \beta \cdot \frac{1}{2}\begin{bmatrix} 1 & 0 \\ 1 & 0 \\ 0 & 1 \\ 0 & j \end{bmatrix},\ \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2} \begin{bmatrix} 1 & 0 \\ -1 & 0 \\ 0 & 1 \\ 0 & 1 \end{bmatrix}, \quad \beta \cdot \frac{1}{2} \begin{bmatrix} 1 & 0 \\ -1 & 0 \\ 0 & 1 \\ 0 & -1 \end{bmatrix}, \quad \beta \cdot \frac{1}{2} \begin{bmatrix} 1 & 0 \\ -1 & 0 \\ 0 & 1 \\ 0 & j \end{bmatrix}, \quad \beta \cdot \frac{1}{2} \begin{bmatrix} 1 & 0 \\ -1 & 0 \\ 0 & 1 \\ 0 & -j \end{bmatrix},$$

$$\beta \cdot \frac{1}{2} \begin{bmatrix} 1 & 0 \\ j & 0 \\ 0 & 1 \\ 0 & 1 \end{bmatrix}, \quad \beta \cdot \frac{1}{2} \begin{bmatrix} 1 & 0 \\ j & 0 \\ 0 & 1 \\ 0 & -1 \end{bmatrix}, \quad \beta \cdot \frac{1}{2} \begin{bmatrix} 1 & 0 \\ j & 0 \\ 0 & 1 \\ 0 & j \end{bmatrix}, \quad \beta \cdot \frac{1}{2} \begin{bmatrix} 1 & 0 \\ j & 0 \\ 0 & 1 \\ 0 & -j \end{bmatrix},$$

$$\beta \cdot \frac{1}{2} \begin{bmatrix} 1 & 0 \\ -j & 0 \\ 0 & 1 \\ 0 & 1 \end{bmatrix}, \quad \beta \cdot \frac{1}{2} \begin{bmatrix} 1 & 0 \\ -j & 0 \\ 0 & 1 \\ 0 & -1 \end{bmatrix}, \quad \beta \cdot \frac{1}{2} \begin{bmatrix} 1 & 0 \\ -j & 0 \\ 0 & 1 \\ 0 & j \end{bmatrix} \quad \text{und} \quad \beta \cdot \frac{1}{2} \begin{bmatrix} 1 & 0 \\ -j & 0 \\ 0 & 1 \\ 0 & -j \end{bmatrix}.$$

**Revendications**

1.  Procédé de rapport d'informations d'état de canal, CSI, **caractérisé en ce qu'**il comprend :

    la réception (301), par un équipement utilisateur en provenance d'une station de base, d'informations de configuration de processus CSI, dans lequel les informations de configuration de processus CSI comportent des informations de configuration pour au moins deux processus CSI, et chaque processus CSI est associé à la fois à une ressource de signal de référence et à une ou plusieurs ressources de mesure d'interférence ;
    la sélection (302), par l'équipement utilisateur pour chaque processus CSI, d'une matrice de précodage à partir d'un livre de codes sur la base de la ressource de signal de référence et des ressources de mesure d'interférence associées à chaque processus CSI, dans lequel le livre de codes comprend un premier livre de codes et un second livre de codes, un premier processus CSI parmi les au moins deux processus CSI correspond au premier livre de codes, un second processus CSI parmi les au moins deux processus CSI correspond au second livre de codes, une matrice de précodage dans le premier livre de codes est une matrice de précodage W, une matrice de précodage dans le second livre de codes est une matrice de précodage différente de la matrice de précodage W, et W = $\alpha$SV, dans lequel une matrice V est une matrice N$\times$v, N est le nombre de ports de signal de référence, v $\leq$ N, S est une matrice de sélection de lignes utilisée pour sélectionner un ou plusieurs vecteurs de lignes dans la matrice V, $\alpha$ est une constante, et le nombre de ports de signal de référence associé au premier processus CSI et le nombre de ports de signal de référence associé au second processus CSI sont tous deux 4 ; et
    l'envoi (303), par l'équipement utilisateur, de CSI correspondant à chaque processus CSI à la station de base, dans lequel les CSI comportent un indicateur de matrice de précodage, PMI, et le PMI correspond à la matrice de précodage sélectionnée ;
    dans lequel la matrice V est une matrice de précodage dans un livre de codes

$$\mathbf{V} = \frac{1}{2} \begin{bmatrix} 1 & 1 & 1 & 1 \end{bmatrix}^T ;$$

$$\mathbf{V} \in \left\{ \frac{1}{2} \begin{bmatrix} 1 & 1 & e^{j\theta} & e^{j\theta} \end{bmatrix}^T, \frac{1}{2} \begin{bmatrix} 1 & 1 & -e^{j\theta} & -e^{j\theta} \end{bmatrix}^T \right\} ;$$

$$V \in \left\{ \frac{1}{\sqrt{8}} \begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}} \begin{bmatrix} 1 & 1 \\ 1 & 1 \\ e^{j\theta} & -e^{j\theta} \\ e^{j\theta} & -e^{j\theta} \end{bmatrix} \right\};$$

$$V \in \left\{ \frac{1}{2} \begin{bmatrix} 1 & 0 \\ e^{j\theta} & 0 \\ 0 & 1 \\ 0 & e^{j\theta} \end{bmatrix}, \frac{1}{2} \begin{bmatrix} 1 & 0 \\ 0 & 1 \\ e^{j\theta} & 0 \\ 0 & e^{j\theta} \end{bmatrix} \right\};$$

$$V \in \left\{ \frac{1}{\sqrt{6}} \begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}} \begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}} \begin{bmatrix} 1 & 1 & 0 \\ 0 & 0 & 1 \\ 0 & 0 & 1 \\ e^{j\theta} & -e^{j\theta} & 0 \end{bmatrix}, \right.$$

$$\left. \frac{1}{\sqrt{6}} \begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}} \begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}} \begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$V \in \left\{ \frac{1}{\sqrt{3}} \begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}} \begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}} \begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$

$$\left. \frac{1}{\sqrt{3}} \begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}} \begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

dans lequel la matrice de précodage dans le second livre de codes est une matrice de précodage P et P = βU, dans lequel une matrice U est une matrice N×ν, u ≤ N, β est une constante, une valeur de β permet à P et W de satisfaire $\|P\|_F = \|W\|_F$, et $\|\|_F$ est une norme matricielle de Frobenius ;
dans lequel la matrice βU est une matrice de précodage dans un livre de codes

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix}, \right.$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix};$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}.$$

**2.** Procédé selon la revendication 1, dans lequel la matrice de précodage W dans le premier livre de codes est au moins l'une parmi les matrices suivantes :

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix}, \text{ et } \frac{1}{2}\begin{bmatrix}0\\0\\1\\-j\end{bmatrix};$$

la matrice de précodage P dans le second livre de codes est au moins l'une parmi les matrices suivantes :

$$\beta\cdot\frac{1}{2}\begin{bmatrix}1&0\\1&0\\0&1\\0&1\end{bmatrix}, \beta\cdot\frac{1}{2}\begin{bmatrix}1&0\\1&0\\0&1\\0&-1\end{bmatrix}, \beta\cdot\frac{1}{2}\begin{bmatrix}1&0\\1&0\\0&1\\0&j\end{bmatrix}, \beta\cdot\frac{1}{2}\begin{bmatrix}1&0\\1&0\\0&1\\0&-j\end{bmatrix},$$

$$\beta\cdot\frac{1}{2}\begin{bmatrix}1&0\\-1&0\\0&1\\0&1\end{bmatrix}, \beta\cdot\frac{1}{2}\begin{bmatrix}1&0\\-1&0\\0&1\\0&-1\end{bmatrix}, \beta\cdot\frac{1}{2}\begin{bmatrix}1&0\\-1&0\\0&1\\0&j\end{bmatrix}, \beta\cdot\frac{1}{2}\begin{bmatrix}1&0\\-1&0\\0&1\\0&-j\end{bmatrix},$$

$$\beta\cdot\frac{1}{2}\begin{bmatrix}1&0\\j&0\\0&1\\0&1\end{bmatrix}, \beta\cdot\frac{1}{2}\begin{bmatrix}1&0\\j&0\\0&1\\0&-1\end{bmatrix}, \beta\cdot\frac{1}{2}\begin{bmatrix}1&0\\j&0\\0&1\\0&j\end{bmatrix}, \beta\cdot\frac{1}{2}\begin{bmatrix}1&0\\j&0\\0&1\\0&-j\end{bmatrix},$$

$$\beta\cdot\frac{1}{2}\begin{bmatrix}1&0\\-j&0\\0&1\\0&1\end{bmatrix}, \beta\cdot\frac{1}{2}\begin{bmatrix}1&0\\-j&0\\0&1\\0&-1\end{bmatrix}, \beta\cdot\frac{1}{2}\begin{bmatrix}1&0\\-j&0\\0&1\\0&j\end{bmatrix}, \text{ et } \beta\cdot\frac{1}{2}\begin{bmatrix}1&0\\-j&0\\0&1\\0&-j\end{bmatrix}.$$

3. Procédé de réception d'informations d'état de canal, CSI, **caractérisé en ce qu'**il comprend :

l'envoi (401), par une station de base à un équipement utilisateur (UE), d'informations de configuration de processus CSI, dans lequel les informations de configuration de processus CSI comportent des informations de configuration pour au moins deux processus CSI, chaque processus CSI est associé à la fois à une ressource de signal de référence et une ou plusieurs ressources de mesure d'interférence, et la ressource de signal de référence et les une ou plusieurs ressources de mesure d'interférence sont utilisées pour sélectionner une matrice de précodage à partir d'un livre de codes pour un processus CSI associé, le livre de codes comporte une matrice de précodage W et W = αSV, le livre de codes comprend un premier livre de codes et un second livre de codes, un premier processus CSI parmi les au moins deux processus CSI correspond au premier livre de codes, un second processus CSI parmi les au moins deux processus CSI correspond au second livre de codes, une matrice de précodage dans le premier livre de codes est la matrice de précodage W, et une matrice de précodage dans le second livre de codes est une matrice de précodage différente de la matrice de précodage W ; et

la réception (402), par la station de base en provenance de l'UE, de CSI qui correspondent à chaque processus CSI, dans lequel les CSI comportent un indicateur de matrice de précodage, PMI, le PMI correspond à la matrice de précodage sélectionnée,

dans lequel une matrice V est une matrice N×ν, N est le nombre de ports de signal de référence, ν ≤ N, S est une matrice de sélection de lignes utilisée pour sélectionner un ou plusieurs vecteurs de lignes dans la matrice V, α est une constante, et le nombre de ports de signal de référence associé au premier processus CSI et le nombre de ports de signal de référence associé au second processus CSI sont tous deux 4 ;

dans lequel la matrice V est une matrice de précodage dans un livre de codes

$$\mathbf{V} = \frac{1}{2}\begin{bmatrix} 1 & 1 & 1 & 1 \end{bmatrix}^{T};$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\};$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\};$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$\mathbf{V} \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$\mathbf{V} \in \left\{ \frac{1}{\sqrt{3}}\begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}}\begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$
$$\left. \frac{1}{\sqrt{3}}\begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

dans lequel la matrice de précodage dans le second livre de codes est une matrice de précodage P et P = βU, dans lequel une matrice U est une matrice N×u, u ≤ N, β est une constante, une valeur de β permet à P et W de satisfaire ‖P‖<sub>F</sub> = ‖W‖<sub>F</sub>, et ‖‖<sub>F</sub> est une norme matricielle de Frobenius ; dans lequel la matrice βU est une matrice de précodage dans un livre de codes

$$\left\{ \beta \cdot \frac{1}{2} \begin{bmatrix} 1 & 0 \\ 1 & 0 \\ 0 & 1 \\ 0 & 1 \end{bmatrix}, \beta \cdot \frac{1}{2} \begin{bmatrix} 1 & 0 \\ 1 & 0 \\ 0 & 1 \\ 0 & -1 \end{bmatrix}, \beta \cdot \frac{1}{2} \begin{bmatrix} 1 & 0 \\ 1 & 0 \\ 0 & 1 \\ 0 & j \end{bmatrix}, \beta \cdot \frac{1}{2} \begin{bmatrix} 1 & 0 \\ 1 & 0 \\ 0 & 1 \\ 0 & -j \end{bmatrix} \right\};$$

$$\beta \cdot \frac{1}{2} \begin{bmatrix} 1 & 0 \\ -1 & 0 \\ 0 & 1 \\ 0 & 1 \end{bmatrix}, \beta \cdot \frac{1}{2} \begin{bmatrix} 1 & 0 \\ -1 & 0 \\ 0 & 1 \\ 0 & -1 \end{bmatrix}, \beta \cdot \frac{1}{2} \begin{bmatrix} 1 & 0 \\ -1 & 0 \\ 0 & 1 \\ 0 & j \end{bmatrix}, \beta \cdot \frac{1}{2} \begin{bmatrix} 1 & 0 \\ -1 & 0 \\ 0 & 1 \\ 0 & -j \end{bmatrix};$$

$$\beta \cdot \frac{1}{2} \begin{bmatrix} 1 & 0 \\ j & 0 \\ 0 & 1 \\ 0 & 1 \end{bmatrix}, \beta \cdot \frac{1}{2} \begin{bmatrix} 1 & 0 \\ j & 0 \\ 0 & 1 \\ 0 & -1 \end{bmatrix}, \beta \cdot \frac{1}{2} \begin{bmatrix} 1 & 0 \\ j & 0 \\ 0 & 1 \\ 0 & j \end{bmatrix}, \beta \cdot \frac{1}{2} \begin{bmatrix} 1 & 0 \\ j & 0 \\ 0 & 1 \\ 0 & -j \end{bmatrix};$$

$$\beta \cdot \frac{1}{2} \begin{bmatrix} 1 & 0 \\ -j & 0 \\ 0 & 1 \\ 0 & 1 \end{bmatrix}, \beta \cdot \frac{1}{2} \begin{bmatrix} 1 & 0 \\ -j & 0 \\ 0 & 1 \\ 0 & -1 \end{bmatrix}, \beta \cdot \frac{1}{2} \begin{bmatrix} 1 & 0 \\ -j & 0 \\ 0 & 1 \\ 0 & j \end{bmatrix}, \beta \cdot \frac{1}{2} \begin{bmatrix} 1 & 0 \\ -j & 0 \\ 0 & 1 \\ 0 & -j \end{bmatrix};$$

$$\beta \cdot \frac{1}{\sqrt{6}} \begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}} \begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix}, \beta \cdot \frac{1}{\sqrt{6}} \begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}} \begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}} \begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix}, \beta \cdot \frac{1}{\sqrt{6}} \begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}} \begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}} \begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2} \begin{bmatrix} 1 & 0 & 0 & 0 \\ 0 & 1 & 0 & 0 \\ 0 & 0 & 1 & 0 \\ 0 & 0 & 0 & 1 \end{bmatrix} \}.$$

4. Procédé selon la revendication 3, dans lequel la matrice de précodage W dans le premier livre de codes est au moins l'une parmi les matrices suivantes :

$$\frac{1}{2}\begin{bmatrix}1\\1\\0\\0\end{bmatrix}, \frac{1}{2}\begin{bmatrix}0\\0\\1\\1\end{bmatrix}, \frac{1}{2}\begin{bmatrix}1\\-1\\0\\0\end{bmatrix}, \frac{1}{2}\begin{bmatrix}0\\0\\1\\-1\end{bmatrix}, \frac{1}{2}\begin{bmatrix}1\\j\\0\\0\end{bmatrix}, \frac{1}{2}\begin{bmatrix}0\\0\\1\\j\end{bmatrix}, \frac{1}{2}\begin{bmatrix}1\\-j\\0\\0\end{bmatrix} \text{ et } \frac{1}{2}\begin{bmatrix}0\\0\\1\\-j\end{bmatrix},$$

la matrice de précodage P dans le second livre de codes est au moins l'une parmi les matrices suivantes :

$$\beta \cdot \frac{1}{2}\begin{bmatrix}1&0\\1&0\\0&1\\0&1\end{bmatrix}, \beta \cdot \frac{1}{2}\begin{bmatrix}1&0\\1&0\\0&1\\0&-1\end{bmatrix}, \beta \cdot \frac{1}{2}\begin{bmatrix}1&0\\1&0\\0&1\\0&j\end{bmatrix}, \beta \cdot \frac{1}{2}\begin{bmatrix}1&0\\1&0\\0&1\\0&-j\end{bmatrix},$$

$$\beta \cdot \frac{1}{2}\begin{bmatrix}1&0\\-1&0\\0&1\\0&1\end{bmatrix}, \beta \cdot \frac{1}{2}\begin{bmatrix}1&0\\-1&0\\0&1\\0&-1\end{bmatrix}, \beta \cdot \frac{1}{2}\begin{bmatrix}1&0\\-1&0\\0&1\\0&j\end{bmatrix}, \beta \cdot \frac{1}{2}\begin{bmatrix}1&0\\-1&0\\0&1\\0&-j\end{bmatrix},$$

$$\beta \cdot \frac{1}{2}\begin{bmatrix}1&0\\j&0\\0&1\\0&1\end{bmatrix}, \beta \cdot \frac{1}{2}\begin{bmatrix}1&0\\j&0\\0&1\\0&-1\end{bmatrix}, \beta \cdot \frac{1}{2}\begin{bmatrix}1&0\\j&0\\0&1\\0&j\end{bmatrix}, \beta \cdot \frac{1}{2}\begin{bmatrix}1&0\\j&0\\0&1\\0&-j\end{bmatrix},$$

$$\beta \cdot \frac{1}{2}\begin{bmatrix}1&0\\-j&0\\0&1\\0&1\end{bmatrix}, \beta \cdot \frac{1}{2}\begin{bmatrix}1&0\\-j&0\\0&1\\0&-1\end{bmatrix}, \beta \cdot \frac{1}{2}\begin{bmatrix}1&0\\-j&0\\0&1\\0&j\end{bmatrix} \text{ et } \beta \cdot \frac{1}{2}\begin{bmatrix}1&0\\-j&0\\0&1\\0&-j\end{bmatrix}.$$

5. Équipement utilisateur, **caractérisé en ce qu'**il comprend :

une unité de réception (701), configurée pour recevoir, en provenance d'une station de base, des informations de configuration de processus d'informations d'état de canal, CSI, dans lequel les informations de configuration de processus CSI comportent des informations de configuration pour au moins deux processus CSI, et chaque processus CSI est associé à la fois à une ressource de signal de référence et à une ou plusieurs de ressources de mesure d'interférence ;
une unité de stockage (702), configurée pour stocker un livre de codes, dans lequel le livre de codes comprend un premier livre de codes et un second livre de codes ;
une unité de sélection (703), configurée pour sélectionner, sur la base de la ressource de signal de référence et des ressources de mesure d'interférence associées à chaque processus CSI, une matrice de précodage à partir du livre de codes stocké dans l'unité de stockage (702), dans lequel un premier processus CSI parmi les au moins deux processus CSI correspond au premier livre de codes, un second processus CSI parmi les au moins deux processus CSI correspond au second livre de codes, une matrice de précodage dans le premier livre de codes est une matrice de précodage W, une matrice de précodage dans le second livre de codes est une matrice de précodage différente de la matrice de précodage W, et W = $\alpha$SV, dans lequel une matrice V est une matrice N$\times$v, N est le nombre de ports de signal de référence, $v \leq N$, S est une matrice de sélection de lignes utilisée pour sélectionner un ou plusieurs vecteurs de lignes dans la matrice V, $\alpha$ est une constante, et le nombre de ports de signal de référence associé au premier processus CSI et le nombre de ports de signal de référence associé au second processus CSI sont tous deux 4 ; et

une unité d'envoi (704), configurée pour envoyer, à la station de base, des CSI correspondant à chaque processus CSI, dans lequel les CSI comportent un indicateur de matrice de précodage, PMI, et le PMI correspond à la matrice de précodage sélectionnée ;

dans lequel la matrice V est une matrice de précodage dans un livre de codes

$$\mathbf{V} = \frac{1}{2}\begin{bmatrix} 1 & 1 & 1 & 1 \end{bmatrix}^{T};$$

$$\mathbf{V} \in \left\{ \frac{1}{2}\begin{bmatrix} 1 & 1 & e^{j\theta} & e^{j\theta} \end{bmatrix}^{T}, \frac{1}{2}\begin{bmatrix} 1 & 1 & -e^{j\theta} & -e^{j\theta} \end{bmatrix}^{T} \right\};$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\};$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\};$$

$$\mathbf{V} \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$\mathbf{V}\in\left\{\frac{1}{\sqrt{3}}\begin{bmatrix}1&0&0\\0&1&0\\0&0&\frac{1}{\sqrt{2}}\\0&0&\frac{1}{\sqrt{2}}\end{bmatrix},\;\frac{1}{\sqrt{3}}\begin{bmatrix}1&0&0\\0&0&\frac{1}{\sqrt{2}}\\0&1&0\\0&0&\frac{1}{\sqrt{2}}\end{bmatrix},\;\frac{1}{\sqrt{3}}\begin{bmatrix}0&0&\frac{1}{\sqrt{2}}\\1&0&0\\0&1&0\\0&0&\frac{1}{\sqrt{2}}\end{bmatrix},\right.$$

$$\left.\frac{1}{\sqrt{3}}\begin{bmatrix}1&0&0\\0&0&\frac{1}{\sqrt{2}}\\0&0&\frac{1}{\sqrt{2}}\\0&1&0\end{bmatrix},\;\frac{1}{\sqrt{3}}\begin{bmatrix}0&0&\frac{1}{\sqrt{2}}\\1&0&0\\0&0&\frac{1}{\sqrt{2}}\\0&1&0\end{bmatrix},\;\frac{1}{\sqrt{3}}\begin{bmatrix}0&0&\frac{1}{\sqrt{2}}\\0&0&\frac{1}{\sqrt{2}}\\1&0&0\\0&1&0\end{bmatrix}\right\};$$

dans lequel la matrice de précodage dans le second livre de codes stocké dans l'unité de stockage (703) est une matrice de précodage P et P = βU, dans lequel une matrice U est une matrice u ≤ N, β est une constante, une valeur de β permet à P et W de satisfaire $\|P\|_F = \|W\|_F$, et $\|\ \|_F$ est une norme matricielle de Frobenius ;
dans lequel la matrice βU est une matrice de précodage dans un livre de codes

$$\left\{\beta\cdot\frac{1}{2}\begin{bmatrix}1&0\\1&0\\0&1\\0&1\end{bmatrix},\;\beta\cdot\frac{1}{2}\begin{bmatrix}1&0\\1&0\\0&1\\0&-1\end{bmatrix},\;\beta\cdot\frac{1}{2}\begin{bmatrix}1&0\\1&0\\0&1\\0&j\end{bmatrix},\;\beta\cdot\frac{1}{2}\begin{bmatrix}1&0\\1&0\\0&1\\0&-j\end{bmatrix}\right\};$$

$$\beta\cdot\frac{1}{2}\begin{bmatrix}1&0\\-1&0\\0&1\\0&1\end{bmatrix},\;\beta\cdot\frac{1}{2}\begin{bmatrix}1&0\\-1&0\\0&1\\0&-1\end{bmatrix},\;\beta\cdot\frac{1}{2}\begin{bmatrix}1&0\\-1&0\\0&1\\0&j\end{bmatrix},\;\beta\cdot\frac{1}{2}\begin{bmatrix}1&0\\-1&0\\0&1\\0&-j\end{bmatrix};$$

$$\beta\cdot\frac{1}{2}\begin{bmatrix}1&0\\j&0\\0&1\\0&1\end{bmatrix},\;\beta\cdot\frac{1}{2}\begin{bmatrix}1&0\\j&0\\0&1\\0&-1\end{bmatrix},\;\beta\cdot\frac{1}{2}\begin{bmatrix}1&0\\j&0\\0&1\\0&j\end{bmatrix},\;\beta\cdot\frac{1}{2}\begin{bmatrix}1&0\\j&0\\0&1\\0&-j\end{bmatrix};$$

$$\beta\cdot\frac{1}{2}\begin{bmatrix}1&0\\-j&0\\0&1\\0&1\end{bmatrix},\;\beta\cdot\frac{1}{2}\begin{bmatrix}1&0\\-j&0\\0&1\\0&-1\end{bmatrix},\;\beta\cdot\frac{1}{2}\begin{bmatrix}1&0\\-j&0\\0&1\\0&j\end{bmatrix},\;\beta\cdot\frac{1}{2}\begin{bmatrix}1&0\\-j&0\\0&1\\0&-j\end{bmatrix};$$

$$\beta\cdot\frac{1}{\sqrt{6}}\begin{bmatrix}1&1&0\\1&-1&0\\0&0&1\\0&0&-1\end{bmatrix},\;\beta\cdot\frac{1}{\sqrt{6}}\begin{bmatrix}1&1&0\\-1&1&0\\0&0&1\\0&0&1\end{bmatrix},\;\beta\cdot\frac{1}{\sqrt{6}}\begin{bmatrix}1&1&0\\-j&j&0\\0&0&1\\0&0&j\end{bmatrix},\;\beta\cdot\frac{1}{\sqrt{6}}\begin{bmatrix}1&1&0\\-j&j&0\\0&0&1\\0&0&j\end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}\};$$

**6.** Équipement utilisateur selon la revendication 5, dans lequel la matrice de précodage W dans le premier livre de codes stocké dans l'unité de stockage (702) est au moins l'une parmi les matrices suivantes :

$$\frac{1}{2}\begin{bmatrix} 1 \\ 1 \\ 0 \\ 0 \end{bmatrix}, \frac{1}{2}\begin{bmatrix} 0 \\ 0 \\ 1 \\ 1 \end{bmatrix}, \frac{1}{2}\begin{bmatrix} 1 \\ -1 \\ 0 \\ 0 \end{bmatrix}, \frac{1}{2}\begin{bmatrix} 0 \\ 0 \\ 1 \\ -1 \end{bmatrix}, \frac{1}{2}\begin{bmatrix} 1 \\ j \\ 0 \\ 0 \end{bmatrix}, \frac{1}{2}\begin{bmatrix} 0 \\ 0 \\ 1 \\ j \end{bmatrix}, \frac{1}{2}\begin{bmatrix} 1 \\ -j \\ 0 \\ 0 \end{bmatrix} \text{ et } \frac{1}{2}\begin{bmatrix} 0 \\ 0 \\ 1 \\ -j \end{bmatrix};$$

la matrice de précodage P dans le second livre de codes stocké dans l'unité de stockage (702) est au moins l'une parmi les matrices suivantes :

$$\beta \cdot \frac{1}{2}\begin{bmatrix} 1 & 0 \\ 1 & 0 \\ 0 & 1 \\ 0 & 1 \end{bmatrix}, \; \beta \cdot \frac{1}{2}\begin{bmatrix} 1 & 0 \\ 1 & 0 \\ 0 & 1 \\ 0 & -1 \end{bmatrix}, \; \beta \cdot \frac{1}{2}\begin{bmatrix} 1 & 0 \\ 1 & 0 \\ 0 & 1 \\ 0 & j \end{bmatrix}, \; \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2}\begin{bmatrix} 1 & 0 \\ -1 & 0 \\ 0 & 1 \\ 0 & 1 \end{bmatrix}, \; \beta \cdot \frac{1}{2}\begin{bmatrix} 1 & 0 \\ -1 & 0 \\ 0 & 1 \\ 0 & -1 \end{bmatrix}, \; \beta \cdot \frac{1}{2}\begin{bmatrix} 1 & 0 \\ -1 & 0 \\ 0 & 1 \\ 0 & j \end{bmatrix}, \; \beta \cdot \frac{1}{2}\begin{bmatrix} 1 & 0 \\ -1 & 0 \\ 0 & 1 \\ 0 & -j \end{bmatrix},$$

$$\beta \cdot \frac{1}{2}\begin{bmatrix} 1 & 0 \\ j & 0 \\ 0 & 1 \\ 0 & 1 \end{bmatrix}, \; \beta \cdot \frac{1}{2}\begin{bmatrix} 1 & 0 \\ j & 0 \\ 0 & 1 \\ 0 & -1 \end{bmatrix}, \; \beta \cdot \frac{1}{2}\begin{bmatrix} 1 & 0 \\ j & 0 \\ 0 & 1 \\ 0 & j \end{bmatrix}, \; \beta \cdot \frac{1}{2}\begin{bmatrix} 1 & 0 \\ j & 0 \\ 0 & 1 \\ 0 & -j \end{bmatrix},$$

$$\beta \cdot \frac{1}{2}\begin{bmatrix} 1 & 0 \\ -j & 0 \\ 0 & 1 \\ 0 & 1 \end{bmatrix}, \quad \beta \cdot \frac{1}{2}\begin{bmatrix} 1 & 0 \\ -j & 0 \\ 0 & 1 \\ 0 & -1 \end{bmatrix}, \quad \beta \cdot \frac{1}{2}\begin{bmatrix} 1 & 0 \\ -j & 0 \\ 0 & 1 \\ 0 & j \end{bmatrix} \; et \; \beta \cdot \frac{1}{2}\begin{bmatrix} 1 & 0 \\ -j & 0 \\ 0 & 1 \\ 0 & -j \end{bmatrix}.$$

**7.** Station de base, **caractérisée en ce qu'**elle comprend :

une unité d'envoi (801), configurée pour envoyer, à un équipement utilisateur, UE, des informations de configuration de processus d'informations d'état de canal, CSI, dans laquelle les informations de configuration de processus CSI comportent des informations de configuration pour au moins deux processus CSI, chaque processus CSI est associé à la fois à une ressource de signal de référence et une ou plusieurs ressources de mesure d'interférence, et la ressource de signal de référence et les une ou plusieurs ressources de mesure d'interférence sont utilisées pour sélectionner une matrice de précodage à partir d'un livre de codes pour un processus CSI associé, le livre de codes comprend un premier livre de codes et un second livre de codes, le premier livre de codes comporte une matrice de précodage W et W=αSV, un premier processus CSI parmi les au moins deux processus CSI correspond au premier livre de codes, un second processus CSI parmi les au moins deux processus CSI correspond au second livre de codes, et une matrice de précodage dans le second livre de codes est une matrice de précodage différente de la matrice de précodage W ; et
une unité de réception (802), configurée pour recevoir, en provenance de l'UE, des CSI qui correspondent à chaque processus CSI, dans laquelle les CSI comportent un indicateur de matrice de précodage, PMI, le PMI correspond à la matrice de précodage sélectionnée,
dans laquelle une matrice V est une matrice N×ν, N est le nombre de ports de signal de référence, ν ≤ N, S est une matrice de sélection de lignes utilisée pour sélectionner un ou plusieurs vecteurs de lignes dans la matrice V, α est une constante, et le nombre de ports de signal de référence associé au premier processus CSI et le nombre de ports de signal de référence associé au second processus CSI sont tous deux 4 ;
dans laquelle la matrice V est une matrice de précodage

$$\mathbf{V} = \frac{1}{2}\begin{bmatrix} 1 & 1 & 1 & 1 \end{bmatrix}^T ;$$

$$\mathbf{V} \in \left\{ \frac{1}{2}\begin{bmatrix} 1 & 1 & e^{j\theta} & e^{j\theta} \end{bmatrix}^T, \frac{1}{2}\begin{bmatrix} 1 & 1 & -e^{j\theta} & -e^{j\theta} \end{bmatrix}^T \right\} ;$$

$$\mathbf{V} \in \left\{ \frac{1}{\sqrt{8}}\begin{bmatrix} 1 & 1 \\ e^{j\theta} & -e^{j\theta} \\ 1 & 1 \\ e^{j\theta} & -e^{j\theta} \end{bmatrix}, \frac{1}{\sqrt{8}}\begin{bmatrix} 1 & 1 \\ 1 & 1 \\ e^{j\theta} & -e^{j\theta} \\ e^{j\theta} & -e^{j\theta} \end{bmatrix} \right\} ;$$

$$\mathbf{V} \in \left\{ \frac{1}{2}\begin{bmatrix} 1 & 0 \\ e^{j\theta} & 0 \\ 0 & 1 \\ 0 & e^{j\theta} \end{bmatrix}, \frac{1}{2}\begin{bmatrix} 1 & 0 \\ 0 & 1 \\ e^{j\theta} & 0 \\ 0 & e^{j\theta} \end{bmatrix} \right\} ;$$

$$V \in \left\{ \frac{1}{\sqrt{6}}\begin{bmatrix} 1 & 1 & 0 \\ e^{j\theta} & -e^{j\theta} & 0 \\ 0 & 0 & 1 \\ 0 & 0 & 1 \end{bmatrix}, \frac{1}{\sqrt{6}}\begin{bmatrix} 1 & 1 & 0 \\ 0 & 0 & 1 \\ e^{j\theta} & -e^{j\theta} & 0 \\ 0 & 0 & 1 \end{bmatrix}, \frac{1}{\sqrt{6}}\begin{bmatrix} 1 & 1 & 0 \\ 0 & 0 & 1 \\ 0 & 0 & 1 \\ e^{j\theta} & -e^{j\theta} & 0 \end{bmatrix}, \right.$$
$$\left. \frac{1}{\sqrt{6}}\begin{bmatrix} 0 & 0 & 1 \\ 1 & 1 & 0 \\ e^{j\theta} & -e^{j\theta} & 0 \\ 0 & 0 & 1 \end{bmatrix}, \frac{1}{\sqrt{6}}\begin{bmatrix} 0 & 0 & 1 \\ 1 & 1 & 0 \\ 0 & 0 & 1 \\ e^{j\theta} & -e^{j\theta} & 0 \end{bmatrix}, \frac{1}{\sqrt{6}}\begin{bmatrix} 0 & 0 & 1 \\ 0 & 0 & 1 \\ 1 & 1 & 0 \\ e^{j\theta} & -e^{j\theta} & 0 \end{bmatrix} \right\};$$

$$V \in \left\{ \frac{1}{\sqrt{3}}\begin{bmatrix} 1 & 0 & 0 \\ 0 & 1 & 0 \\ 0 & 0 & \frac{1}{\sqrt{2}} \\ 0 & 0 & \frac{1}{\sqrt{2}} \end{bmatrix}, \frac{1}{\sqrt{3}}\begin{bmatrix} 1 & 0 & 0 \\ 0 & 0 & \frac{1}{\sqrt{2}} \\ 0 & 1 & 0 \\ 0 & 0 & \frac{1}{\sqrt{2}} \end{bmatrix}, \frac{1}{\sqrt{3}}\begin{bmatrix} 0 & 0 & \frac{1}{\sqrt{2}} \\ 1 & 0 & 0 \\ 0 & 1 & 0 \\ 0 & 0 & \frac{1}{\sqrt{2}} \end{bmatrix}, \right.$$
$$\left. \frac{1}{\sqrt{3}}\begin{bmatrix} 1 & 0 & 0 \\ 0 & 0 & \frac{1}{\sqrt{2}} \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 1 & 0 & 0 \\ 0 & 0 & \frac{1}{\sqrt{2}} \\ 0 & 1 & 0 \end{bmatrix}, \frac{1}{\sqrt{3}}\begin{bmatrix} 0 & 0 & \frac{1}{\sqrt{2}} \\ 0 & 0 & \frac{1}{\sqrt{2}} \\ 1 & 0 & 0 \\ 0 & 1 & 0 \end{bmatrix} \right\};$$

dans laquelle la matrice de précodage dans le second livre de codes est une matrice de précodage P et P = βU, dans laquelle une matrice U est une matrice N×u, u ≤ N, β est une constante, une valeur de β permet à P et W de satisfaire $\|P\|_F = \|W\|_F$, et $\|\ \|_F$ est une norme matricielle de Frobenius ;
dans laquelle la matrice βU est une matrice de précodage dans un livre de codes

$$\left\{ \beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix} \right\};$$

$$\beta \cdot \frac{1}{2}\begin{bmatrix} 1 & 0 \\ -1 & 0 \\ 0 & 1 \\ 0 & 1 \end{bmatrix}, \beta \cdot \frac{1}{2}\begin{bmatrix} 1 & 0 \\ -1 & 0 \\ 0 & 1 \\ 0 & -1 \end{bmatrix}, \beta \cdot \frac{1}{2}\begin{bmatrix} 1 & 0 \\ -1 & 0 \\ 0 & 1 \\ 0 & j \end{bmatrix}, \beta \cdot \frac{1}{2}\begin{bmatrix} 1 & 0 \\ -1 & 0 \\ 0 & 1 \\ 0 & -j \end{bmatrix};$$

$$\beta \cdot \frac{1}{2}\begin{bmatrix} 1 & 0 \\ j & 0 \\ 0 & 1 \\ 0 & 1 \end{bmatrix}, \beta \cdot \frac{1}{2}\begin{bmatrix} 1 & 0 \\ j & 0 \\ 0 & 1 \\ 0 & -1 \end{bmatrix}, \beta \cdot \frac{1}{2}\begin{bmatrix} 1 & 0 \\ j & 0 \\ 0 & 1 \\ 0 & j \end{bmatrix}, \beta \cdot \frac{1}{2}\begin{bmatrix} 1 & 0 \\ j & 0 \\ 0 & 1 \\ 0 & -j \end{bmatrix};$$

$$\beta \cdot \frac{1}{2}\begin{bmatrix} 1 & 0 \\ -j & 0 \\ 0 & 1 \\ 0 & 1 \end{bmatrix}, \beta \cdot \frac{1}{2}\begin{bmatrix} 1 & 0 \\ -j & 0 \\ 0 & 1 \\ 0 & -1 \end{bmatrix}, \beta \cdot \frac{1}{2}\begin{bmatrix} 1 & 0 \\ -j & 0 \\ 0 & 1 \\ 0 & j \end{bmatrix}, \beta \cdot \frac{1}{2}\begin{bmatrix} 1 & 0 \\ -j & 0 \\ 0 & 1 \\ 0 & -j \end{bmatrix};$$

$$\beta \cdot \frac{1}{\sqrt{6}}\begin{bmatrix} 1 & 1 & 0 \\ 1 & -1 & 0 \\ 0 & 0 & 1 \\ 0 & 0 & -1 \end{bmatrix}, \beta \cdot \frac{1}{\sqrt{6}}\begin{bmatrix} 1 & 1 & 0 \\ -1 & 1 & 0 \\ 0 & 0 & 1 \\ 0 & 0 & 1 \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix}, \beta \cdot \frac{1}{\sqrt{6}}\begin{bmatrix} 1 & 1 & 0 \\ -j & j & 0 \\ 0 & 0 & 1 \\ 0 & 0 & j \end{bmatrix};$$

$$\beta \cdot \frac{1}{\sqrt{6}}\begin{bmatrix} 0 & 0 & 1 \\ 0 & 0 & -1 \\ 1 & 1 & 0 \\ 1 & -1 & 0 \end{bmatrix}, \beta \cdot \frac{1}{\sqrt{6}}\begin{bmatrix} 0 & 0 & 1 \\ 0 & 0 & 1 \\ 1 & 1 & 0 \\ -1 & 1 & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix}, \beta \cdot \frac{1}{\sqrt{6}}\begin{bmatrix} 0 & 0 & 1 \\ 0 & 0 & j \\ 1 & 1 & 0 \\ -j & j & 0 \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & -1 \\ 0 & 0 & 1 & -1 \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -j \end{bmatrix};$$

$$\beta \cdot \frac{1}{\sqrt{8}}\begin{bmatrix} 1 & 1 & 0 & 0 \\ 1 & -1 & 0 & 0 \\ 0 & 0 & 1 & 1 \\ 0 & 0 & j & -j \end{bmatrix}, \beta \cdot \frac{1}{\sqrt{8}}\begin{bmatrix} 1 & 1 & 0 & 0 \\ j & -j & 0 & 0 \\ 0 & 0 & 1 & 1 \\ 0 & 0 & 1 & -1 \end{bmatrix};$$

$$\beta \cdot \frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}.$$

**8.** Station de base selon la revendication 7, dans laquelle la matrice de précodage W dans le premier livre de codes est au moins l'une parmi les matrices suivantes :

$$\frac{1}{2}\begin{bmatrix} 1 \\ 1 \\ 0 \\ 0 \end{bmatrix}, \frac{1}{2}\begin{bmatrix} 0 \\ 0 \\ 1 \\ 1 \end{bmatrix}, \frac{1}{2}\begin{bmatrix} 1 \\ -1 \\ 0 \\ 0 \end{bmatrix}, \frac{1}{2}\begin{bmatrix} 0 \\ 0 \\ 1 \\ -1 \end{bmatrix}, \frac{1}{2}\begin{bmatrix} 1 \\ j \\ 0 \\ 0 \end{bmatrix}, \frac{1}{2}\begin{bmatrix} 0 \\ 0 \\ 1 \\ j \end{bmatrix}, \frac{1}{2}\begin{bmatrix} 1 \\ -j \\ 0 \\ 0 \end{bmatrix} \text{ et } \frac{1}{2}\begin{bmatrix} 0 \\ 0 \\ 1 \\ -j \end{bmatrix};$$

la matrice de précodage P dans le second livre de codes est au moins l'une parmi les matrices suivantes :

$$\beta \cdot \frac{1}{2}\begin{bmatrix} 1 & 0 \\ 1 & 0 \\ 0 & 1 \\ 0 & 1 \end{bmatrix}, \beta \cdot \frac{1}{2}\begin{bmatrix} 1 & 0 \\ 1 & 0 \\ 0 & 1 \\ 0 & -1 \end{bmatrix}, \beta \cdot \frac{1}{2}\begin{bmatrix} 1 & 0 \\ 1 & 0 \\ 0 & 1 \\ 0 & j \end{bmatrix}, \beta \cdot \frac{1}{2}\begin{bmatrix} 1 & 0 \\ 1 & 0 \\ 0 & 1 \\ 0 & -j \end{bmatrix},$$

$$\beta \cdot \frac{1}{2}\begin{bmatrix} 1 & 0 \\ -1 & 0 \\ 0 & 1 \\ 0 & 1 \end{bmatrix},\ \beta \cdot \frac{1}{2}\begin{bmatrix} 1 & 0 \\ -1 & 0 \\ 0 & 1 \\ 0 & -1 \end{bmatrix},\ \beta \cdot \frac{1}{2}\begin{bmatrix} 1 & 0 \\ -1 & 0 \\ 0 & 1 \\ 0 & j \end{bmatrix},\ \beta \cdot \frac{1}{2}\begin{bmatrix} 1 & 0 \\ -1 & 0 \\ 0 & 1 \\ 0 & -j \end{bmatrix},$$

$$\beta \cdot \frac{1}{2}\begin{bmatrix} 1 & 0 \\ j & 0 \\ 0 & 1 \\ 0 & 1 \end{bmatrix},\ \beta \cdot \frac{1}{2}\begin{bmatrix} 1 & 0 \\ j & 0 \\ 0 & 1 \\ 0 & -1 \end{bmatrix},\ \beta \cdot \frac{1}{2}\begin{bmatrix} 1 & 0 \\ j & 0 \\ 0 & 1 \\ 0 & j \end{bmatrix},\ \beta \cdot \frac{1}{2}\begin{bmatrix} 1 & 0 \\ j & 0 \\ 0 & 1 \\ 0 & -j \end{bmatrix},$$

$$\beta \cdot \frac{1}{2}\begin{bmatrix} 1 & 0 \\ -j & 0 \\ 0 & 1 \\ 0 & 1 \end{bmatrix},\ \beta \cdot \frac{1}{2}\begin{bmatrix} 1 & 0 \\ -j & 0 \\ 0 & 1 \\ 0 & -1 \end{bmatrix},\ \beta \cdot \frac{1}{2}\begin{bmatrix} 1 & 0 \\ -j & 0 \\ 0 & 1 \\ 0 & j \end{bmatrix},\ \text{et}\ \ \beta \cdot \frac{1}{2}\begin{bmatrix} 1 & 0 \\ -j & 0 \\ 0 & 1 \\ 0 & -j \end{bmatrix}$$

101

Receive a reference signal sent by a base station

102

Select, based on the reference signal, a precoding matrix from a codebook, where the codebook includes a precoding matrix W and W=αSV, where a matrix V is an N×v matrix, N is the number of reference signal ports, v ≤ N, S is a row selection matrix used to select one or more row vectors from the matrix V, and α is a constant

103

Send CSI to the base station, where the CSI includes a precoding matrix indicator PMI and the PMI is corresponding to the selected precoding matrix

FIG. 1

201

Send a reference signal to a user equipment UE

202

Receive CSI sent by the UE, where the CSI includes a precoding matrix indicator PMI, the PMI is corresponding to a precoding matrix, the precoding matrix is selected by the UE based on the reference signal from a codebook, and the codebook includes a precoding matrix W and W=αSV, where a matrix V is an N×v matrix, N is the number of reference signal ports, v ≤ N, S is a row selection matrix used to select one or more row vectors from the matrix V, and α is a constant

FIG. 2

301

Receive CSI process configuration information sent by a base station, where the CSI process configuration information includes at least one CSI process, and each CSI process is associated with one reference signal resource and one or more interference measurement resources

302

Based on the reference signal resource and one or more interference measurement resources associated with each CSI process, select a precoding matrix from a codebook, where the codebook includes a precoding matrix W and W=αSV, where a matrix V is an N×v matrix, N is the number of reference signal ports, $v \leq N$, S is a row selection matrix used to select one or multiple row vectors from the matrix V, and α is a constant

303

Send CSI corresponding to each CSI process to the base station, where the CSI includes a precoding matrix indicator PMI and the PMI is corresponding to the selected precoding matrix

FIG. 3

401

Send CSI process configuration information to a user equipment UE, where the CSI process configuration information includes at least one CSI process, and each CSI process is associated with one reference signal resource and one or more interference measurement resources

402

Receive CSI that sent by the UE and is corresponding to each CSI process, where the CSI includes a precoding matrix indicator PMI, the PMI is corresponding to a precoding matrix, the precoding matrix is selected by the UE from a codebook based on the reference signal and one or more interference measurement resources associated with each CSI process, and the codebook includes a precoding matrix W and W=αSV, where matrix V is an N×v matrix, N is the number of reference signal ports, $v \leq N$, S is a row selection matrix used to select one or more row vectors from the matrix V, and α is a constant

FIG. 4

User equipment

Receiving unit 501

Selection unit 503

Storage unit 502

Sending unit 504

FIG. 5

Base station

Sending unit 601

Receiving unit 602

FIG. 6

```
┌─────────────────────────────────────────────────────────────────┐
│                      User equipment                               │
│  ┌──────────────────────────────────┐                             │
│  │      Receiving unit 701           │                            │
│  └──────────────────────────────────┘                             │
│                  │                                                 │
│  ┌──────────────────────────────────┐   ┌──────────────────────┐ │
│  │      Selection unit 703           │───│   Storage unit 702   │ │
│  └──────────────────────────────────┘   └──────────────────────┘ │
│                  │                                                 │
│  ┌──────────────────────────────────┐                             │
│  │       Sending unit 704            │                            │
│  └──────────────────────────────────┘                             │
└─────────────────────────────────────────────────────────────────┘
```

FIG. 7

```
┌───────────────────────────────────────────┐
│                Base station                 │
│   ┌─────────────────────────────────────┐   │
│   │        Sending unit 801             │   │
│   └─────────────────────────────────────┘   │
│                    │                         │
│   ┌─────────────────────────────────────┐   │
│   │        Receiving unit 802           │   │
│   └─────────────────────────────────────┘   │
└───────────────────────────────────────────┘
```

FIG. 8

User equipment

Receiver 901

Processor 903

Memory 902

Sender 904

FIG. 9

Base station

Sender 1001

Receiver 1002

FIG. 10

User equipment

Receiver 1101

Processor 1103

Memory 1102

Sender 1104

FIG. 11

Base station

Sender 1201

Receiver 1202

FIG. 12

```
                                                              ┐310
┌─────────────────────────────────────────────────┐
│      Receive a reference signal sent by a base station      │
└─────────────────────────────────────────────────┘
                          │
                          ▼
                                                              ┐1320
┌─────────────────────────────────────────────────┐
│   Select a precoding matrix W from a codebook based on      │
│                  the reference signal                        │
└─────────────────────────────────────────────────┘
                          │
                          ▼
                                                              ┐1330
┌─────────────────────────────────────────────────┐
│   Send CSI to the base station, where the CSI includes a    │
│     precoding matrix indicator PMI and the PMI is           │
│      corresponding to the selected precoding matrix         │
└─────────────────────────────────────────────────┘
```

FIG. 13

```
                                                              ┐1410
┌─────────────────────────────────────────────────┐
│              Send a reference signal to a UE                 │
└─────────────────────────────────────────────────┘
                          │
                          ▼
                                                              ┐1420
┌─────────────────────────────────────────────────┐
│     Receive CSI sent by the UE, where the CSI includes a    │
│              precoding matrix indicator PMI                  │
└─────────────────────────────────────────────────┘
                          │
                          ▼
                                                              ┐1430
┌─────────────────────────────────────────────────┐
│  Select a precoding matrix W from a codebook according to the│
│    PMI, where the precoding matrix W is corresponding to the │
│                           PMI                                │
└─────────────────────────────────────────────────┘
                          │
                          ▼
                                                              ┐1440
┌─────────────────────────────────────────────────┐
│  Send information to the UE according to the precoding matrix │
│                           W                                  │
└─────────────────────────────────────────────────┘
```

FIG 14

User equipment

Receiving unit 1510

Selection unit 1520 — Memory 1530

Sending unit 1540

FIG. 15

Base station

Sending unit 1610

Receiving unit 1620

Selection unit 1630 — Storage unit 1640

FIG. 16

User equipment

Receiver 1710

Processor 1720

Memory 1730

Sender 1740

FIG. 17

Base station

Sender 1810

Receiver 1820

Processor 1830

Memory 1840

FIG. 18

**REFERENCES CITED IN THE DESCRIPTION**

**Patent documents cited in the description**

- WO 2011111975 A2
- CN 102804662 A
- CN 102291212 A